# EUROPÄISCHE PATENTSCHRIFT

(11) **EP 0 735 107 B1**
(45) Veröffentlichungstag und Bekanntmachung des Hinweises auf die Patenterteilung: **30.08.2000**
(21) Anmeldenummer: 96109923.1
(22) Anmeldetag: 17.09.1991
(51) Int. Cl.: C09B 62/002, D06P 1/38, C09B 62/04, C09B 67/22

(54) **Faserreaktive Farbstoffe und deren Verwendung**
Reactive dyes and their use
Colorants réactifs et leur utilisation

(30) Priorität: 25.09.1990 CH 307790
(43) Veröffentlichungstag der Anmeldung: 02.10.1996
(62) Teilanmeldung aus: 91810734.3
(73) Patentinhaber: Ciba Specialty Chemicals Holding Inc., 4057 Basel (CH)
(72) Erfinder: Tzikas, Athanassios, Dr., 4133 Pratteln (CH)

(56) Entgegenhaltungen:
- EP-A- 0 387 579
- DE-A- 2 001 960
- FR-A- 2 173 121
- FR-A- 2 297 233
- FR-A- 2 304 651
- GB-A- 1 461 125
- GB-A- 2 064 571
- GB-A- 2 085 908
- GB-A- 2 228 738
- JP-A- 53 027 628

## Beschreibung

Die vorliegende Erfindung betrifft faserreaktive Farbstoffe, die zum Färben von cellulosehaltigen Fasermaterialien aus wässrigem Bad sowie zum Bedrucken cellulosehaltiger Fasermaterialien geeignet sind, die sich für Ausziehfärbeverfahren und Kontinuefärbeverfahren eignen, und die nass- und lichtechte Färbungen ergeben.

Gegenstand der Erfindung sind Farbstoffe der Formel 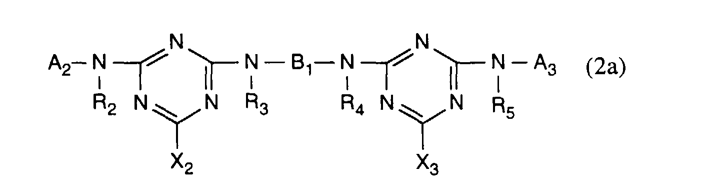
worin A₂ und A₃ unabhängig voneinander je der Rest eines Anthrachinon-, Phthalocyanin-, Formazan- oder Dioxazin-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

Gegenstand der Erfindung sind ferner Farbstoffe der Formel (2a),
worin A₂ und A₃ unabhängig voneinander je der Rest eines Polyazo- oder Metallkomplexazo-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

Einen weiteren Gegenstand der Erfindung stellen Farbstoffe der Formel (2a) dar, worin A₂ und A₃ unabhängig voneinander je der Rest eines Monoazo-Chromophors der Formel 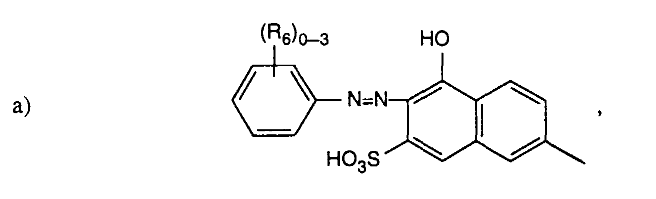 worin R₆ für 0 bis 3 Substituenten aus der Gruppe C₁-C₄-Alkyl, C₁-C₄-Alkoxy, Halogen, Carboxy und Sulfo steht, 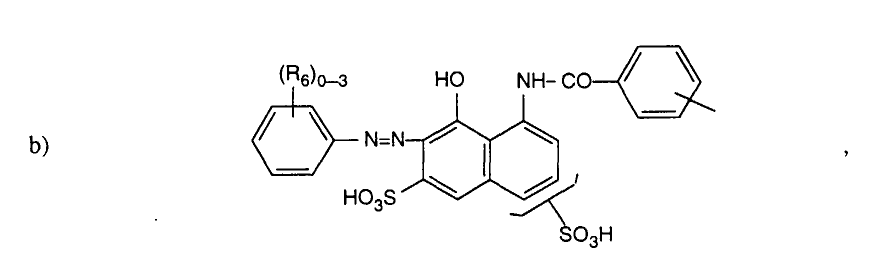 worin R₆ für 0 bis 3 Substituenten aus der Gruppe C₁-C₄-Alkyl, C₁-C₄-Alkoxy, Halogen, Carboxy und Sulfo steht, 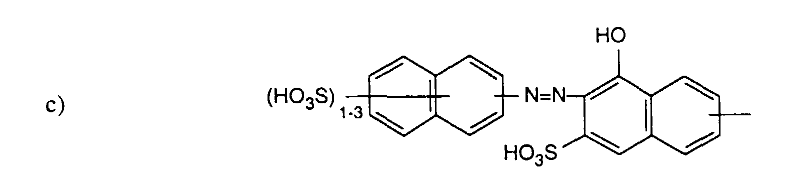 oder 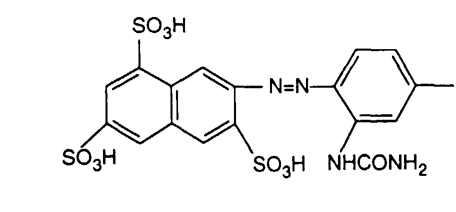 oder 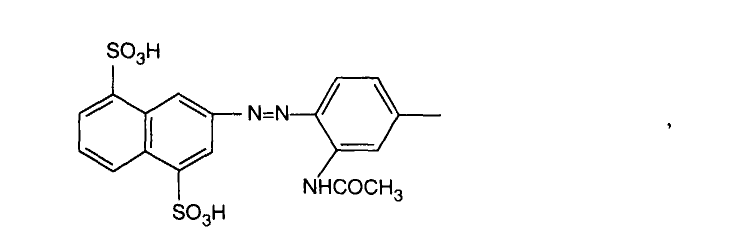 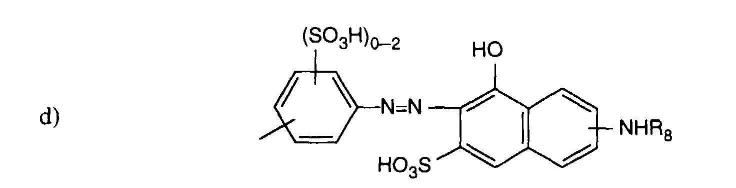 oder 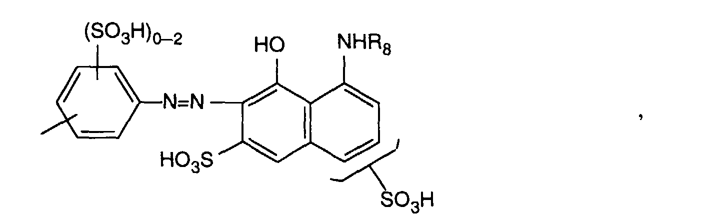 worin R₈ C₁-C₄-Alkanoyl oder Benzoyl ist, 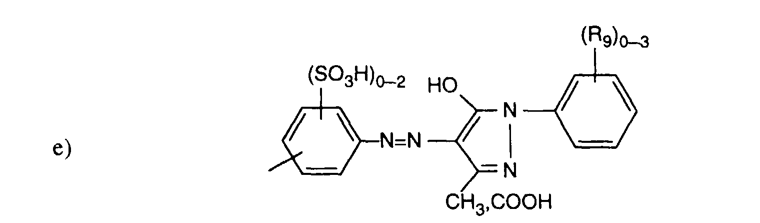 oder 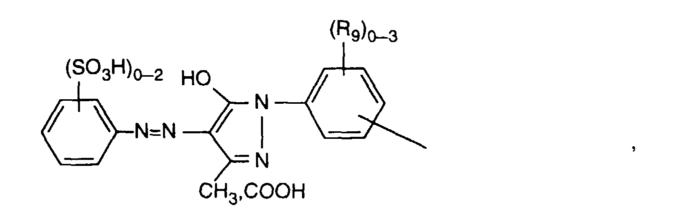 worin R₉ für 0 bis 3 Substituenten aus der Gruppe C₁-C₄-Alkyl, C₁-C₄-Alkoxy, Halogen, Carboxy und Sulfo steht, 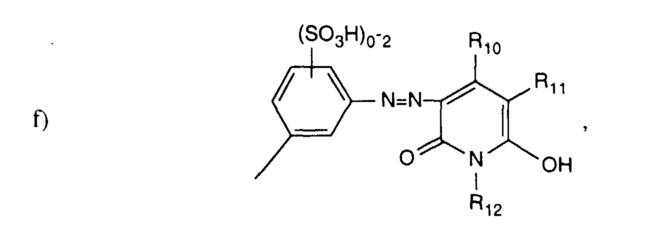 worin R₁₂ und R₁₀ unabhängig voneinander Wasserstoff, C₁-C₄-Alkyl oder Phenyl und R₁₁ Wasserstoff, Cyano, Carbamoyl oder Sulfomethyl sind, 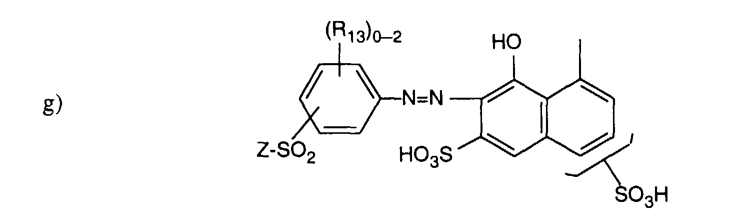 worin R₁₃ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl ist, oder 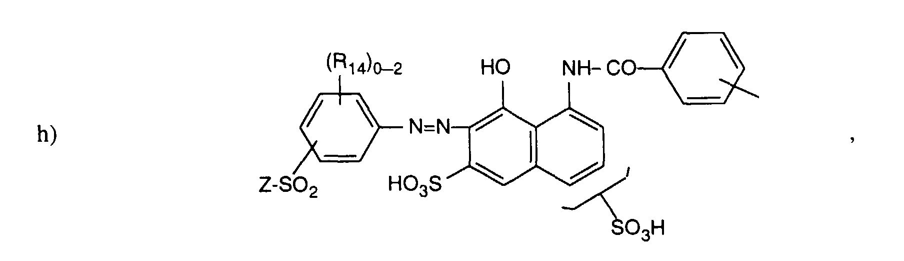
worin R₁₄ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl bedeutet;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

Die in der GB-A-2 085 908 offenbarten Farbstoffe unterscheiden sich von den erfindungsgemässen Farbstoffen durch die Hydroxygruppe im Brückenglied sowie durch die Sulfogruppe in der Kupplungskomponente des Azochromophors.

Bei den in der DE-A-2 001 960, GB-A-2 064 571, GB-A-2 228 738 und FR-A-2 173 121 offenbarten Farbstoffen handelt es sich um Chlortriazinfarbstoffe. In der GB-A-2 064 571 wird ferner ein Farbstoff offenbart, der sich hinsichtlich des Brückenglieds vom Erfindungsgegenstand unterscheidet.

In der GB-A-1 461 125 werden Farbstoffe offenbart, die sich von den erfinderischen Farbstoffen durch die Kupplungskomponente des Azochromophors unterscheiden.

Der in der FR-A-2 304 651 offenbarte Farbstoff unterscheidet sich von den erfindungsgemässen Farbstoffen durch die dem Azochromophor zugrundeliegende Diazokomponente.

Der Rest A₂ bzw. A₃ als Anthrachinon-, Phthalocyanin-, Formazan-, Dioxazin-, Polyazooder Metallkomplexazo-Chromophor kann an seinem Grundgerüst die bei organischen Farbstoffen üblichen Substituenten gebunden enthalten.

Als Beispiele für weitere Substituenten im Rest A₂ bzw. A₃ seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere Alkanoylaminogruppen, wie Acetylamino, Propionylamino oder Benzoylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo sowie faserreaktive Reste. Vorzugsweise enthält der Rest A₂ bzw. A₃ eine oder mehrere Sulfonsäuregruppen. Reaktivfarbstoffe der Formel (2a), worin A₂ bzw. A₃ der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest R₂, R₃, R₄ bzw. R₅ ist, falls es sich um einen Alkylrest handelt, geradkettig oder verzweigt; er kann weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R₂, R₃, R₄ und R₅ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind R₂, R₃, R₄ und R₅ unabhängig voneinander Wasserstoff, Methyl oder Aethyl.

Das Brückenglied B₁ schliesst auch cycloaliphatische Reste ein. So kann B₁ ein geradkettiger oder verzweigter C₁-C₁₀-Alkylenrest sein; insbesondere kommt ein Alkylenrest mit 2 bis 6 Kohlenstoffatomen in Betracht, z.B. Aethylen, Propylen, Butylen, Hexylen oder Cyclohexylen. Der Rest B₁ als Cyclohexylen enthält gegebenenfalls weitere Substituenten wie Alkylgruppen mit 1 bis 4 Kohlenstoffatomen, wie Methyl, Aethyl und Propyl. Vorzugsweise ist B₁ C₂₋₆-Alkylen. Bevorzugt ist der Aethylenrest.

Ferner sind in Betracht zu ziehen, Reaktivfarbstoffe der Formel (2a), worin der Rest A₂ bzw. A₃ als Anthrachinon-, Phthalocyanin-, Formazan-, Dioxazin-, Polyazo- oder Metallkomplexazo-Chromophor noch einen weiteren Reaktivrest einschliesst. Die zusätzlichen, in A₂ bzw. A₃ eingeschlossenen Reaktivreste können über Aminogruppen oder in anderer Weise, z.B. durch eine direkte Bindung an A₂ bzw. A₃ gebunden sein.

Ein gegebenenfalls in A₂ bzw. A₃ eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl-oder Halogenpropionylrest.

Für die in A₂ und A₃ eingeschlossenen zusätzlichen Reaktivreste kommen insbesondere heterocyclische Reste in Betracht, welche mindestens einen abspaltbaren Substituenten an einen heterocyclischen Rest gebunden enthalten, unter anderem solche, die mindestens einen reaktiven Substituenten an einen 5- oder 6-gliedrigen heterocyclischen Ring gebunden enthalten, wie an einen Monazin-, Diazin-, Triazin- z.B. Pyridin-, Pyrimidin-, Pridazin-, Pyrazin-, Thiazin-, Oxazin oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen: Halogen (Cl, Br oder F), Ammonium einschliesslich Hydrazinium, Sulfonium, Sulfonyl, Azido-(N₃), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethyl-amino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlor-triazinyl-6-, wie 2-Methoxy- oder Ethoxy-4-chlortriazinyl-6-, 2-(Phenylsulfonyl-methoxy)-4-chlortriazinyl-6-, 2-Aryloxy und substituieres Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlor-triazinyl-6-, 2,4-Difluor-triazinyl-6-, Monofluortriazinylreste, die durch Amino-, Alkylamino-, Aralkylamino-, Acylaminogruppen substituiert sind, wobei Alkyl, insbesondere gegebenenfalls substituiertes C₁-C₄-Alkyl, Aralkyl, insbesondere gegebenenfalls substituiertes Phenyl-, C₁-C₄-Alkyl und Aryl, insbesondere gegebenenfalls durch Sulfo-, Alkyl-, insbesondere C₁-C₄-Alkyl-, Alkoxy, insbesondere C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethyl-amino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluortriazinyl-6, 2-β-Hydroxyethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethyl-amino-4-fluor-triazinyl-6, 2-Benzolamino-4-fluor-triazinyl-6, 2-β-Phenylethylamino-4-fluor-triazinyl-6, 2-Benzyl-methylamino-4-fluor-triazinyl-6, 2-(2'-, 3'- oder 4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-, Di- oder Trihalogen-pyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2- oder 3-Monochlorchinoxalin-6-sulfonyl-, 2,3-Dichlorchinoxalin-6-carbonyl-, 2,3-Dichlor-chinoxalin-6-sulfonyl-, 1,4-Dichlorphthalazin-6-sulfonyl- oder -6-carbonyl-, 2,4-Dichlor-chinazolin-7- oder -6-sulfonyl- oder -carbonyl-, 2- oder 3- oder 4-(4',5'-Dichlorpyridazin-6'-yl-1')-phenylsulfonyl- oder -carbonyl-, β-(4',5'-Dichlorpyridazon-6'-yl-1')-ethyl-carbonyl, N-Methyl-N-(2,4-dichlortriazinyl-6)-carbamyl-, N-Methyl-N-(2-methyl-amino-4-chlortriazinyl-6)-carbamyl-, N-Methyl-N-(2-dimethylamino-4-chlortriazinyl-6)-carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlor-chinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methylpyrimidinyl-4, 6-Fluor-5-chlor-2-methyl-pyrimidinyl-4, 5,6-Difluor-pyrimidinyl-4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitro-pyrimidinyl-4, 6-Fluor-5-methyl-sulfonyl-pyrimidinyl-4, 6-Fluor-5-phenylsulfonyl-pyrimidinyl-4, sulfonylgruppenhaltige Triazinreste, wie 2,4-Bis-(phenylsulfonyl)-triazinyl-6, 2-(3'-Carboxyphenyl)-sulfonyl-4-chlortriazinyl-6, 2-(3'-Sulfophenyl)-sulfonyl-4-chlortriazinyl-6, 2,4-Bis-(3'-carboxyphenylsulfonyl)-triazinyl-6; sulfonylgruppenhaltige Pyrimidinringen, wie 2-Carboxymethylsulfonyl-pyrimidinyl-4-, 2-Methylsulfonyl-6-methylpyrimidinyl-4, 2-Methylsulfonyl-6-ethyl- pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonylpyrimidinyl-4, 2-Phenyl-sulfonyl-pyrimidinyl-4-, 2-Trichlor-methylsulfonyl-6-methyl-pyrimidinyl-4-, 2-methylsulfonyl-5-chlor-6-methyl-pyrimidinyl-4-, 2-Methylsulfonyl-5-brom-6-methyl-pyrimidinyl-4-, 2-Methyl-sulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethylpyridinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfopyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethyl-sulfonyl-5-chlor-6-methyl-pyrimidinyl-4-, 2-Methylsulfonyl-6-chlorpyrimidin-4- und -5-carbonyl, 2,6-Bis(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppen-haltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6, 2-(2-Isopropyliden-l,l-dimethyl)-hydrazinium-4-phenylamino- oder -4-(o-, m- oder p-sulfophenyl)-amino-triazinyl-6-, 2-N-Aminopyrrolidinium- oder 2-Amino-piperidinium-4-phenylamino- oder -4-(o-, m- oder p-sulfophenyl)-aminotriazinyl-6-, 2-N-Aminopyrrolidinium- oder 2-N-Amino-piperidinium-4-phenylamino-oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder 4-(o-, m-oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethyl-amino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5-oder -6-sulfonyl-, 2-Arylsulfonyl- oder -Alkylsulfonylbenzthiazol-5- oder -6-carbonyl-oder -5- oder -6-sulfonyl-, wie 2-Methyl-sulfonyl- oder 2-Ethoxysulfonylbenzthiazol-5-oder 6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxazol-5- oder -6-carbonyl- oder -sulfonyl-, 2-Chlor-benzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyan-phenyl, 2,4-Dichlor-5-methylsulfonyl-pyrimidinyl-6,2,4-Trichlor-5-ethylsulfonyl-pyrimidinyl-6, 2-Fluor-5-methylsulfonyl-6'-(2'-sulfophenylamino)-pyrimidinyl-4, 2,5-Dichlor-6-methylsulfonyl-pyrimidinyl-4.

Desweiteren sind Reaktivgruppen der aliphatischen Reihe zu nennen, wie Acrylolyl-, Mono-, Di- oder Trichloracryloyl-, wie -CO-CH=CH-Cl, -CO-CCl=CH₂, -CO-CCl=CH-CH₃, ferner -CO-CCl=CH-COOH, -CO-CH=CCl-COOH, β-Chlor-propionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-1)-aryloxy-, α- oder β-Bromacrylolyl-, α-oder β-Alkyl- oder Arylsulfoacrylolyl-Gruppe, wie α- oder β-Methylsulfonylacrylolyl, Chloracetyl.

Bevorzugte Reaktivfarbstoffe der Formel (2a) sind dadurch gekennzeichnet, dass
a) A₂ und A₃ unabhängig voneinander faserreaktive Reste enthalten,
b) 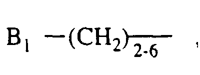 gegebenenfalls durch C₁-C₄-Alkyl substituiertes Cyclohexylen ist, insbesondere is 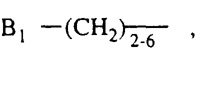 vorzugsweise Aethylen,
c) R₂, R₃, R₄ und R₅ unabhängig voneinander Wasserstoff, Methyl oder Aethyl sind. Insbesondere bedeuten R₃ und R₄ Wasserstoff,
d) A₂ und A₃ unabhängig voneinander Monoazo- oder Disazofarbstoffreste, Metallkomplexazofarbstoffreste oder Formazanfarbstoffreste sind,
e) die Reste A₂ und A₃ identisch sind.

Besonders wichtig sind Farbstoffe der Formel (2a), worin A₂ und A₃ je ein Rest der folgenden Formeln (3), (5), (6), (9) bis (15) ist: 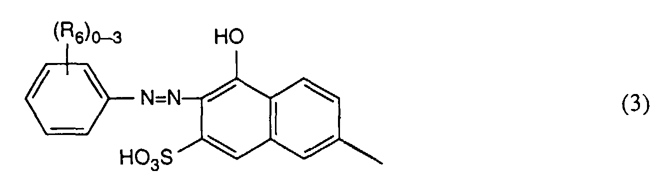 worin R₆ für 0 bis 3 Substituenten aus der Gruppe C₁-C₄-Alkyl, C₁-C₄-Alkoxy, Halogen, Carboxy und Sulfo steht. 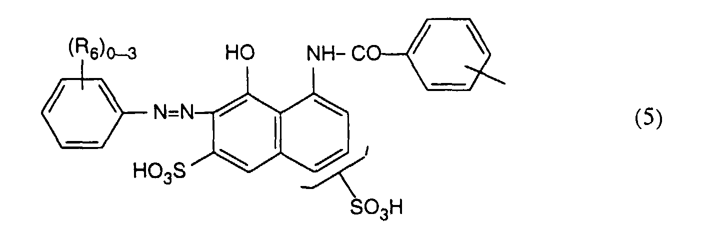 worin R₆ für 0 bis 3 Substituenten aus der Gruppe C₁-C₄-Alkyl, C₁-C₄-Alkoxy, Halogen, Carboxy und Sulfo steht. 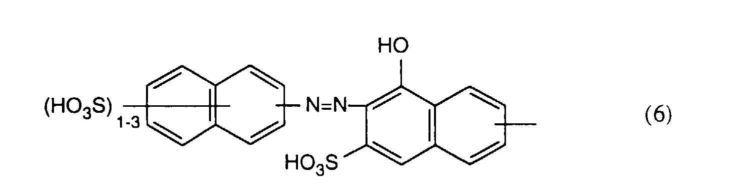 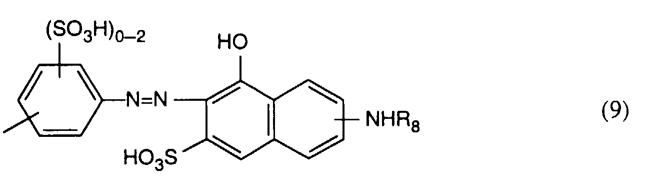 worin R₈ C₁-C₄-Alkanoyl oder Benzoyl ist. 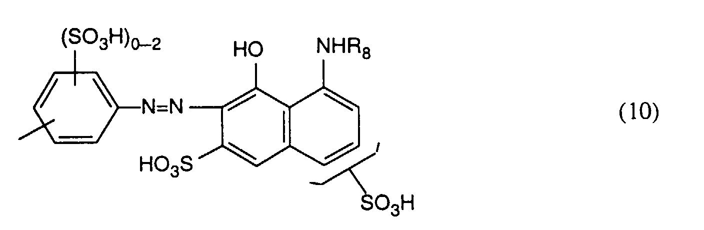 worin R₈ C₁-C₄-Alkanoyl oder Benzoyl ist. 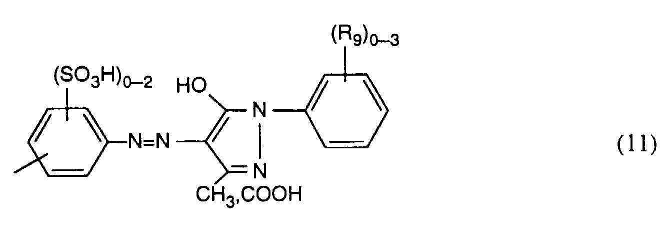 worin R₉ für 0 bis 3 Substituenten aus der Gruppe C₁-C₄-Alkyl, C₁-C₄-Alkoxy, Halogen, Carboxy und Sulfo steht. 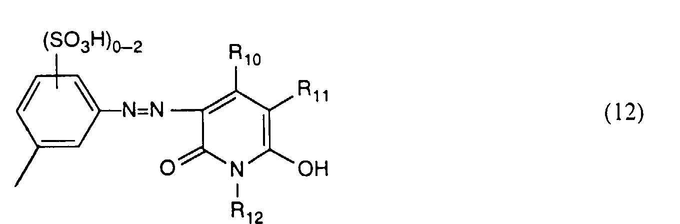 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 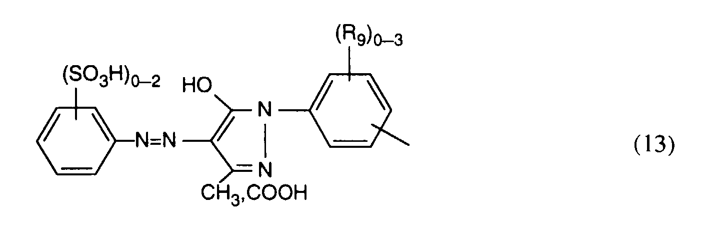 worin R₉ für 0 bis 3 Substituenten aus der Gruppe C₁-C₄-Alkyl, C₁-C₄-Alkoxy, Halogen, Carboxy und Sulfo steht. 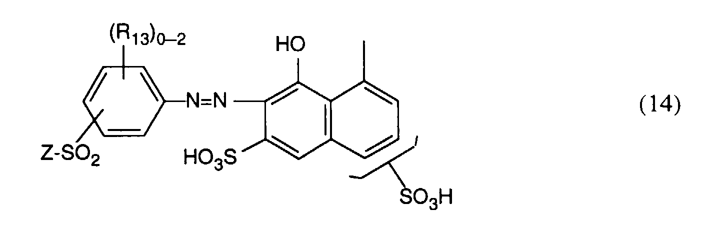 worin R₁₃ für 0 bis 2 Substituenten aus der Gruppe C₁-C₄-Alkyl, C₁-C₄-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist. 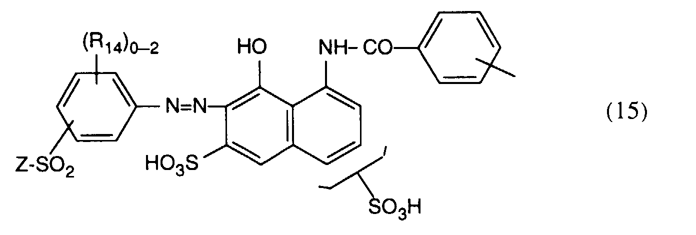 worin R₁₄ für 0 bis 2 Substituenten aus der Gruppe C₁-C₄-Alkyl, C₁-C₄-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist.

Besonders wichtig sind ausserdem Schwermetallkomplexe von Reaktivfarbstoffen; als komplexbildende Schwermetalle kommen vor allem Kupfer, Nickel, Kobalt oder Chrom in Betracht. Bevorzugt sind Kupferkomplexazofarbstoffe, insbesondere solche der Formeln (3), (4) 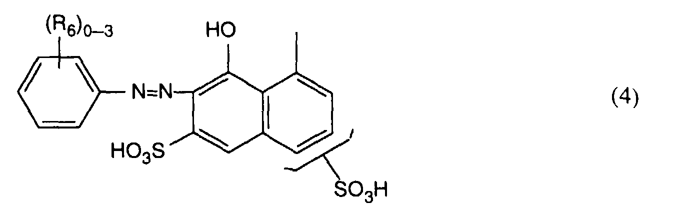 worin R₆ für 0 bis 3 Substituenten aus der Gruppe C₁-C₄-Alkyl, C₁-C₄-Alkoxy, Halogen, Carboxy und Sulfo steht,
(5), (6), (7), (8) 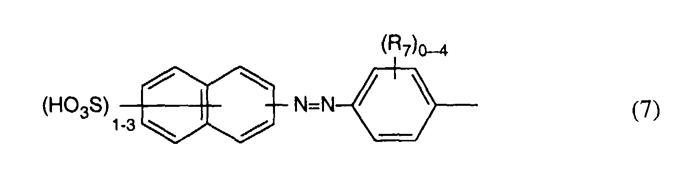 worin R₇ für 0 bis 4 Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo unabhängig voneinander, steht, 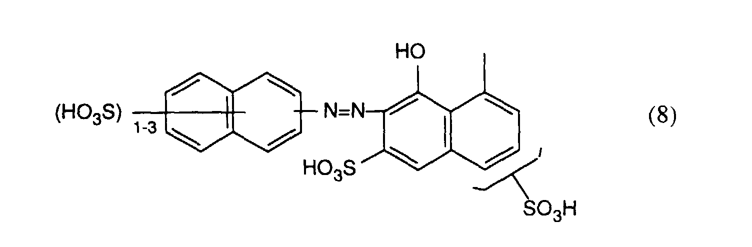 und (9) bis (13), die das Kupferatom über ein Sauerstoffatom je in ortho-Position zur Azobrücke gebunden enthalten.

Beispiele für Azofarbstoffe, die sich als Metallkomplexe eignen, sind:

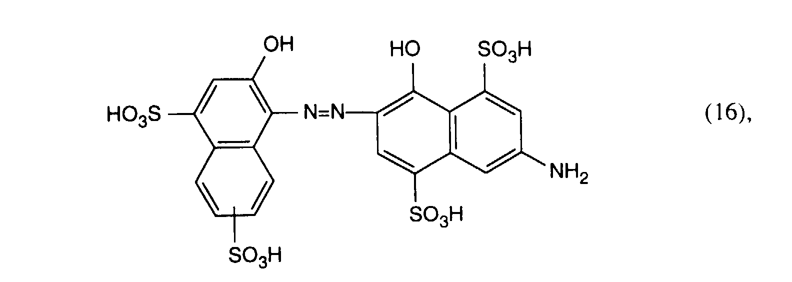

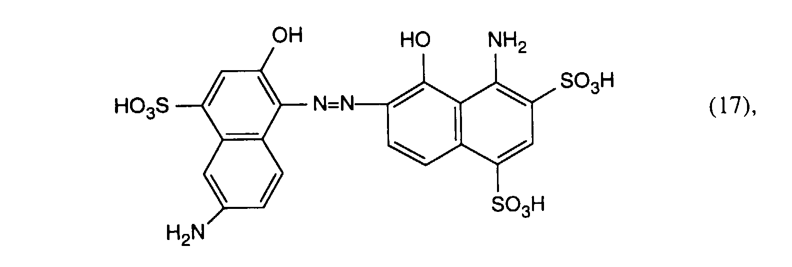

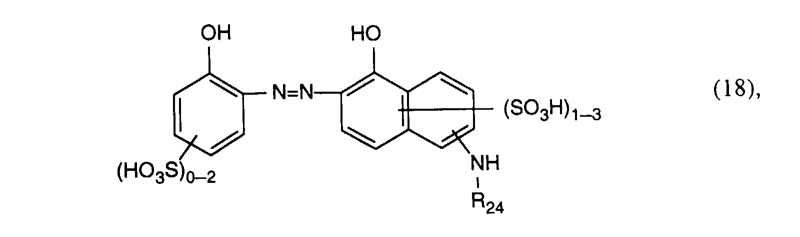

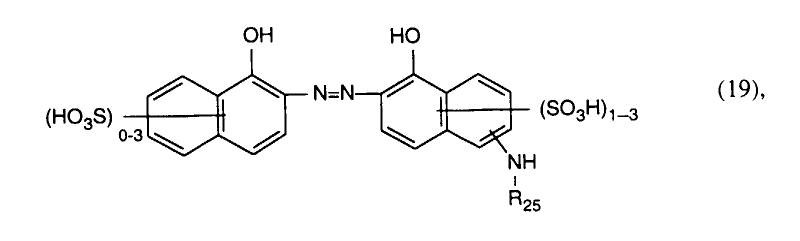

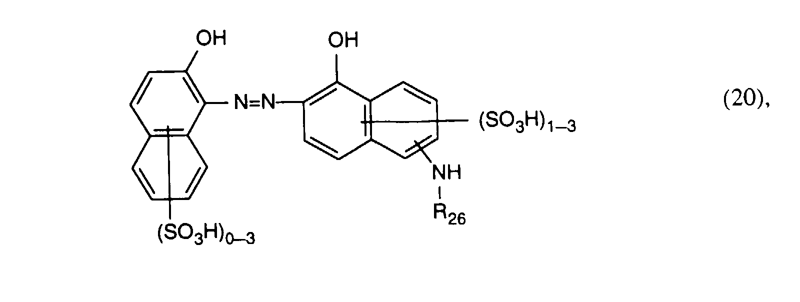

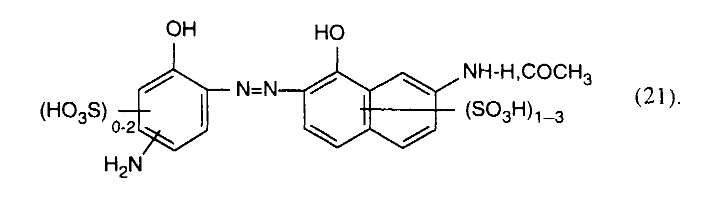

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B.

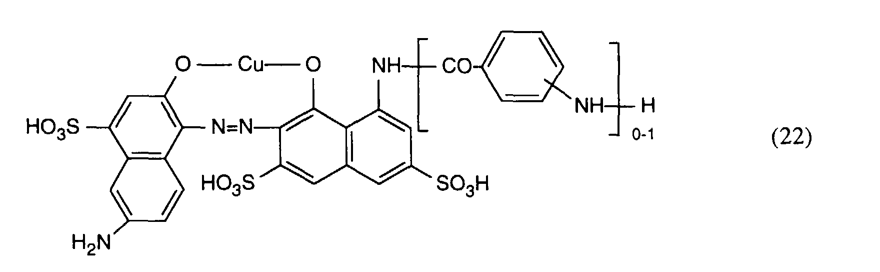

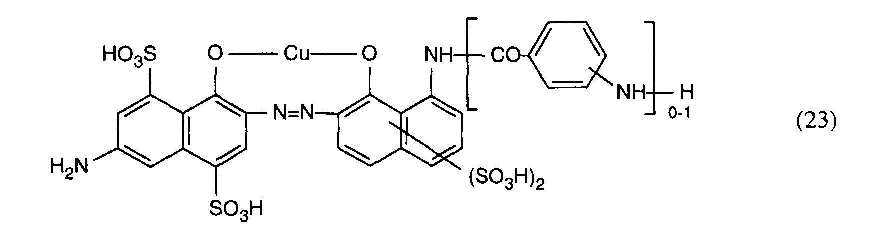

In den oben aufgeführten Formeln bedeuten die Reste R₂₄ bis R₂₆ Wasserstoff oder C₁-C₄-Alkyl. Vorzugsweise bedeuten die Reste R₂₄ bis R₂₆ Wasserstoff, Methyl oder Aethyl. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Die Reaktivfarbstoffe der Formel (2a) können hergestellt werden, indem man ein oder zwei Aequivalente eines organischen Farbstoff der Formel 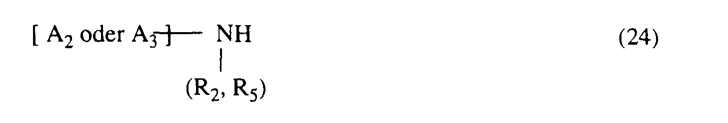 oder ein Farbstoffvorprodukt, mindestens ein Aequivalent Fluortriazin und mindestens ein Aequivalent eines Diamins der Formel 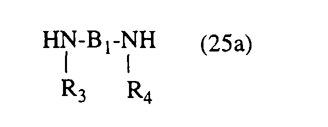 in beliebiger Reihenfolge miteinander umsetzt, wobei A₂, A₃, R₂, R₃, R₄, R₅ und B₁ die unter der Formel (2a) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (25a) dem Triazin und dem Farbstoff der Formel (24) oder einem Vorprodukt zweckmässigerweise zuerst ausgeführt wird, die des Triazins mit der Verbindung der Formel (25a) oder mit dem Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Im folgenden sollen mögliche Ausgangsstoffe, die zur Herstellung der Reaktivfarbstoffe der Formel (2a) verwendet werden können, einzeln genannt werden.

### Farbstoffe der Formel (24)

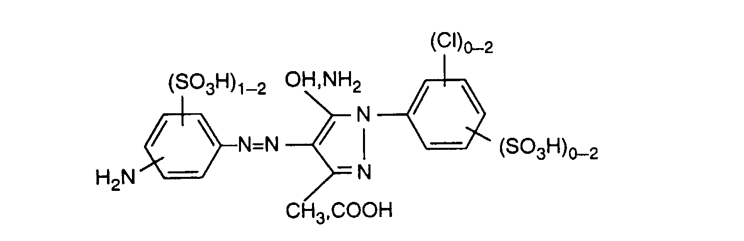

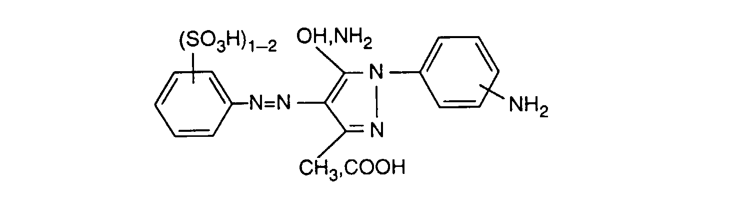

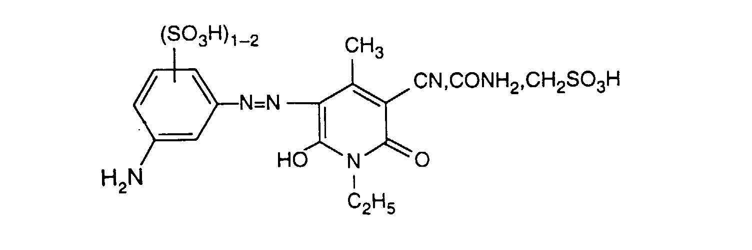

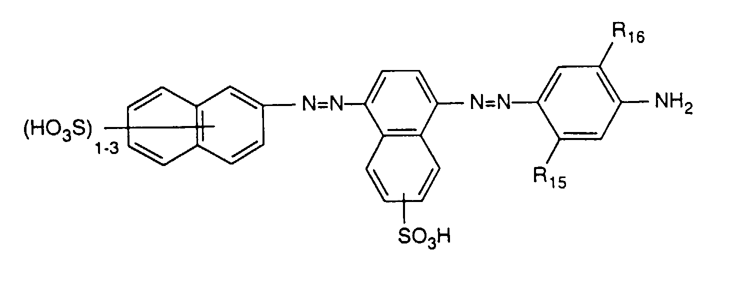

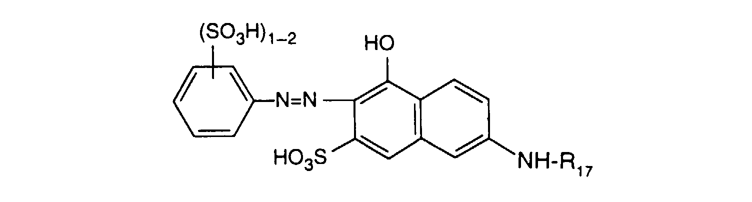

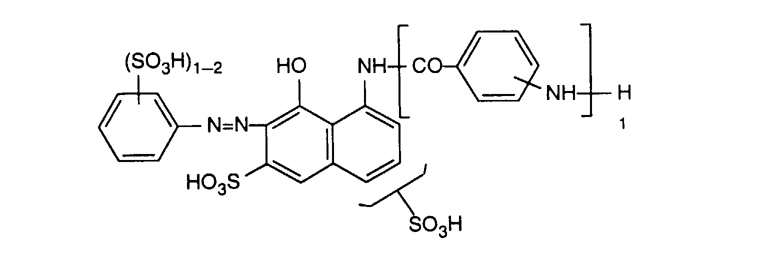

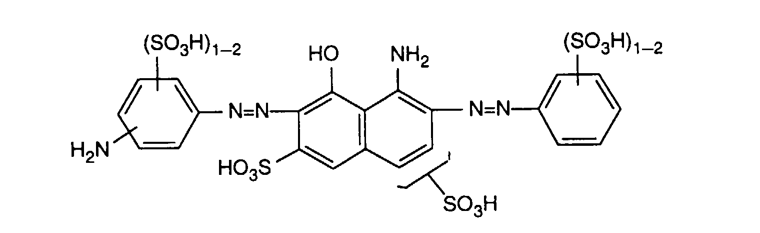

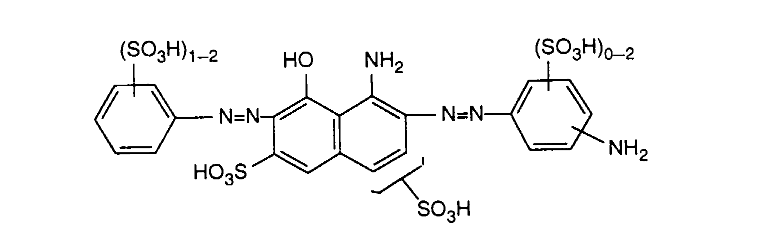

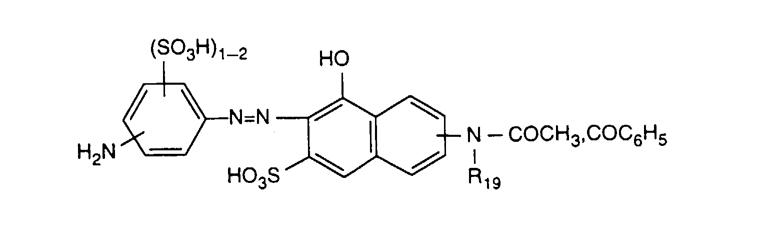

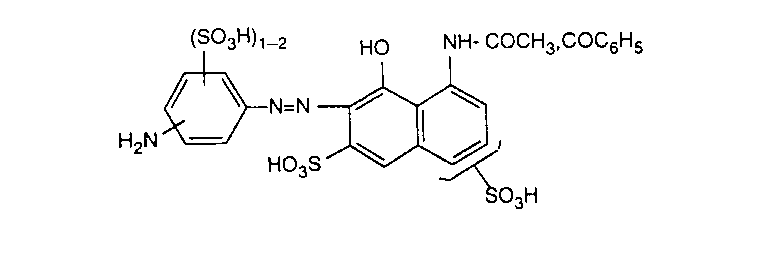

### Metallkomplexe von Farbstoffen der Formeln:

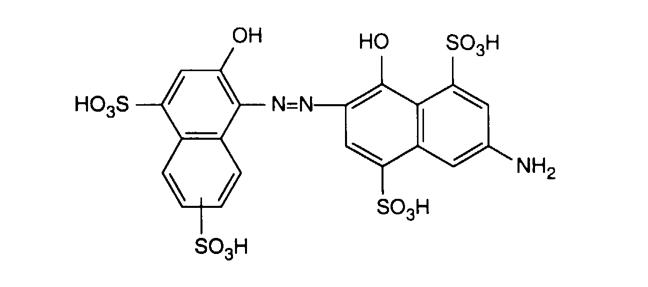

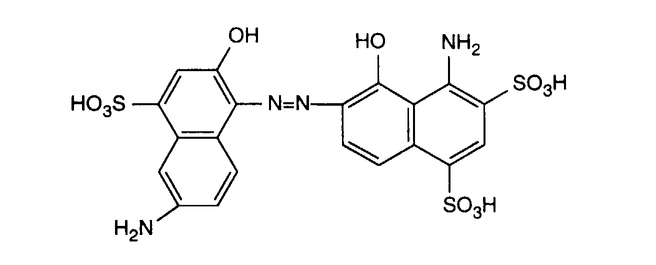

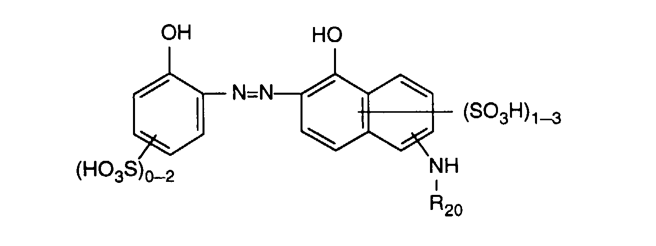

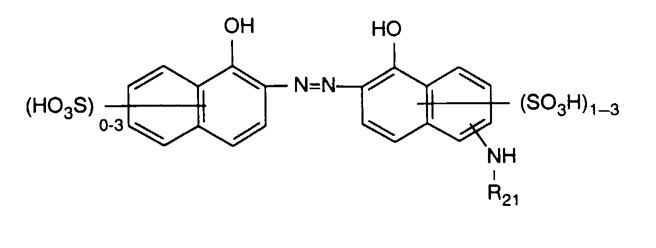

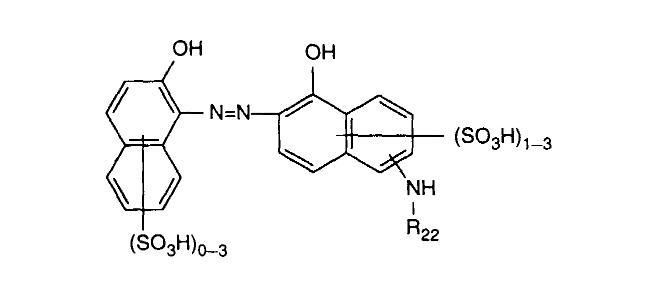

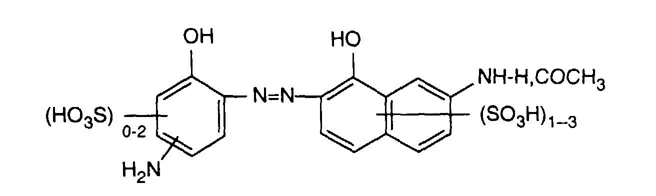

Als Metallatome sind Cu (1:1 -Komplex) oder Cr und Co (1:2-Komplex) bevorzugt. Cr-und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

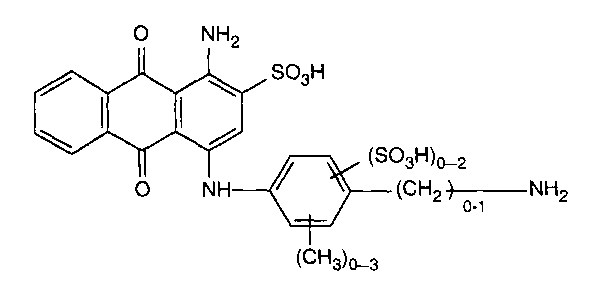

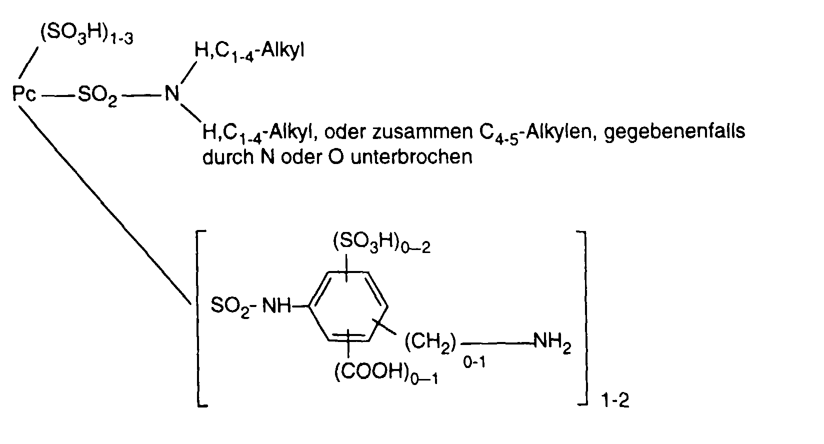

In dieser Formel steht Pc für den Cu- oder Ni-Phthalocyaninrest, die Gesamtzahl der Substituenten am Pc-Gerüst ist 4.

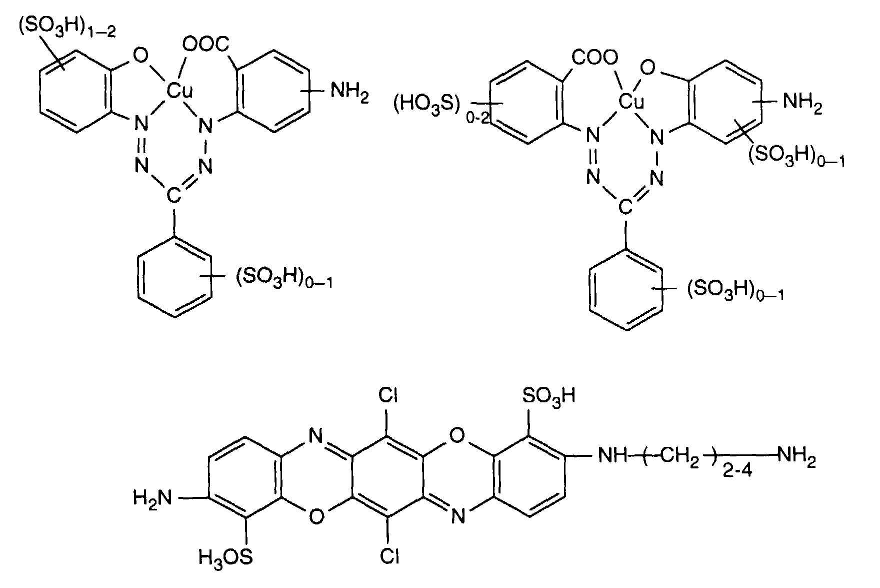

In den oben aufgeführten Formeln bedeuten die Reste R₁₇ bis R₂₂ Wasserstoff oder C₁-C₄-Alkyl, und die Reste R₁₅ und R₁₆ Wasserstoff, C₁-C₄-Alkyl, C₁-C₄-Alkoxy, C₁-C₄-Alkanoylamino, Ureido oder Halogen, wobei die Reste R₁₅ und R₁₆, die zu ein und derselben Formel gehören, voneinander unabhängig sind. Vorzugsweise bedeuten die Reste R₁₇ bis R₂₂ Wasserstoff, Methyl oder Aethyl, und die Reste R₁₅ und R₁₆ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

### Diamine der Formel (25a)

### 1,2-Diaminoethan, 1,3-Diaminopropan.

Gegenstand der Erfindung ist ferner ein Verfahren zum Färben und Bedrucken von cellulosehaltigen Fasermaterialien mit Farbstoffen der Formel (2a). Als Fasermaterialien kommen beispielsweise die natürlichen Cellulosefasern, wie Baumwolle, Leinen und Hanf, sowie Zellstoff und regenerierte Cellulose in Betracht. Die Farbstoffmischungen sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Die Farbstoffe zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Die Farbstoffe der Formel (2a) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit und eine sehr gute Chlorbadewasserechtheit.

Die Farbstoffe der Formel (2a) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht beschrieben, sie ergibt sich jedoch ohne weiteres aus der allgemeinen Beschreibung.

### Beispiel 1: Zur Herstellung der Farbstoffmischungen, die einen Farbstoff der Formel

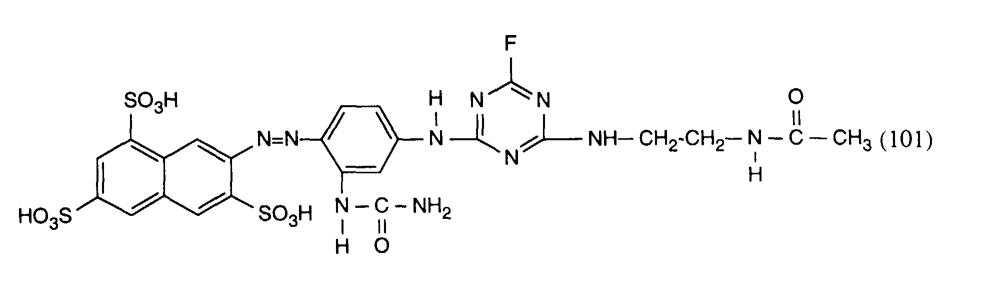

und einen Farbstoff der Formel (102) enthält, werden in einem Mixer 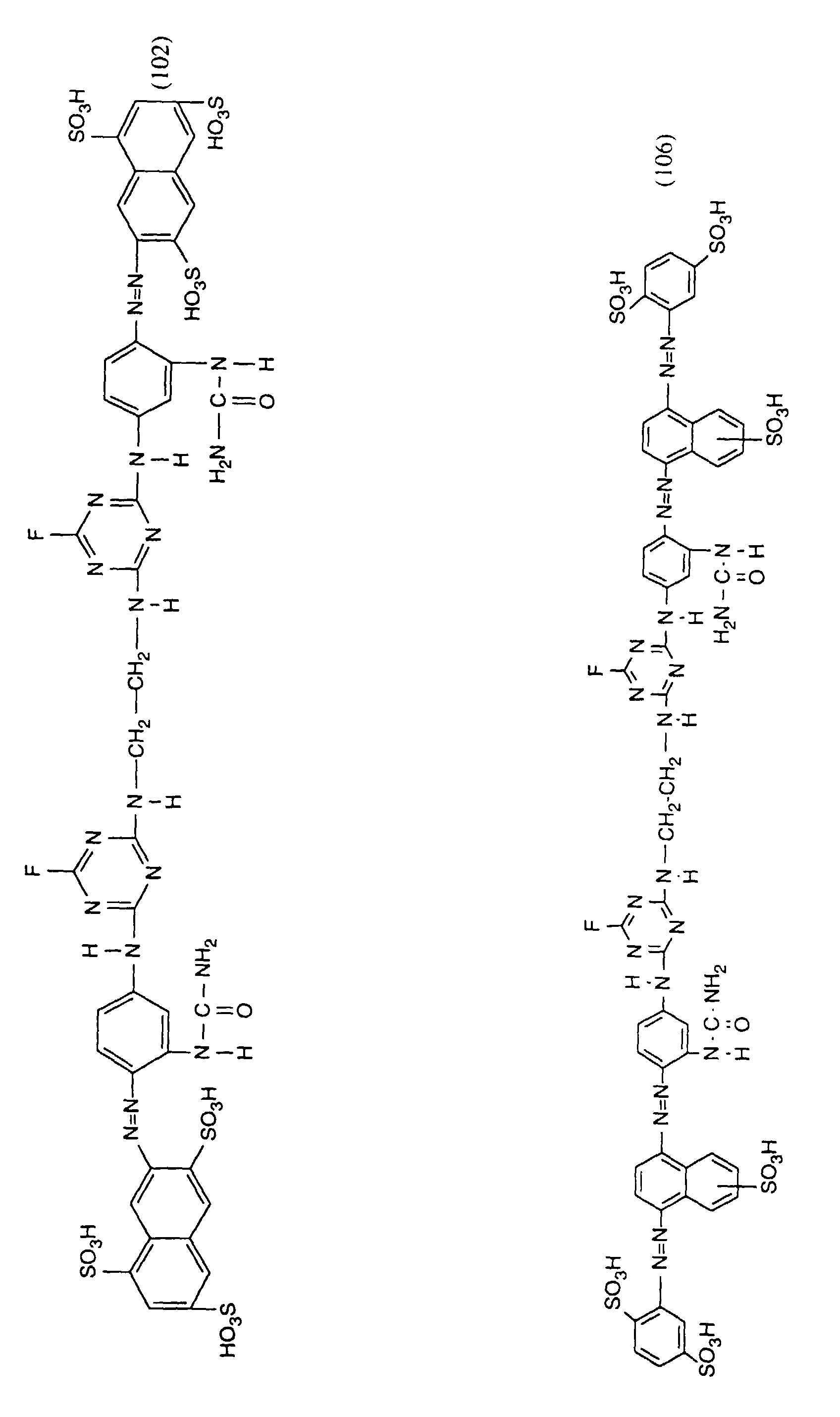
a₁) 40 Teile des Farbstoffs der Formel (101) und 60 Teile des Farbstoffs der Formel (102) homogen gemischt und ergeben 100 Teile der Mischung, die im folgenden als Farbstoffmischung A₁ bezeichnet wird;
a₂) 5 Teile des Farbstoffs der Formel (101) und 95 Teile des Farbstoffs der Formel (102) homogen gemischt und ergeben 100 Teile der Mischung, die im folgenden als Farbstoffmischung A₂ bezeichnet wird;
a₃) 10 Teile des Farbstoffs der Formel (101) und 90 Teile des Farbstoffs der Formel (102) homogen gemischt und ergeben 100 Teile der Mischung, die im folgenden als Farbstoffmischung A₃ bezeichnet wird;
   zur Herstellung der Farbstoffmischung, die den Farbstoff der Formel 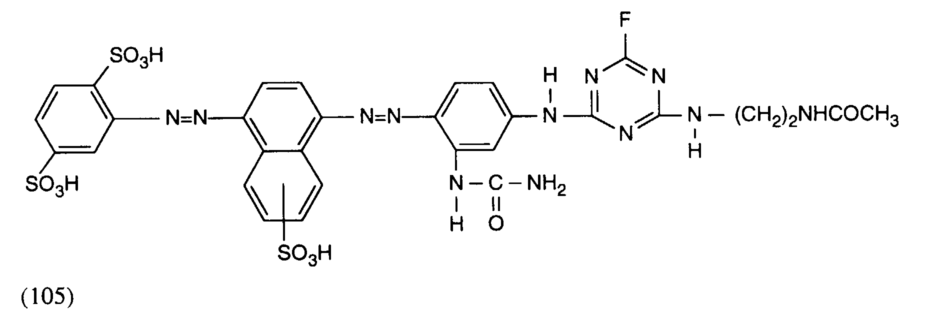 und den Farbstoff der Formel (106) enthält, werden in einem Mixer
b) 20 Teile des Farbstoffs der Formel (105) und 80 Teile des Farbstoffs der Formel (106) homogen gemischt;
   zur Herstellung der Farbstoffmischung, die den Farbstoff der Formel 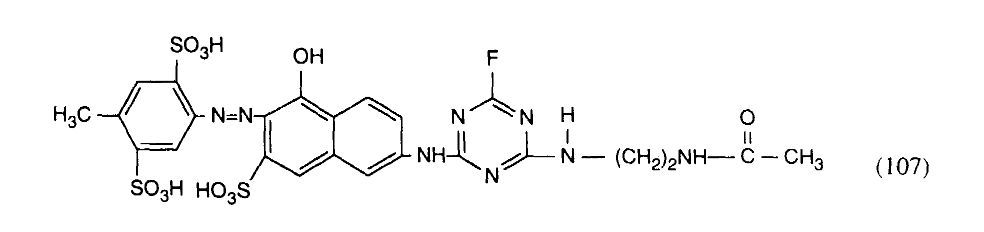 und den Farsbtoff der Formel 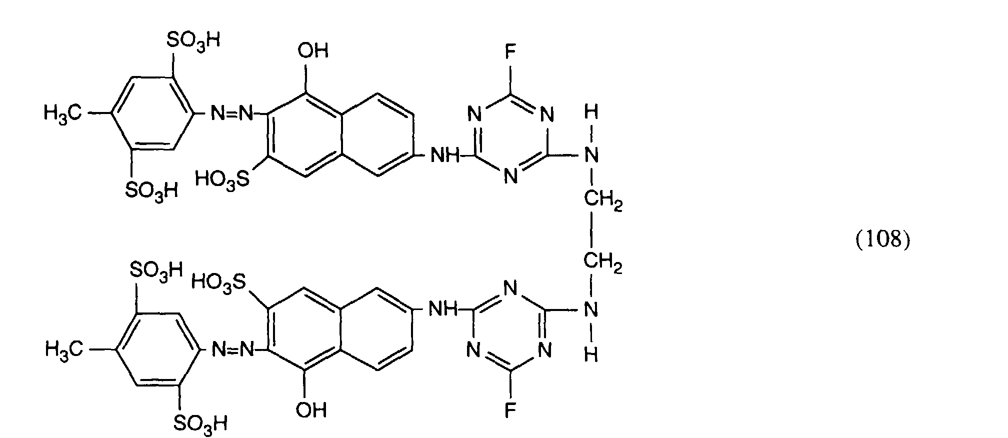 enthält, werden in einem Mixer
c) 20 Teile des Farbstoffs der Formel (107) und 80 Teile des Farbstoffs der Formel (108) homogen gemischt und ergeben 100 Teile der Mischung, die im folgenden als Farbstoffmischung D bezeichnet wird;
   zur Herstellung der Farbstoffmischung, die den Farbstoff der Formel 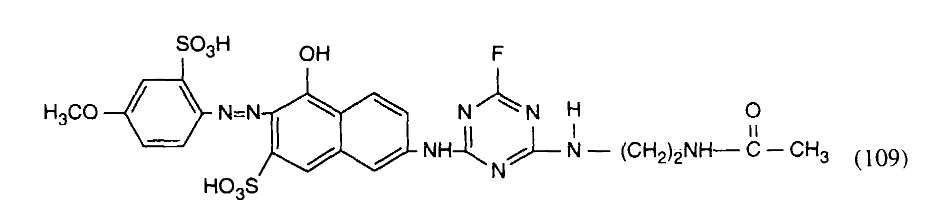 und den Farbstoff der Formel 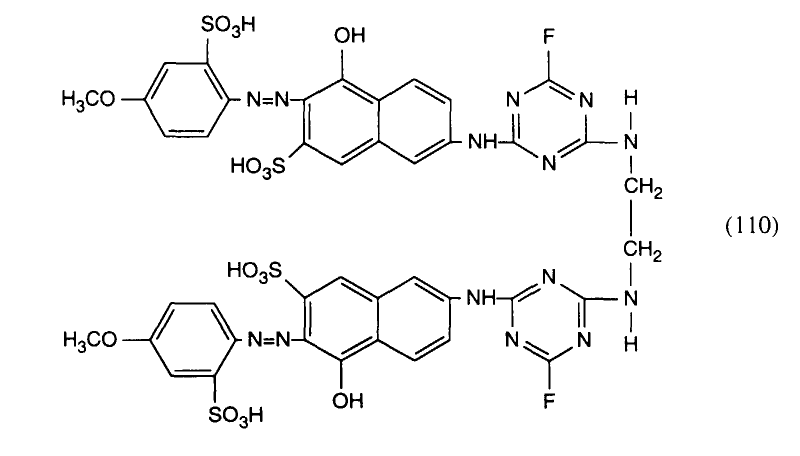 enthält, werden in einem Mixer
d) 20 Teile des Farbstoffs der Formel (109) und 80 Teile des Farbstoffs der Formel (110) homogen gemischt;
   zur Herstellung der Farbstoffmischung, die den Farbstoff der Formel 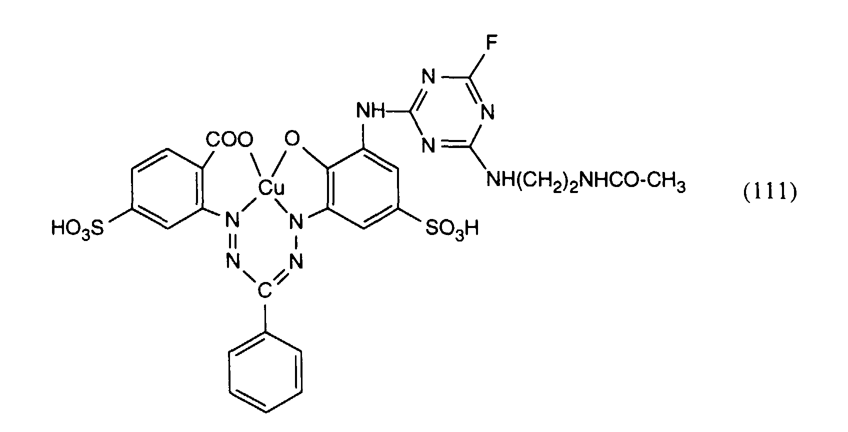 und den Farbstoff der Formel 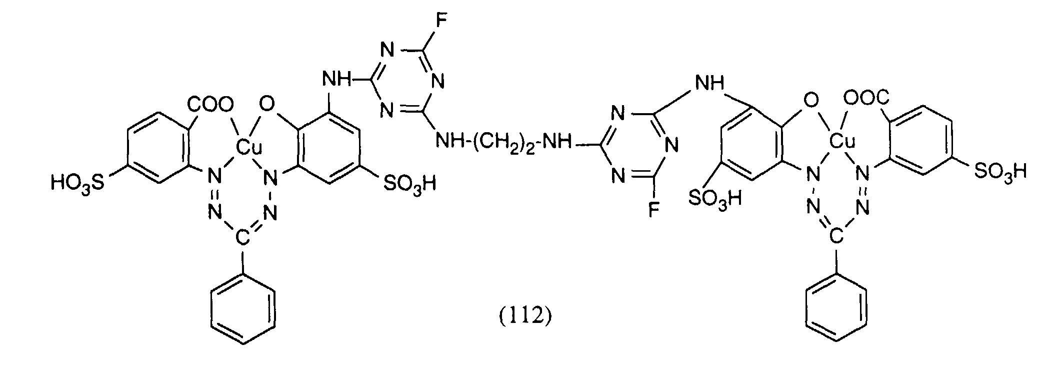 enthält, werden in einem Mixer
e) 30 Teile des Farbstoffs der Formel (111) und 70 Teile des Farbstoffs der Formel (112) homogen gemischt und ergeben 100 Teile der Mischung, die im folgenden als Farbstoffmischung F bezeichnet wird.

### Beispiel 2

### 27,3 Teile des Farbstoffes der Formel

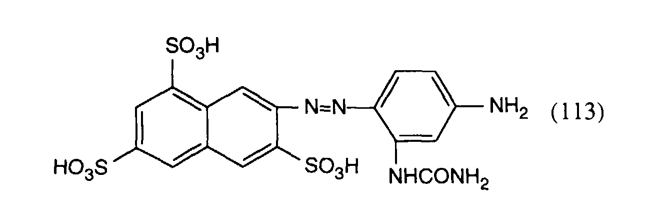

werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5-7 mit 0,75 Teilen Aethylendiamin und 2,2 Teilen Morpholin. Der pH-Wert des Reaktionsgemisches wird nun durch Zufügen von Natriumcarbonat auf 7,5 und die Temperatur langsam auf 25° erhöht. Nach beendigter Kondensation wird eine Mischung der Farbstoffe der Formeln 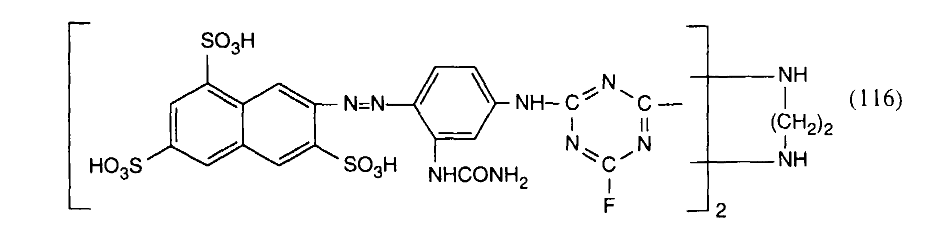 und 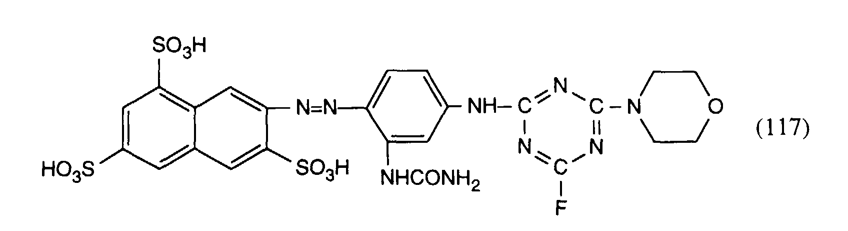 nach Zugabe von Puffersalzen mit Natriumchlorid gefällt, filtriert, gewaschen und getrocknet. Er stellt ein oranges Pulver dar und färbt Baumwolle in goldgelben Tönen.

Werden anstelle von 2,2 Teilen Morpholin 5,8 Teile Metanilsäure, 2,7 Teile o-Toluidin, 2,7 Teile N-Methylanilin oder 3,0 Teile N-Aethylanilin eingesetzt, so erhält man Mischungen des Farbstoffes der Formel 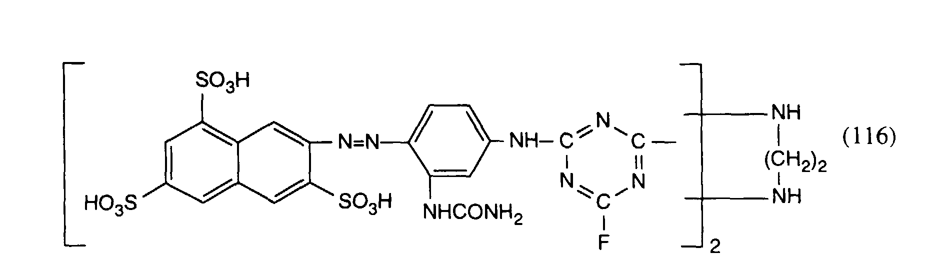 mit einem der Farbstoffe der folgenden Formeln

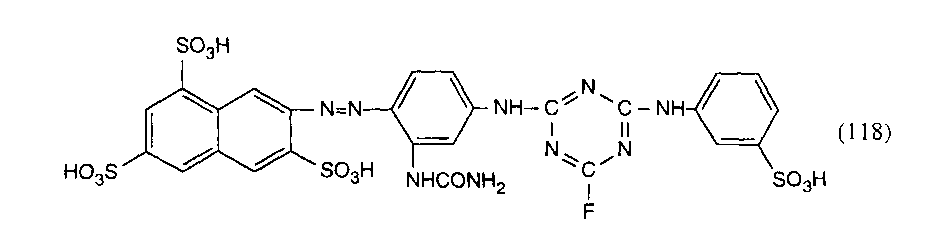

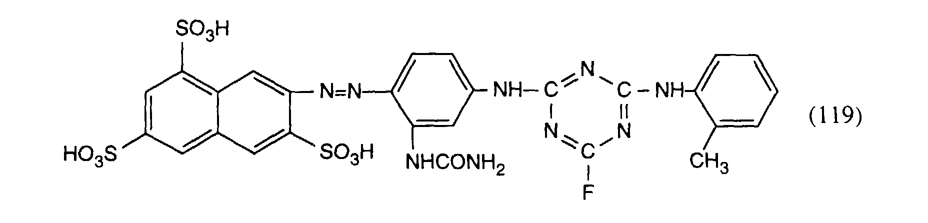

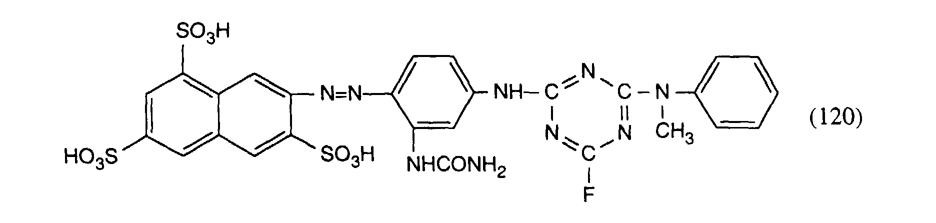

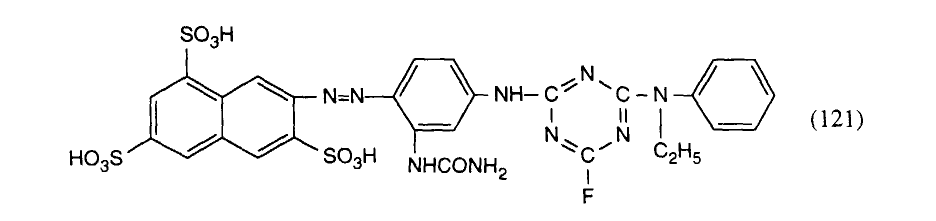

Je nach den Molverhältnissen der eingesetzten Amine bzw. Diamine werden Farbstoffmischungen mit unterschiedlichen Mischungsverhältnissen erhalten.

Anstelle von Aethylendiamin können z.B. die folgenden Diamine verwendet werden: 1,3-Propylendiamin, 1,2-Propylendiamin, n-Butylendiamin, 1-Methyl-n-propylendiamin, n-Hexylendiamin, 2-Aethyl-n-butylendiamin.

Verwendet man anstelle des oben angegebenen Chromophors die in der folgenden Tabelle in Spalte I aufgeführten Chromophore und verfährt im übrigen wie in den Beispielen beschrieben, so erhält man weitere Farbstoffmischungen, die Baumwolle in den in Spalte II angegebenen Tönen färben.

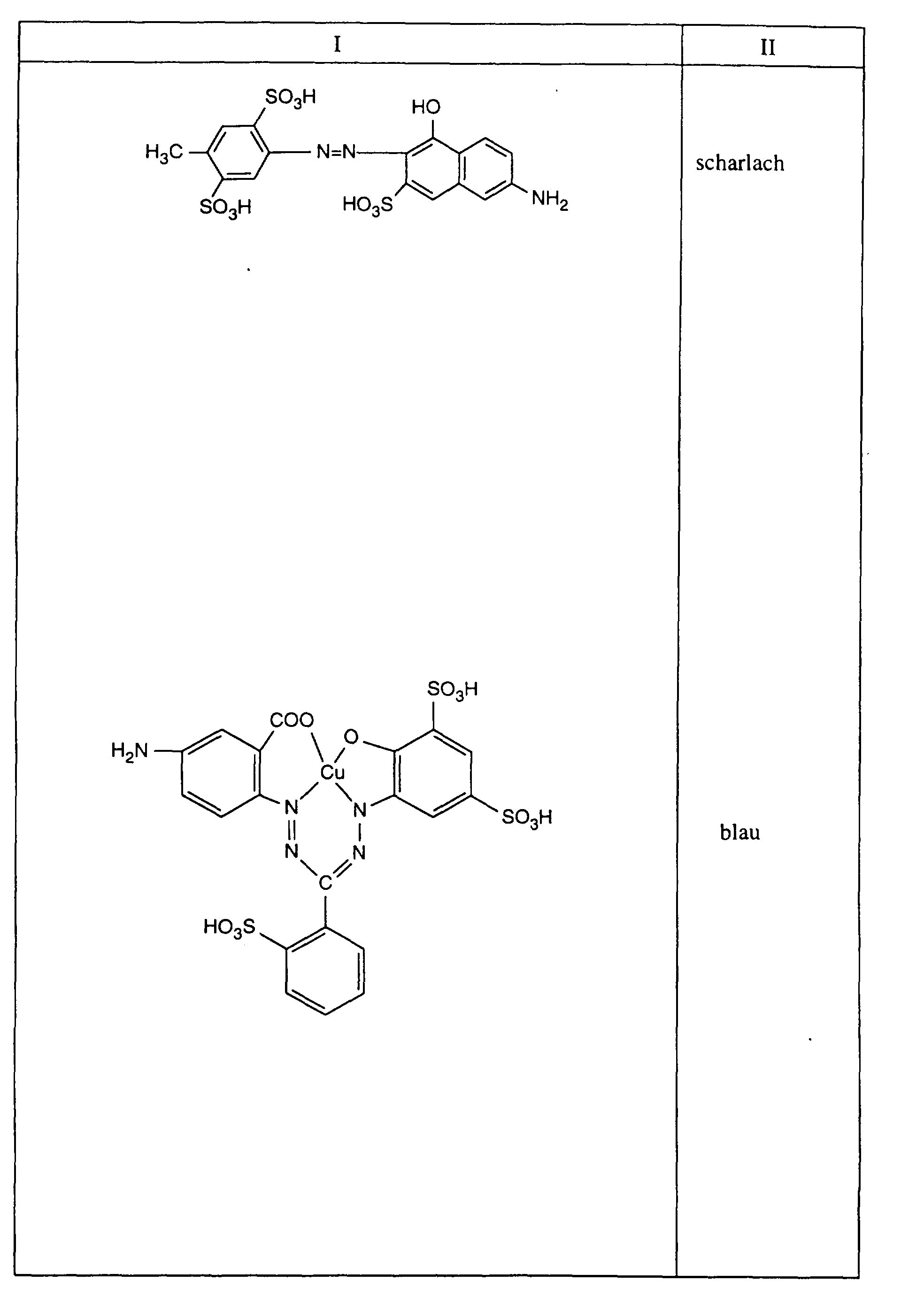

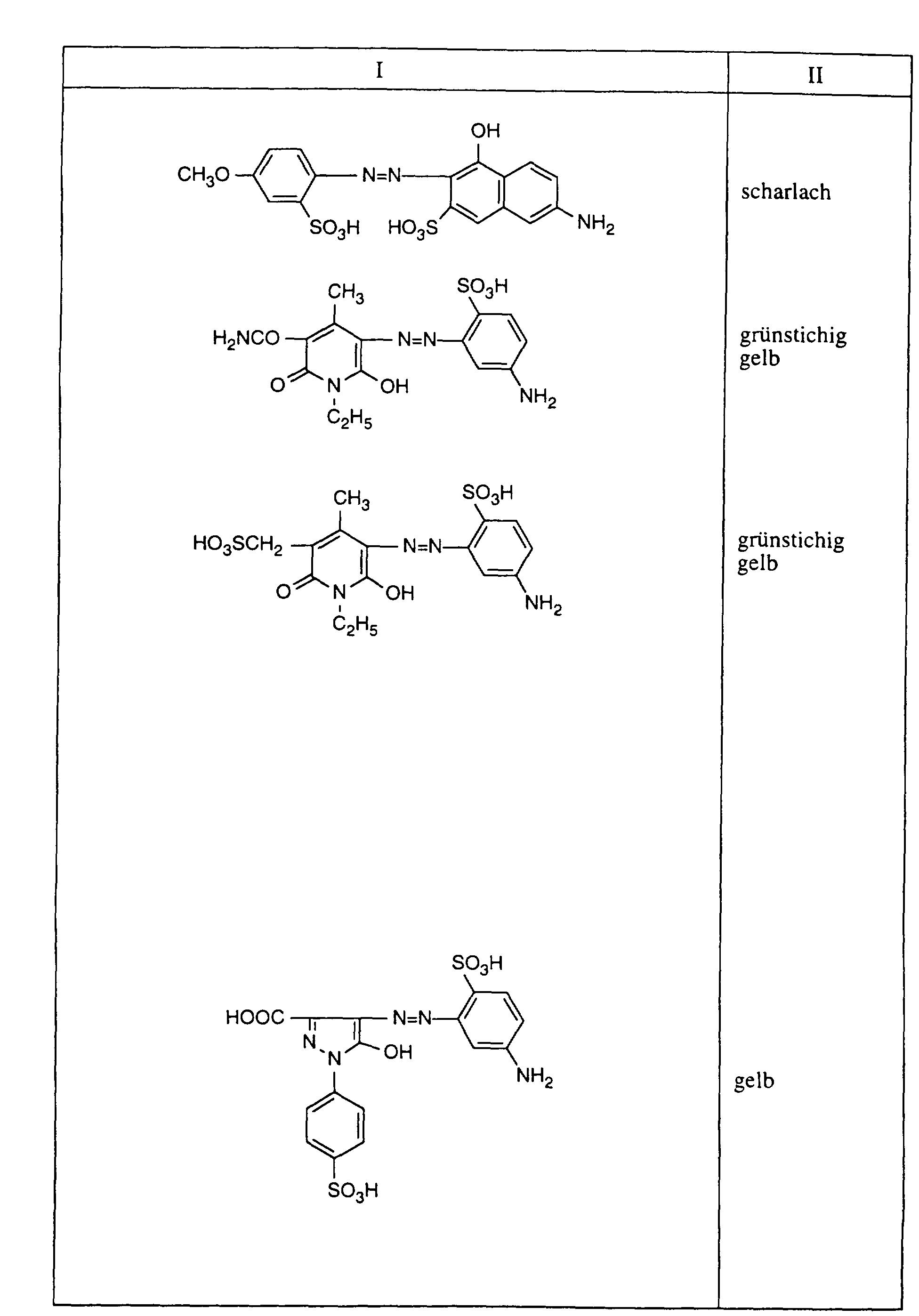

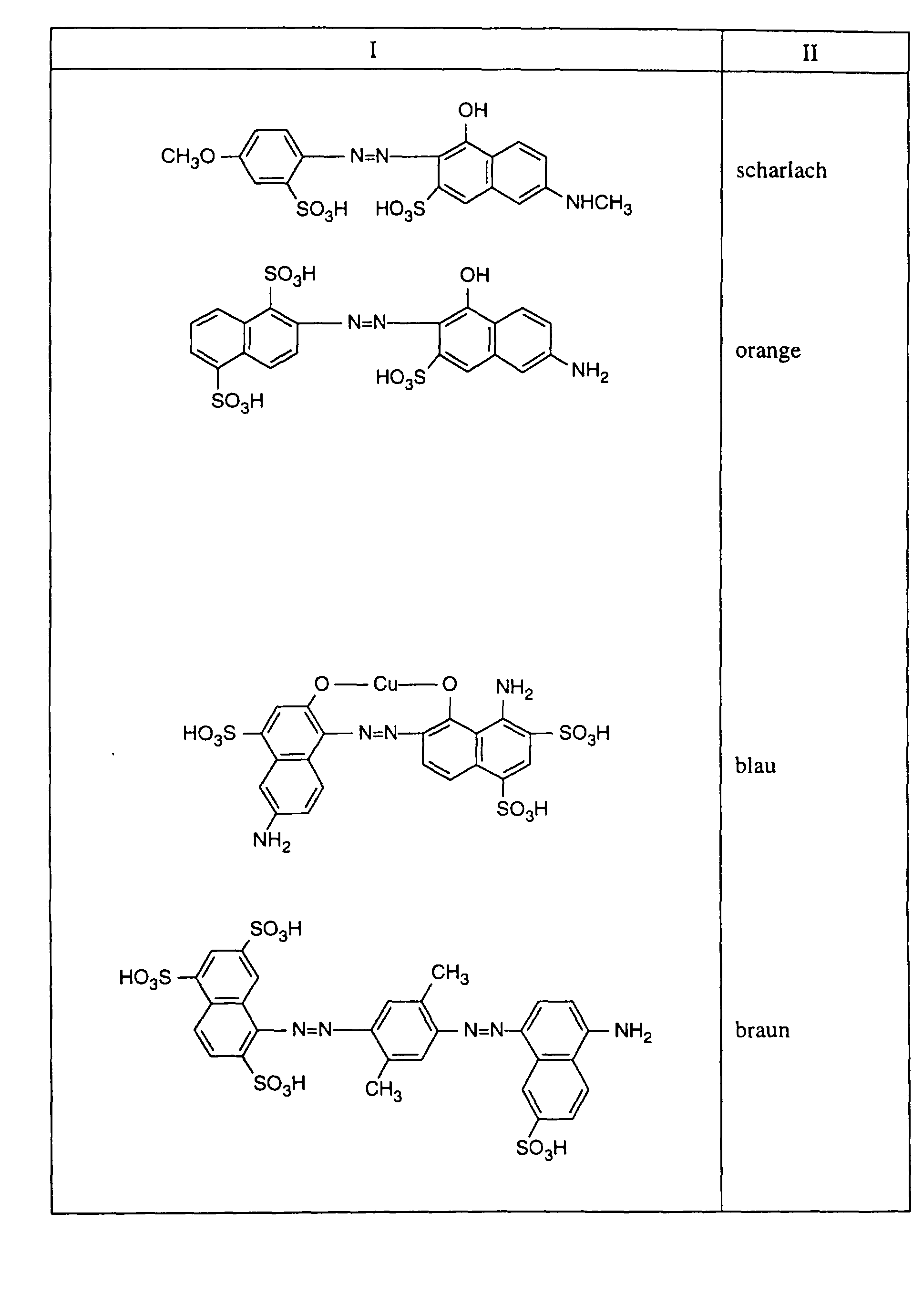

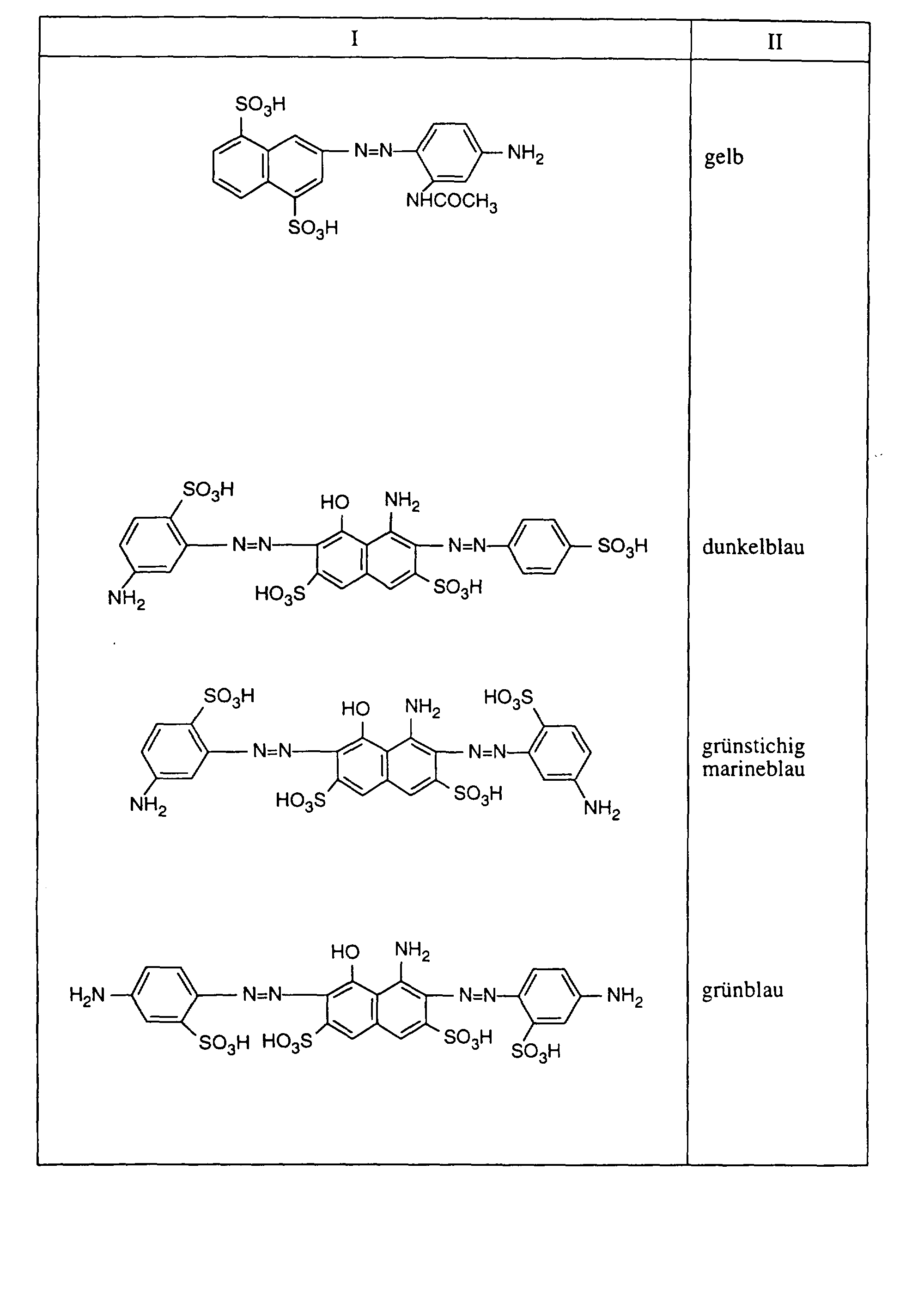

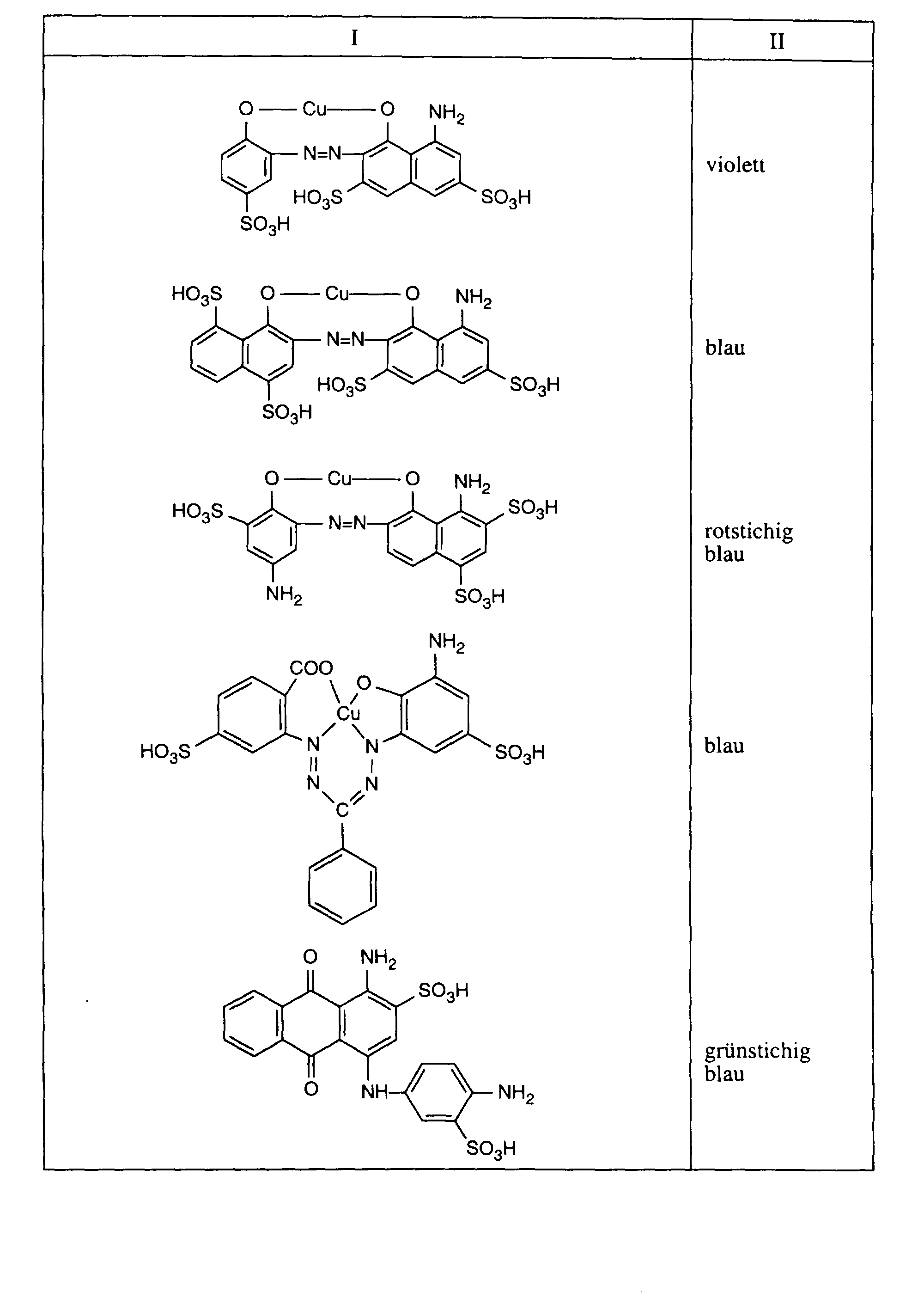

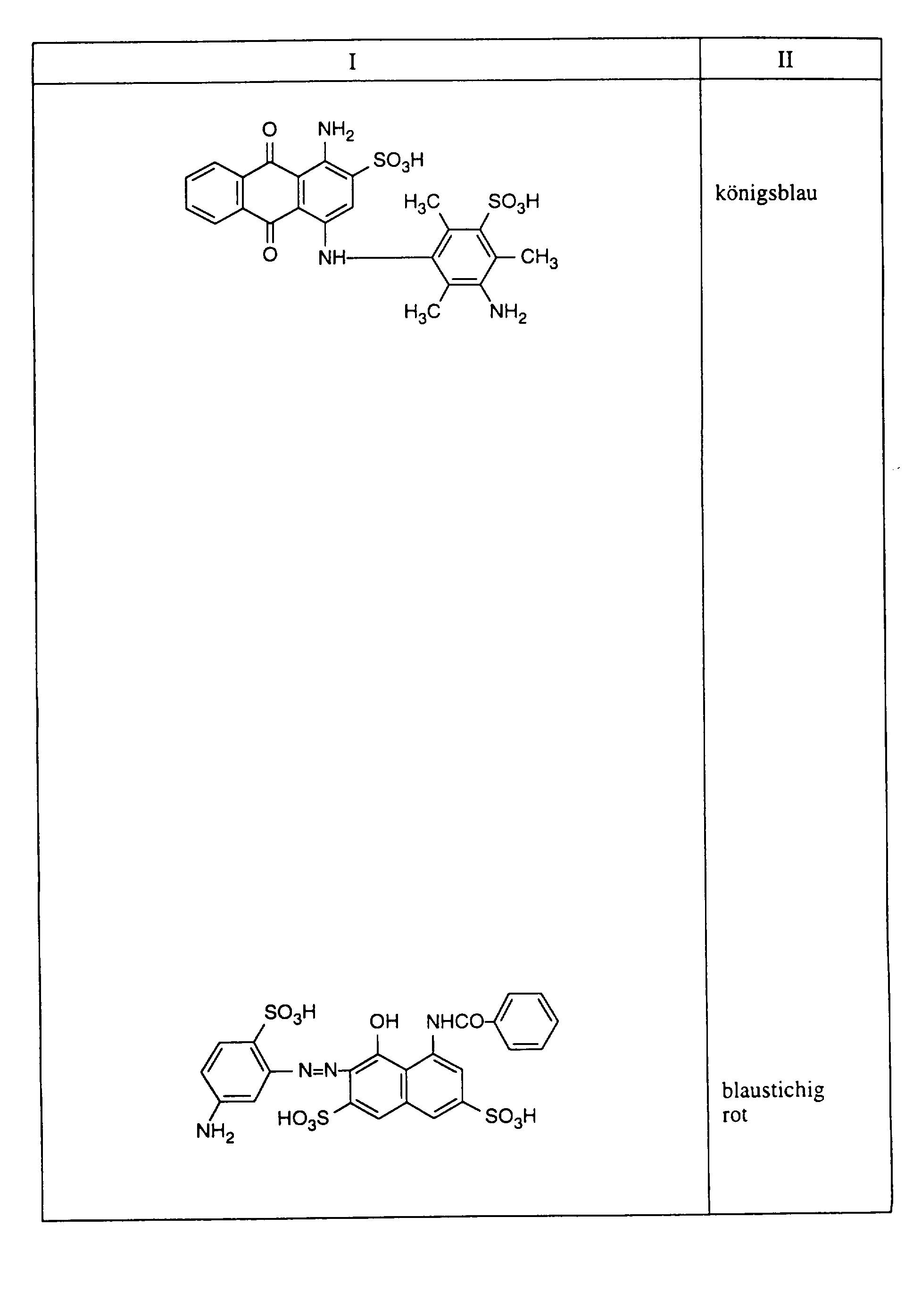

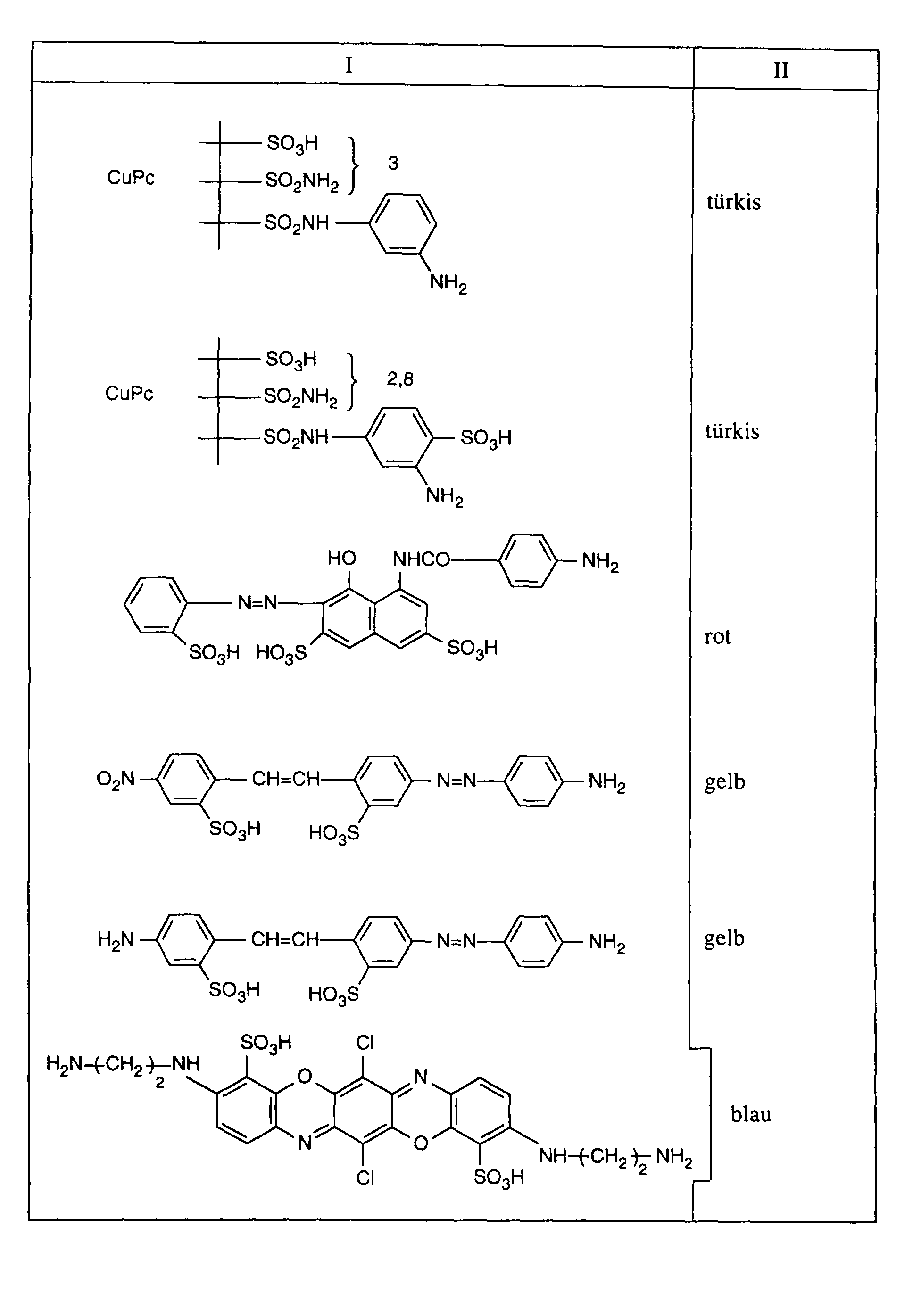

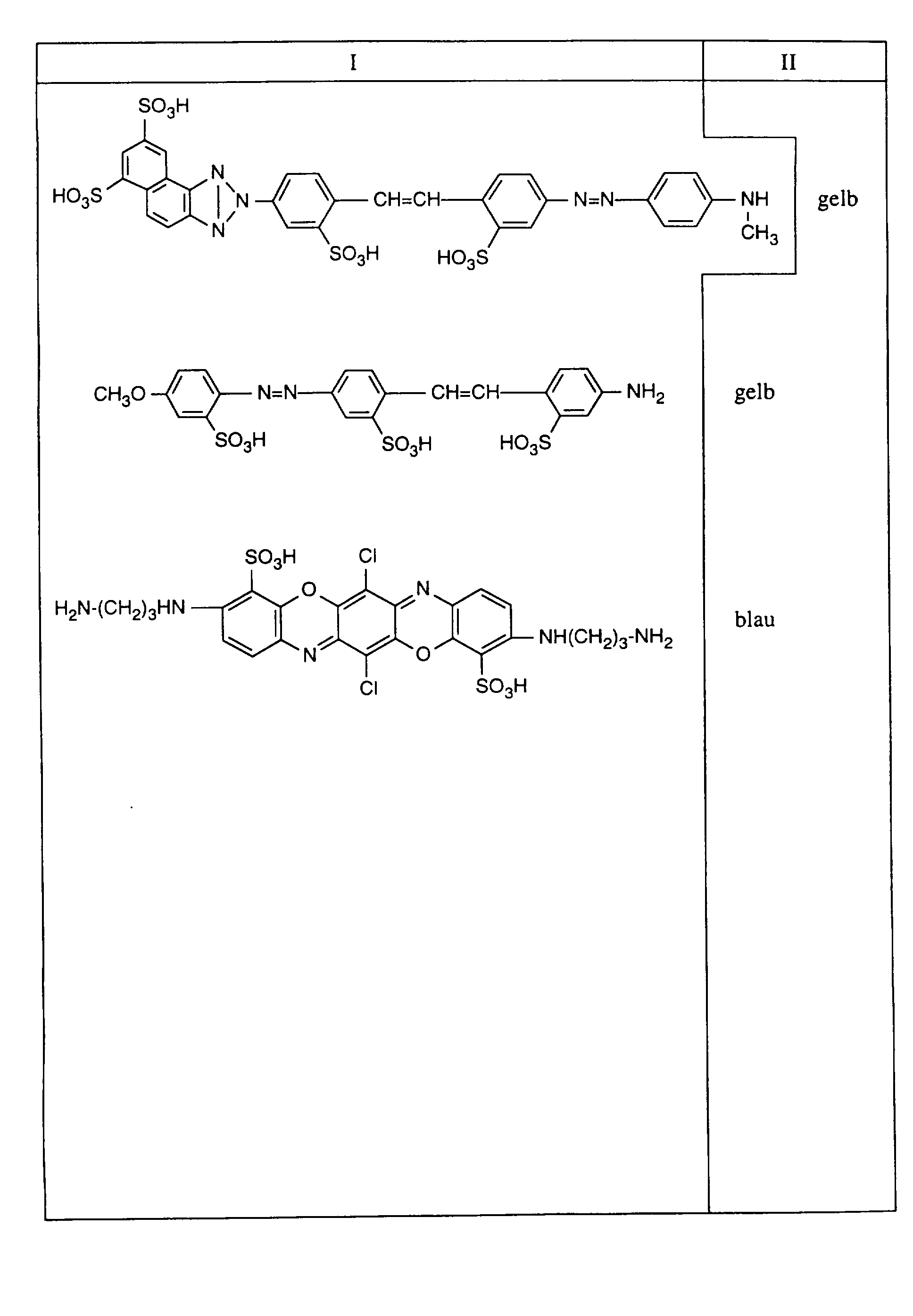

### Beispiel 3

### 27,3 Teile des Farbstoffes der Formel

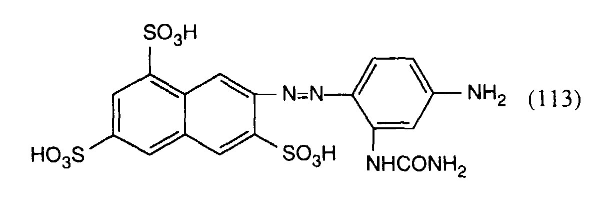

werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5-7 mit 2 bis 2,5 Teilen Aethylendiamin. Der pH-Wert des Reaktionsgemisches wird nun durch Zufügen von Natriumcarbonat auf 7,5 und die Temperatur langsam auf 25° erhöht. Nach beendigter Kondensation wird mit 2 bis 5 Teilen Acetanhydrid bei pH 8-9 acyliert. Anschliessend wird eine Mischung der Farbstoffe der Formeln 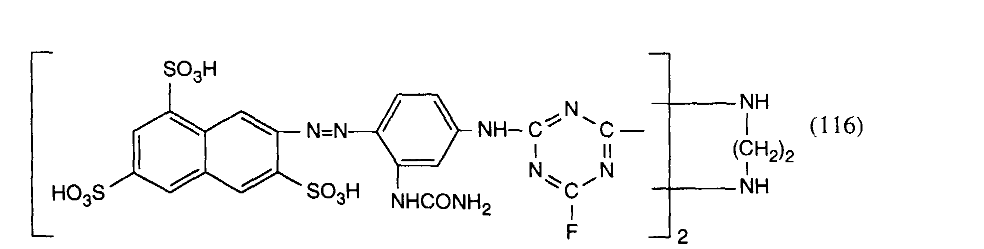 und 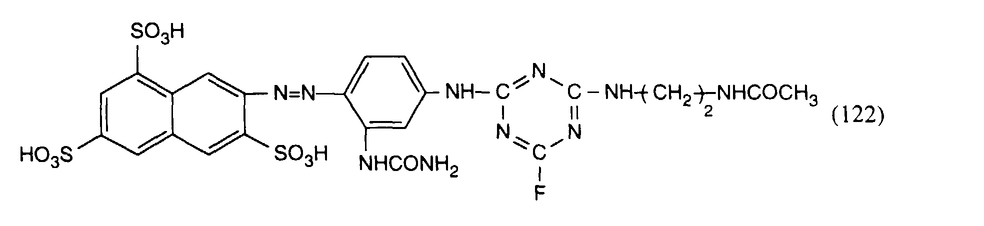 nach Zugabe von Puffersalzen mit Natriumchlorid gefällt, filtriert, gewaschen und getrocknet. Er stellt ein oranges Pulver dar und färbt Baumwolle in goldgelben Tönen.

Anstelle von Acetanhydrid können andere Acylierungsmittel, insbesondere aliphatische, aromatische oder heterocyclische Carbonsäurechloride, verwendet werden, beispielsweise Acetylchlorid, Propionylchlorid, Propionsäureanhydrid, 2-Propancarbonsäurechlorid, Carboxypropionylchlorid, Butyrylchlorid, Benzoylchlorid, 4-Methylbenzoylchlorid, Benzylcarbonsäurechlorid, 4-Sulfobenzylcarbonsäurechlorid und Pyridin-3-carbonsäurechlorid.

Anstelle des Aethylendiamins und des angegebenen Chromophors können auch die im Anschluss an Beispiel 2 aufgeführten Diamine bzw. Chromophore verwendet werden.

### Beispiel 4

2 Teile der gemäss Beispiele 1a₁, 1a₂ oder 1a₃ erhaltenen Farbstoffmischungen A₁, A₂ bzw. A₃ werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die goldgelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 5

2 Teile der gemäss Beispiel lc erhaltenen Farbstoffmischung D werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 6

8 Teile der gemäss Beispiel le erhaltenen Farbstoffmischung F werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird die blaugefärbte Ware gespült, während einer Viertelstunde mit einem nicht-ionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 7

4 Teile der gemäss Beispiele 1a₁, 1a₂ oder 1a₃ erhaltenen Farbstoffmischungen A₁, A₂ bzw. A₃ werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die goldgelb gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 8

6 Teile der gemäss Beispiel lc erhaltenen Farbstoffmischung D werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten, insbesondere Nassechtheiten, aus. Die erhaltene Ware ist sehr farbstark.

### Beispiel 9

2 Teile der gemäss Beispiel le erhaltenen Farbstoffmischung F werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die blaue Färbung während 30 Sekunden bei 100 bis 102°C, spült, seift während einer Viertelstunde in einer 0,3%igen kochenden Lösung eines nichtionogenen Waschmittels, spült und trocknet. Die erhaltene Ware zeichnet sich durch sehr gute Echtheiten, insbesondere Nassechtheiten, aus. Die erhaltene Ware ist sehr farbstark.

### Beispiel 10

3 Teile der gemäss Beispiele 1a₁, 1a₂ oder 1a₃ erhaltenen Farbstoffmischungen A₁, A₂ bzw. A₃ werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das goldgelb bedruckte Gewebe wird dann gespült, gegebenenfalls kochend geseift und nochmals gespült, und anschliessend getrocknet. Die erhaltene Ware zeichnet sich durch sehr gute Echtheiten, insbesondere Nassechtheiten, aus. Die erhaltene Ware ist sehr farbstark.

### Beispiel 11

5 Teile der gemäss Beispiel lc erhaltenen Farbstoffmischung D werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen orange bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Die erhaltene Ware zeichnet sich durch sehr gute Echtheiten, insbesondere Nassechtheiten, aus. Die erhaltene Ware ist sehr farbstark.

## Patentansprüche (Patentansprüche für folgende(n) Vertragsstaat(en): BE, CH, LI, DE, FR, GB, IT)

1. Farbstoffe der Formel 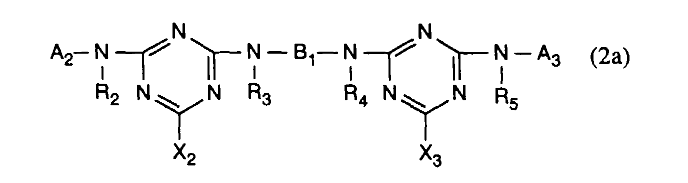
worin A₂ und A₃ unabhängig voneinander je der Rest eines Anthrachinon-, Phthalocyanin-, Formazan- oder Dioxazin-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

2. Farbstoffe der Formel 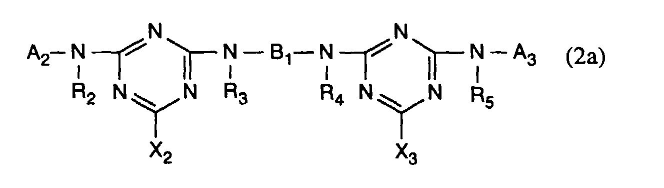
worin A₂ und A₃ unabhängig voneinander je der Rest eines Polyazo- oder Metallkomplexazo-Chromophors;
R_{2,} R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

3. Farbstoffe der Formel 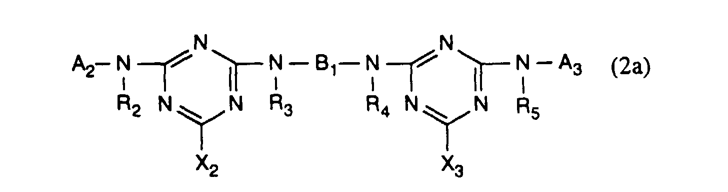 worin A₂ und A₃ unabhängig voneinander je der Rest eines Monoazo-Chromophors der Formel 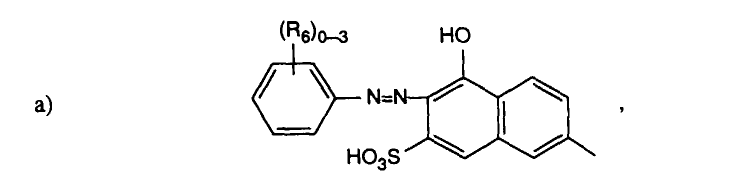 worin R₆ für 0 bis 3 Substituenten aus der Gruppe C₁-C₄-Alkyl, C₁-C₄-Alkoxy, Halogen, Carboxy und Sulfo steht, 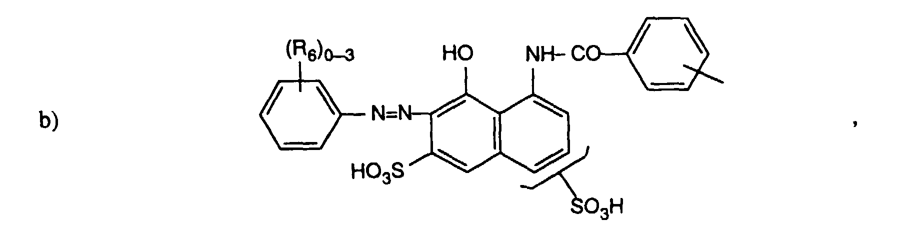 worin R₆ für 0 bis 3 Substituenten aus der Gruppe C₁-C₄-Alkyl, C₁-C₄-Alkoxy, Halogen, Carboxy und Sulfo steht, 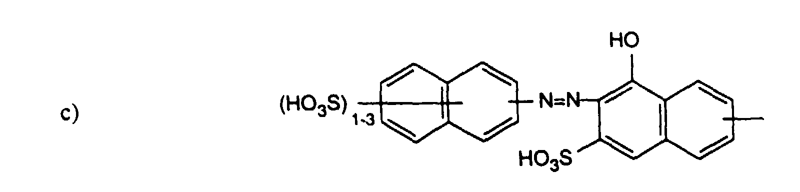 oder 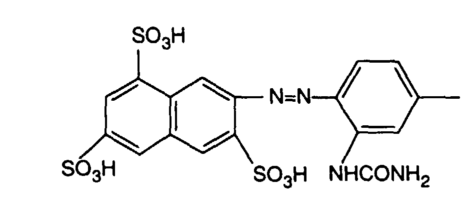 oder 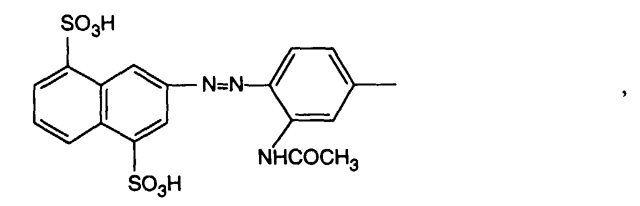 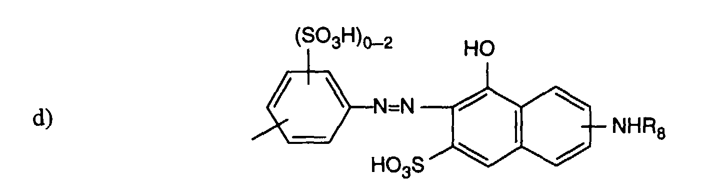 oder 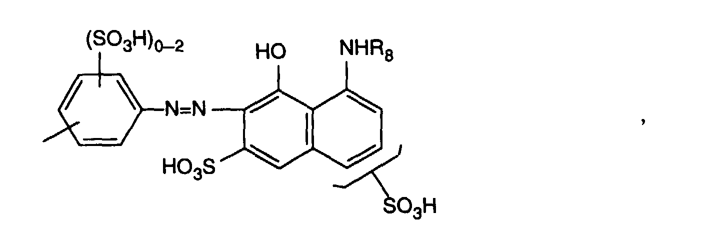 worin R₈ C₁-C₄-Alkanoyl oder Benzoyl ist, 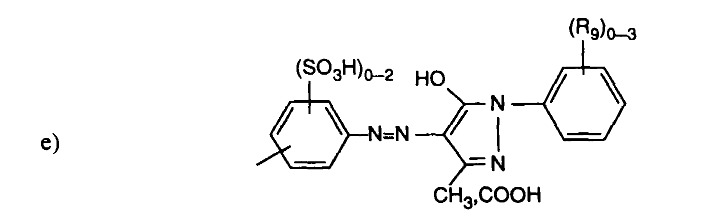 oder 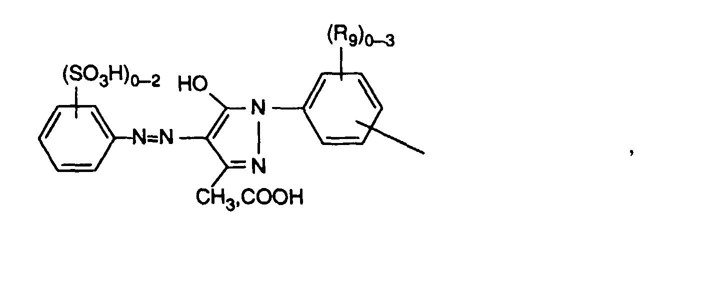 worin R₉ für 0 bis 3 Substituenten aus der Gruppe C₁-C₄-Alkyl, C₁-C₄-Alkoxy, Halogen, Carboxy und Sulfo steht, 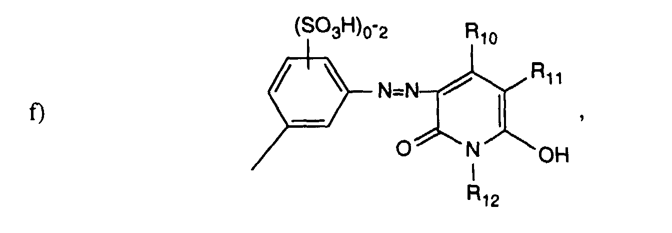 worin R₁₂ und R₁₀ unabhängig voneinander Wasserstoff, C₁-C₄-Alkyl oder Phenyl und R₁₁ Wasserstoff, Cyano, Carbamoyl oder Sulfomethyl sind, 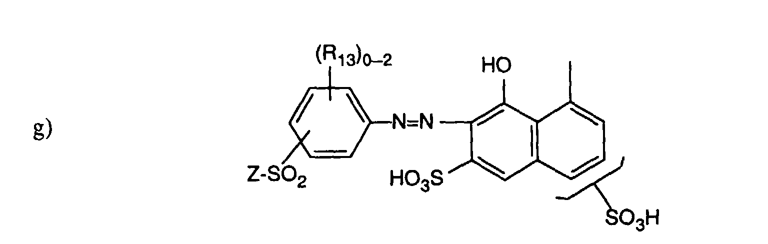 worin R₁₃ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl ist, oder 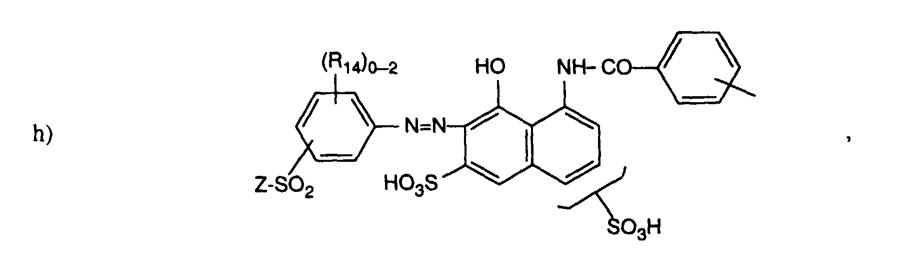
worin R₁₄ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl bedeutet;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

4. Farbstoffe gemäss einem der Ansprüche 1 bis 3, dadurch gekennzeichnet, dass B₁ 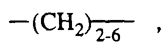 gegebenenfalls durch C₁-C₄-Alkyl substituiertes Cyclohexylen ist.

5. Farbstoffe gemäss einem der Ansprüche 1 bis 4, dadurch gekennzeichnet, dass R₂, R₃, R₄ und R₅ unabhängig voneinander Wasserstoff, Methyl oder Aethyl sind.

6. Farbstoffe gemäss einem der Ansprüche 1 bis 5, dadurch gekennzeichnet, dass die Reste A₂ und A₃ identisch sind.

7. Farbstoffe gemäss Anspruch 1, dadurch gekennzeichnet, dass A₂ und A₃ je ein Rest der Formel 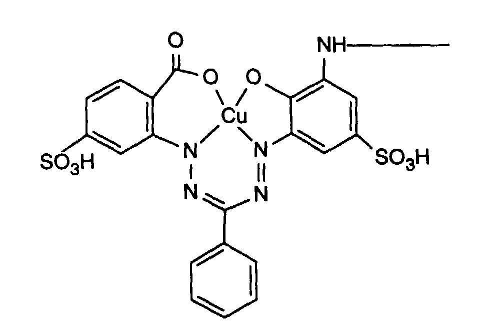 und B₁ Äthylen, 1,2- or 1,3-Propylen, n-Butylene, 1-Methyl-n-propylen, n-Hexylen oder 2-Äthyl-n-butylen bedeuten.

8. Farbstoffe gemäss Anspruch 1, dadurch gekennzeichnet, dass A₂ und A₃ je ein Rest der Formel 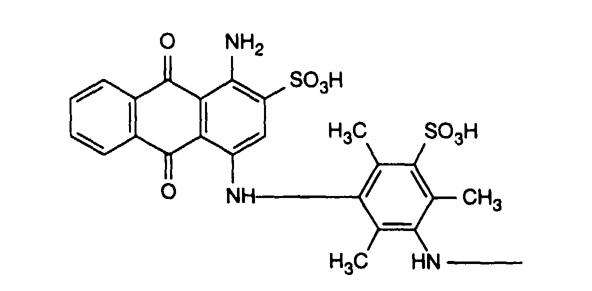 und B₁ Äthylen, 1,2- or 1,3-Propylen, n-Butylene, 1-Methyl-n-propylen, n-Hexylen oder 2-Äthyl-n-butylen bedeuten.

9. Farbstoffe gemäss Anspruch 3, dadurch gekennzeichnet, dass A₂ und A₃ je ein Rest der Formel 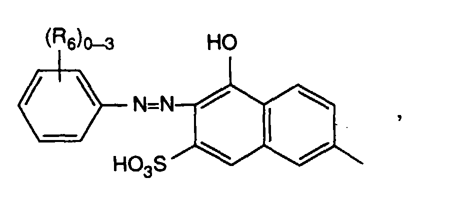
worin R₆ für 0 bis 3 Substituenten aus der Gruppe C₁-C₄-Alkyl, C₁-C₄-Alkoxy, Halogen, Carboxy und Sulfo steht, und
B₁ -(CH₂)₂₋₆- oder gegebenenfalls durch C₁-C₄-Alkyl substituiertes Cyclohexylen bedeutet.

10. Farbstoffe gemäss Anspruch 3, dadurch gekennzeichnet, dass A₂ und A₃ je ein Rest der Formel 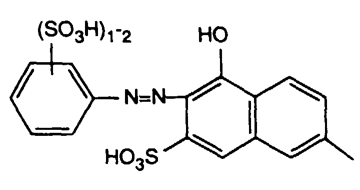 ist.

11. Farbstoffe gemäss Anspruch 3, dadurch gekennzeichnet, dass A₂ und A₃ je ein Rest der Formel 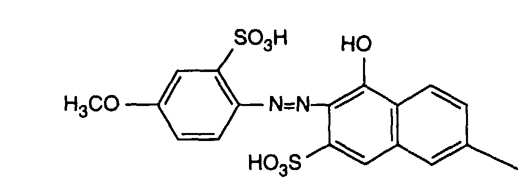 ist.

12. Farbstoffe gemäss Anspruch 3, dadurch gekennzeichnet, dass A₂ und A₃ je ein Rest der Formel 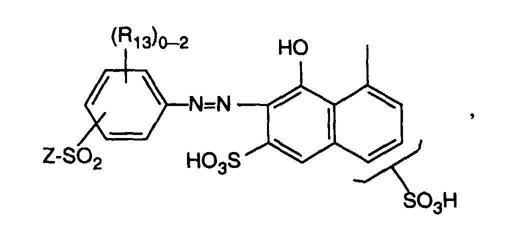 worin R₁₃ für 0 bis 2 Substituenten aus der Gruppe C₁-C₄-Alkyl, C₁-C₄-Alkoxy, Halogen, Carboxy und Sulfo steht; and Z β-Sulfatoäthyl, β-Thiosulfatoäthyl, β-Phosphatoäthyl, β-Acyloxyäthyl, β-Halogenäthyl or Vinyl ist.

13. Farbstoffe gemäss Anspruch 3, dadurch gekennzeichnet, dass A₂ und A₃ je ein Rest der Formel 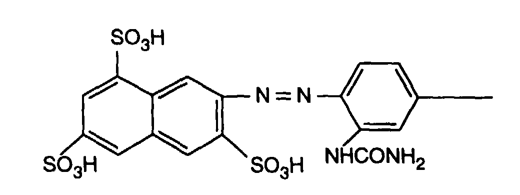 und B₁ Äthylen, 1,2- or 1,3-Propylen, n-Butylen, 1-Methyl-n-propylen, n-Hexylen or 2-Äthyl-n-butylen ist.

14. Farbstoffe gemäss Anspruch 3, dadurch gekennzeichnet, dass A₂ und A₃ je ein Rest der Formel 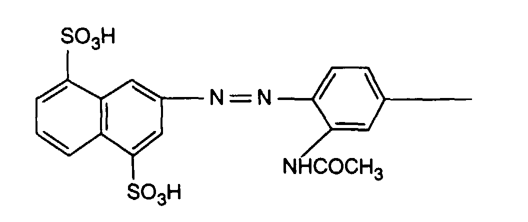 und B₁ Äthylen, 1,2- or 1,3-Propylen, n-Butylen, 1-Methyl-n-propylen, n-Hexylen or 2-Äthyl-n-butylen ist.

15. Verfahren zur Herstellung von Farbstoffen der Formel (2a) gemäss einem der Ansprüche 1 bis 3, dadurch gekennzeichnet, dass man zwei Aequivalente eines organischen Farbstoffes der Formel 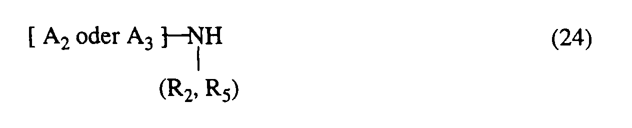 oder ein Farbstoffvorprodukt, mindestens ein Aequivalent Fluortriazin und mindestens ein Aequivalent eines Diamins der Formel 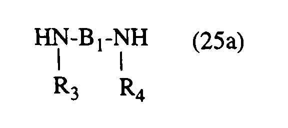 in beliebiger Reihenfolge miteinander umsetzt, wobei A₂, A₃, R₂, R₃, R₄, R₅, und B₁ die in jeweils einem der Ansprüche 1 bis 3 angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

16. Verfahren zum Färben und Bedrucken von cellulosehaltigen Fasermaterialien mit Farbstoffen, dadurch gekennzeichnet, dass man Farbstoffe gemäss einem der Ansprüche 1 bis 14 verwendet.

17. Verfahren gemäss Anspruch 16 zum Färben und Bedrucken von Baumwolle.

## Patentansprüche (Patentansprüche für folgende(n) Vertragsstaat(en): ES)

1. Verfahren zur Herstellung von Farbstoffen der Formel 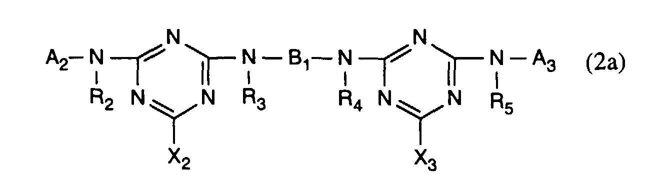
worin A₂ und A₃ unabhängig voneinander je der Rest eines Anthrachinon-, Phthalocyanin-, Formazan- oder Dioxazin-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind,
dadurch gekennzeichnet, dass man zwei Aequivalente eines organischen Farbstoffes der Formel 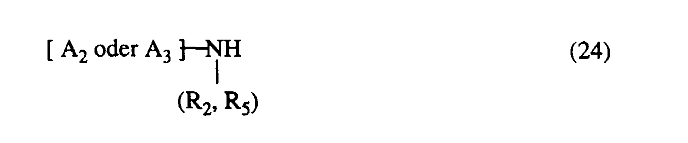 oder ein Farbstoffvorprodukt, mindestens ein Aequivalent eines s-Triazins und mindestens ein Aequivalent eines Diamins der Formel 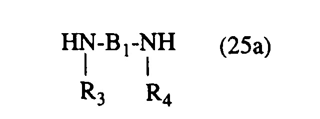 in beliebiger Reihenfolge miteinander umsetzt, wobei A₂, A₃, R₂, R₃, R₄, R₅, und B₁ die oben angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

2. Verfahren zur Herstellung von Farbstoffen der Formel 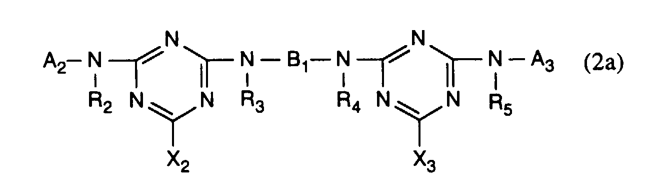
worin A₂ und A₃ unabhängig voneinander je der Rest eines Polyazo- oder Metallkomplexazo-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind,
dadurch gekennzeichnet, dass man zwei Aequivalente eines organischen Farbstoffes der Formel 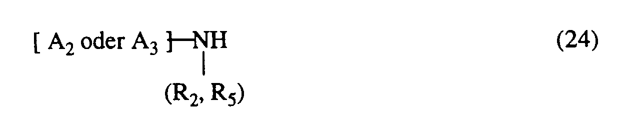 oder ein Farbstoffvorprodukt, mindestens ein Aequivalent eines s-Triazins und mindestens ein Aequivalent eines Diamins der Formel 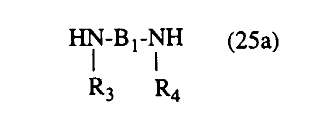 in beliebiger Reihenfolge miteinander umsetzt, wobei A₂, A₃, R₂, R₃, R₄, R₅, und B₁ die oben angegebenen Bedeutungen haben, oder, im Falle der Verwendung von Farbstoff Vorprodukten, die erhaltenen Zwischenprodukte in die gewünschten Farbstoffe überführt und gegebenenfalls eine weitere Umwandlungsreaktion anschliesst.

3. Verfahren zur Herstellung von Farbstoffen der Formel 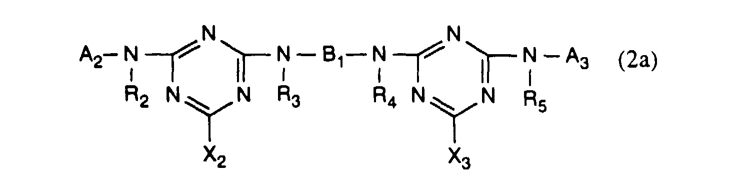 worin A₂ und A₃ unabhängig voneinander je der Rest eines Monoazo-Chromophors der Formel 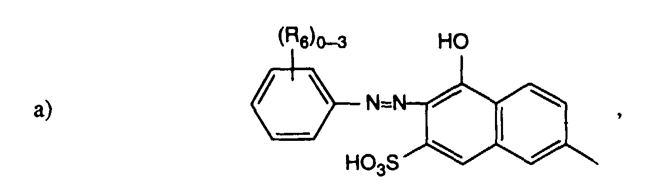 worin R₆ für 0 bis 3 Substituenten aus der Gruppe C₁-C₄-Alkyl, C₁-C₄-Alkoxy, Halogen, Carboxy und Sulfo steht, 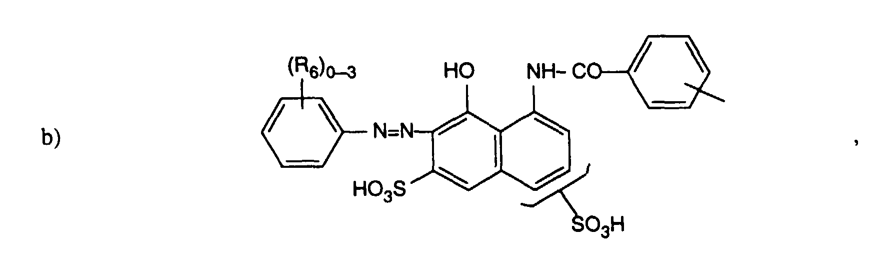 worin R₆ für 0 bis 3 Substituenten aus der Gruppe C₁-C₄-Alkyl, C₁-C₄-Alkoxy, Halogen, Carboxy und Sulfo steht, 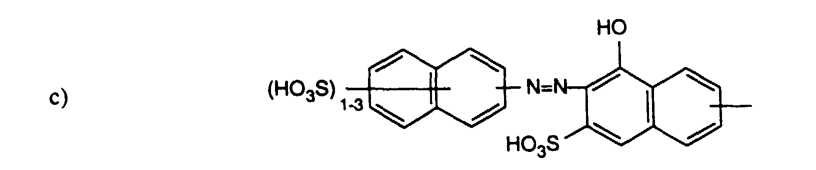 oder 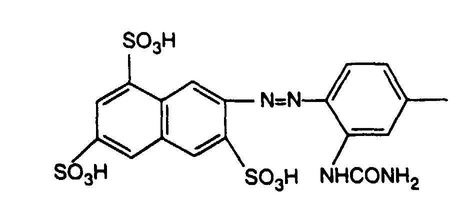 oder 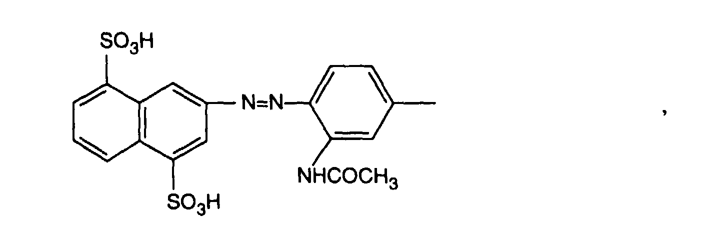 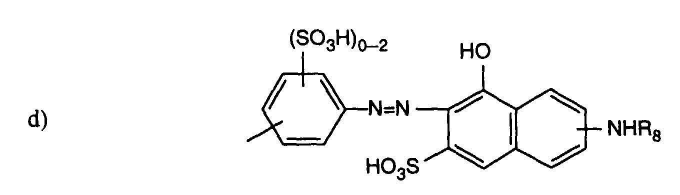 oder 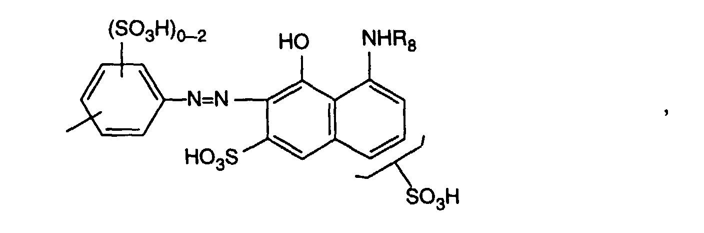 worin R₈ C₁-C₄-Alkanoyl oder Benzoyl ist, 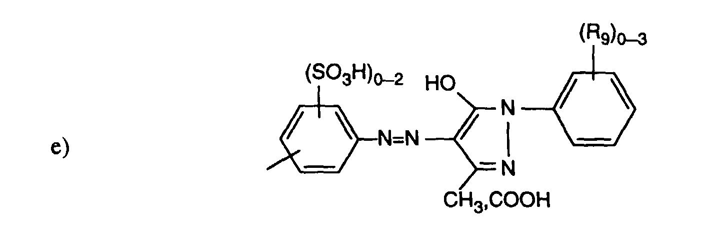 oder 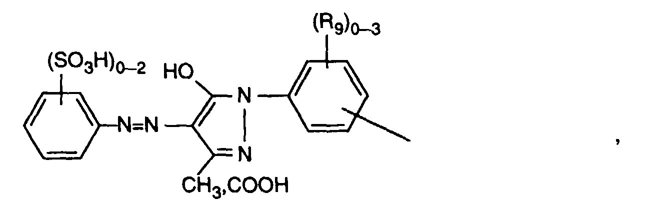 worin R₉ für 0 bis 3 Substituenten aus der Gruppe C₁-C₄-Alkyl, C₁-C₄-Alkoxy, Halogen, Carboxy und Sulfo steht, 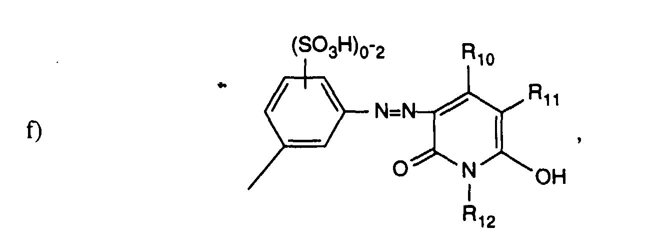 worin R₁₂ und R₁₀ unabhängig voneinander Wasserstoff, C₁-C₄-Alkyl oder Phenyl und R₁₁ Wasserstoff, Cyano, Carbamoyl oder Sulfomethyl sind, 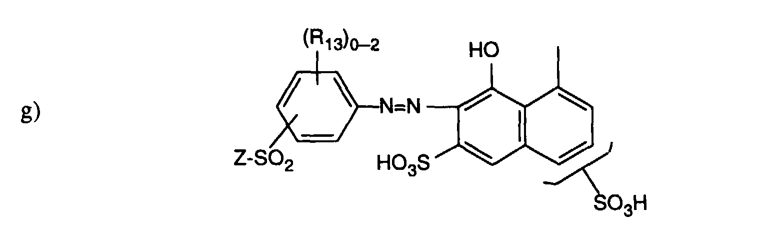 worin R₁₃ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl ist, oder 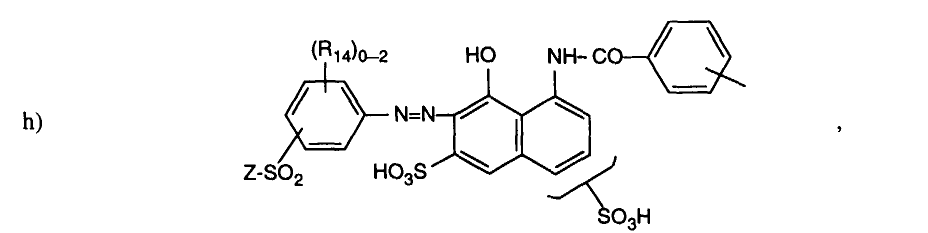
worin R₁₄ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl bedeutet;
R_{2,} R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind,
dadurch gekennzeichnet, dass man zwei Aequivalente eines organischen Farbstoffes der Formel 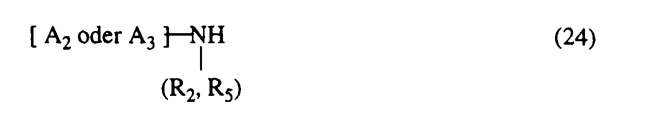 oder ein Farbstoffvorprodukt, mindestens ein Aequivalent eines s-Triazins und mindestens ein Aequivalent eines Diamins der Formel 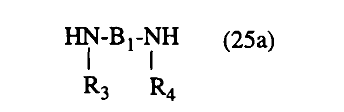 in beliebiger Reihenfolge miteinander umsetzt, wobei A₂, A₃, R₂, R₃, R₄, R₅, und B₁ die oben angegebenen Bedeutungen haben, oder, im Falle der Verwendung von Farbstoff Vorprodukten, die erhaltenen Zwischenprodukte in die gewünschten Farbstoffe überführt und gegebenenfalls eine weitere Umwandlungsreaktion anschliesst.

4. Verfahren gemäss einem der Ansprüche 1 bis 3 zur Herstellung von Farbstoffen der Formel (2a), worin 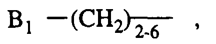 gegebenenfalls durch C₁-C₄-Alkyl substituiertes Cyclohexylen ist.

5. Verfahren gemäss einem der Ansprüche 1 bis 4, dadurch gekennzeichnet, dass R₂, R₃, R₄ und R₅ unabhängig voneinander Wasserstoff, Methyl oder Aethyl sind.

6. Verfahren gemäss einem der Ansprüche 1 bis 5 zur Herstellung von Farbstoffen der Formel (2a), worin die Reste A₂ und A₃ identisch sind.

7. Verfahren gemäss Anspruch 1, dadurch gekennzeichnet, dass A₂ und A₃ je ein Rest der Formel 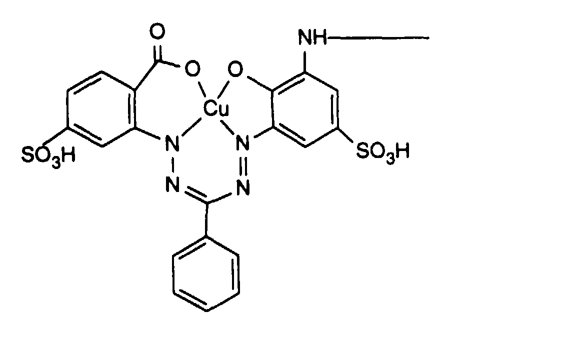 und B₁ Äthylen, 1,2- or 1,3-Propylen, n-Butylene, 1-Methyl-n-propylen, n-Hexylen oder 2-Äthyl-n-butylen bedeuten.

8. Verfahren gemäss Anspruch 1, dadurch gekennzeichnet, dass A₂ und A₃ je ein Rest der Formel 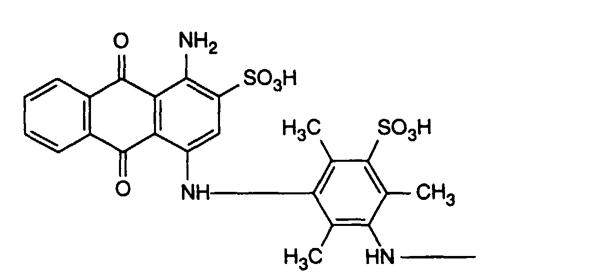 und B₁ Äthylen, 1,2- or 1,3-Propylen, n-Butylene, 1-Methyl-n-propylen, n-Hexylen oder 2-Äthyl-n-butylen bedeuten.

9. Verfahren gemäss Anspruch 3, dadurch gekennzeichnet, dass A₂ und A₃ je ein Rest der Formel 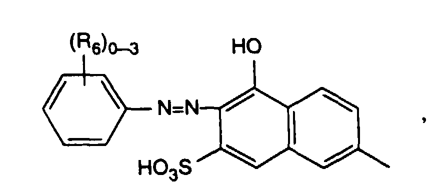
worin R₆ für 0 bis 3 Substituenten aus der Gruppe C₁-C₄-Alkyl, C₁-C₄-Alkoxy, Halogen, Carboxy und Sulfo steht, und
B₁ -(CH₂)₂₋₆- oder gegebenenfalls durch C₁-C₄-Alkyl substituiertes Cyclohexylen bedeutet.

10. Verfahren gemäss Anspruch 3, dadurch gekennzeichnet, dass A₂ und A₃ je ein Rest der Formel 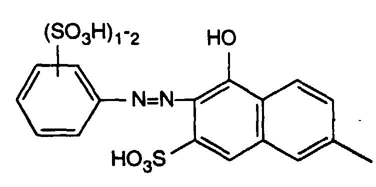 ist.

11. Verfahren gemäss Anspruch 3, dadurch gekennzeichnet, dass A₂ und A₃ je ein Rest der Formel 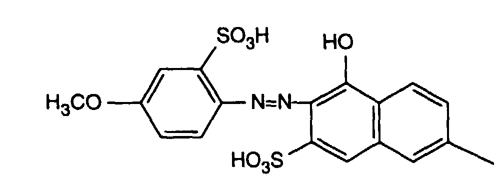 ist.

12. Verfahren gemäss Anspruch 3, dadurch gekennzeichnet, dass A₂ und A₃ je ein Rest der Formel 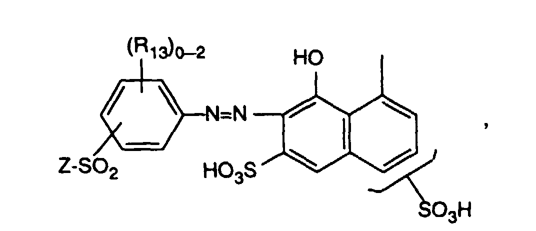 worin R₁₃ für 0 bis 2 Substituenten aus der Gruppe C₁-C₄-Alkyl, C₁-C₄-Alkoxy, Halogen, Carboxy und Sulfo steht; and Z β-Sulfatoäthyl, β-Thiosulfatoäthyl, β-Phosphatoäthyl, β-Acyloxyäthyl, β-Halogenäthyl or Vinyl ist.

13. Verfahren gemäss Anspruch 3, dadurch gekennzeichnet, dass A₂ und A₃ je ein Rest der Formel 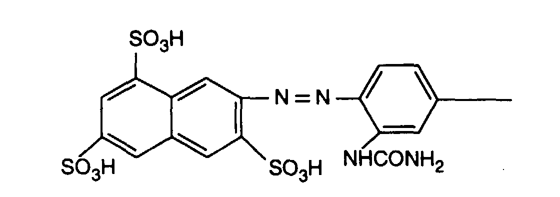 und B₁ Äthylen, 1,2- or 1,3-Propylen, n-Butylen, 1-Methyl-n-propylen, n-Hexylen or 2-Äthyl-n-butylen ist.

14. Verfahren gemäss Anspruch 3, dadurch gekennzeichnet, dass A₂ und A₃ je ein Rest der Formel 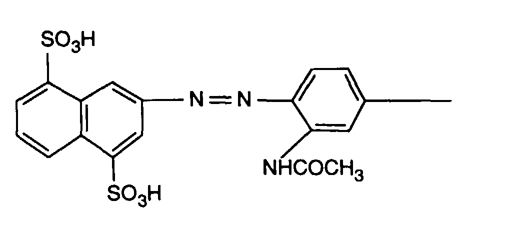 und B₁ Äthylen, 1,2- or 1,3-Propylen, n-Butylen, 1-Methyl-n-propylen, n-Hexylen or 2-Äthyl-n-butylen ist.

15. Verfahren zum Färben und Bedrucken von cellulosehaltigen Fasermaterialien mit Farbstoffen, dadurch gekennzeichnet, dass man gemäss einem der Ansprüche 1 bis 14 erhältliche Farbstoffe verwendet.

16. Verfahren gemäss Anspruch 15 zum Färben und Bedrucken von Baumwolle.

17. Farbstoffe der Formel 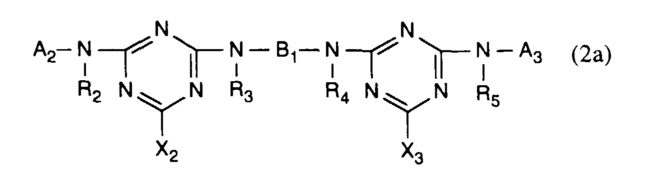
worin A₂ und A₃ unabhängig voneinander je der Rest eines Anthrachinon-, Phthalocyanin-, Formazan- oder Dioxazin-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

18. Farbstoffe der Formel 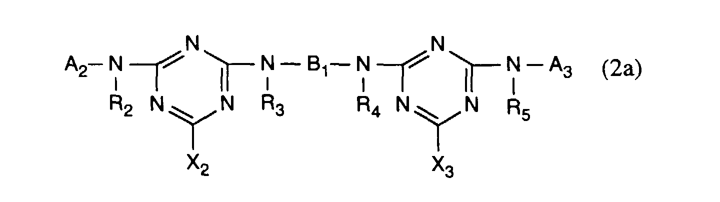
worin A₂ und A₃ unabhängig voneinander je der Rest eines Polyazo- oder Metallkomplexazo-Chromophors;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

19. Farbstoffe der Formel 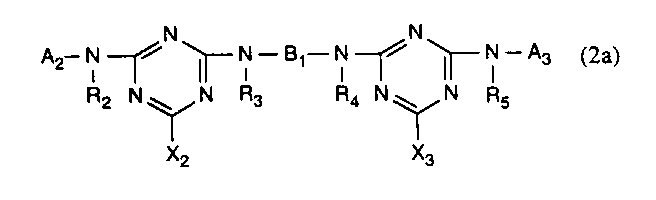 worin A₂ und A₃ unabhängig voneinander je der Rest eines Monoazo-Chromophors der Formel 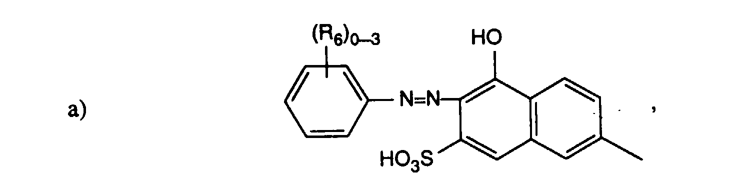 worin R₆ für 0 bis 3 Substituenten aus der Gruppe C₁-C₄-Alkyl, C₁-C₄-Alkoxy, Halogen, Carboxy und Sulfo steht, 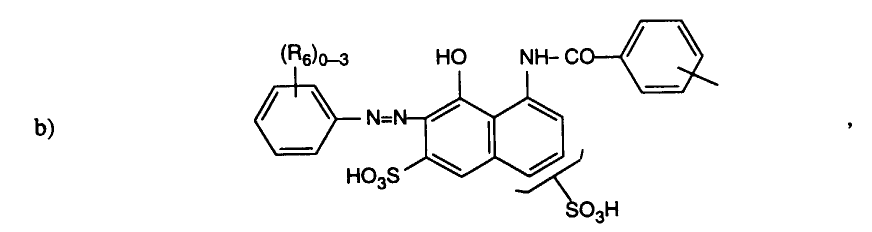 worin R₆ für 0 bis 3 Substituenten aus der Gruppe C₁-C₄-Alkyl, C₁-C₄-Alkoxy, Halogen, Carboxy und Sulfo steht, 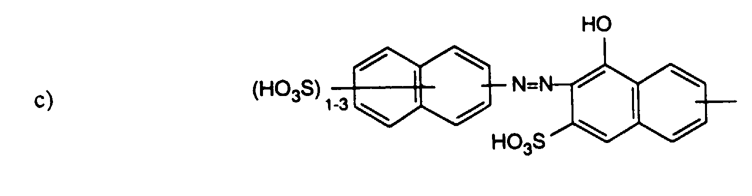 oder 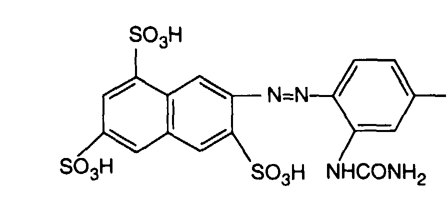 oder 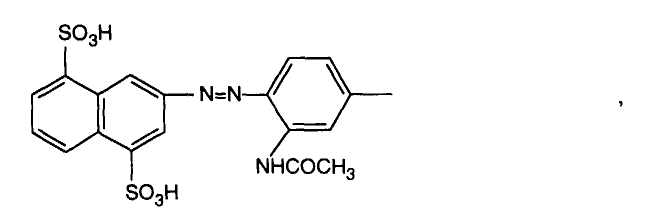 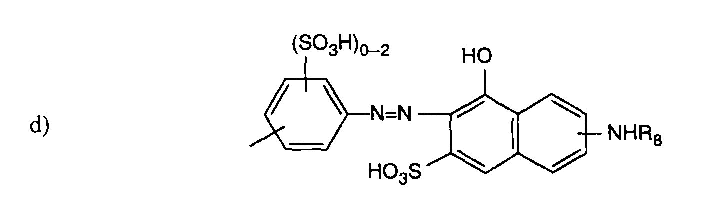 oder 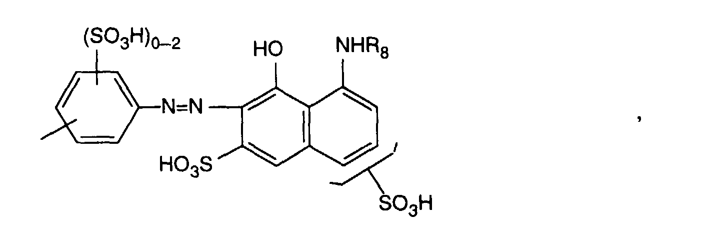 worin R₈ C₁-C₄-Alkanoyl oder Benzoyl ist, 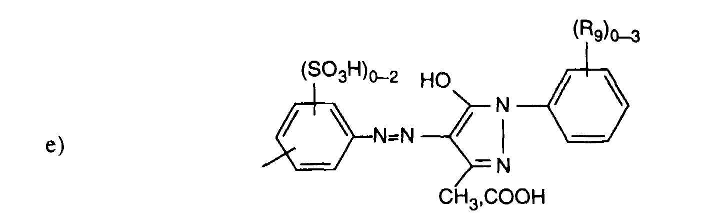 oder 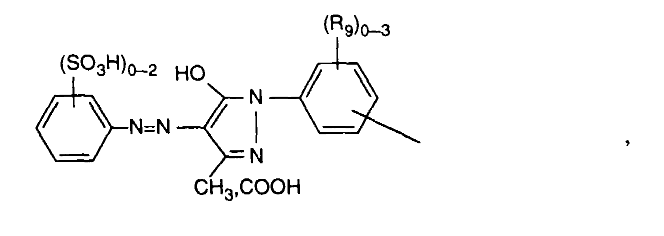 worin R₉ für 0 bis 3 Substituenten aus der Gruppe C₁-C₄-Alkyl, C₁-C₄-Alkoxy, Halogen, Carboxy und Sulfo steht, 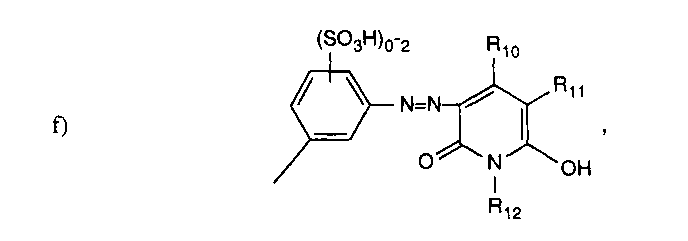 worin R₁₂ und R₁₀ unabhängig voneinander Wasserstoff, C₁-C₄-Alkyl oder Phenyl und R₁₁ Wasserstoff, Cyano, Carbamoyl oder Sulfomethyl sind, 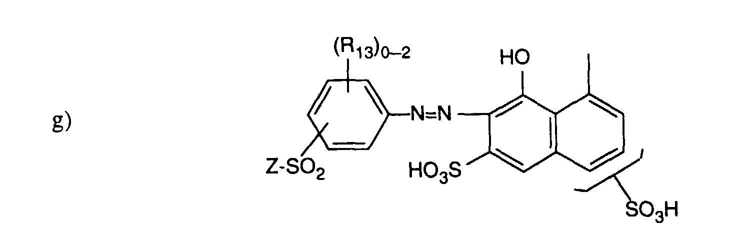 worin R₁₃ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl ist, oder 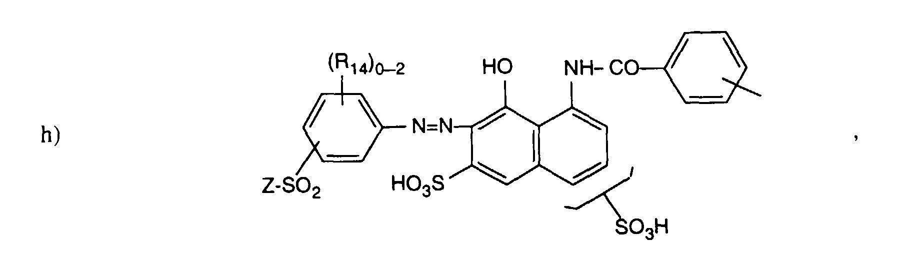
worin R₁₄ für 0 bis 2 Substituenten aus der Gruppe C₁-C₄-Alkyl, C₁-C₄-Alkoxy, Halogen, Carboxy und Sulfo steht und Z β-Sulfatoäthyl, β-Thiosulfatoäthyl, β-Phosphatoäthyl, β-Acyloxyäthyl, β-Halogenäthyl oder Vinyl bedeutet;
R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann;
B₁ ein geradkettiger- oder verzweigter C₁-C₁₀-Alkylenrest oder ein gegebenenfalls durch C₁-C₄-Alkyl substituierter Cyclohexylenrest; und
X₂ und X₃ Fluor
sind.

## Claims (Claims for the following Contracting State(s): BE, CH, LI, DE, FR, GB, IT)

1. A dye of the formula 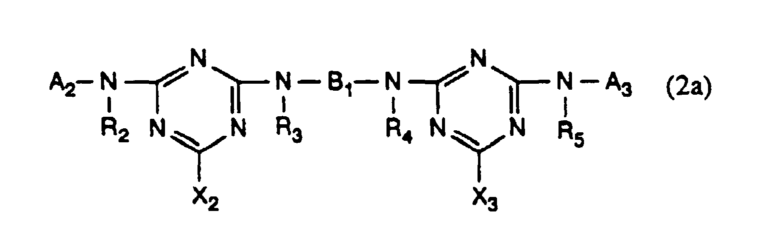
in which A₂ and A₃ independently of one another are each the radical of an anthraquinone, phthalocyanine, formazan or dioxazine chromophore;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl substituted cyclohexylene radical; and
X₂ and X₃ are fluoro.

2. A dye of the formula 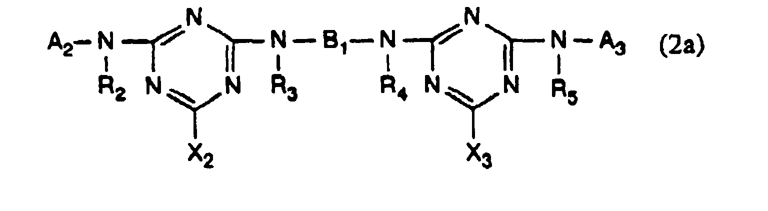
in which A₂ and A₃ independently of one another are each the radical of a polyazo or metal complex azo chromophore;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl substituted cyclohexylene radical; and
X₂ and X3 are fluoro.

3. A dye of the formula 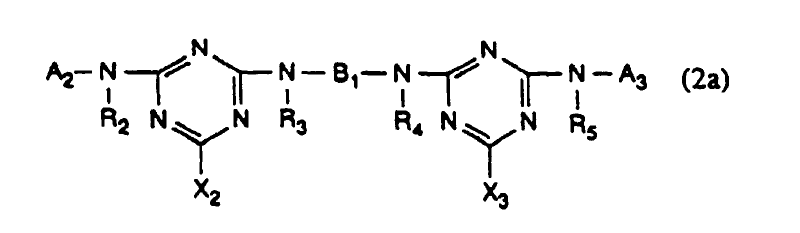 in which A₂ and A₃ independently of one another are each the radical of a monoazo chromophore of the formula 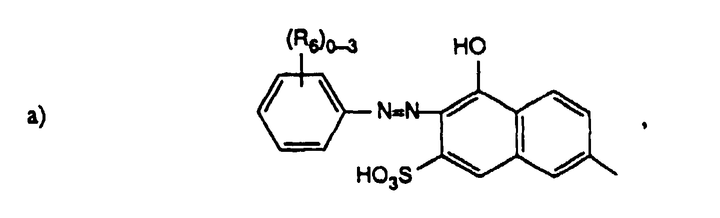 in which R₆ is 0 to 3 substituents from the group C₁-C₄alkyl, C₁-C₄alkoxy, halogen, carboxyl and sulfo, 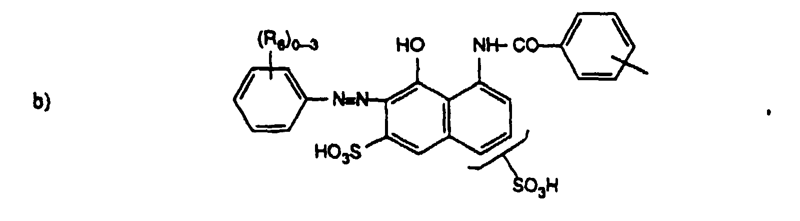 in which R₆ is 0 to 3 substituents from the group C₁-C₄alkyl, C₁-C₄alkoxy, halogen, carboxyl and sulfo, 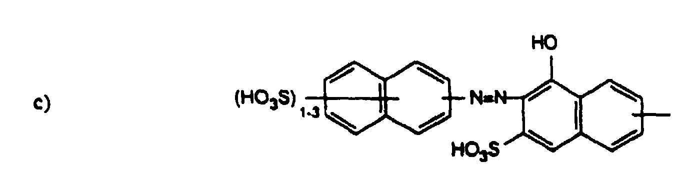 or 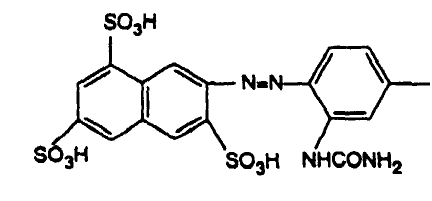 or 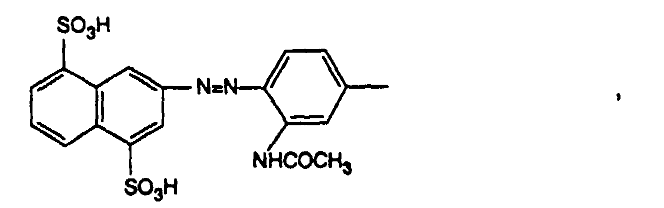 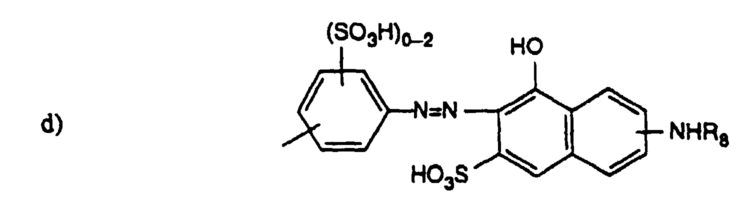 or 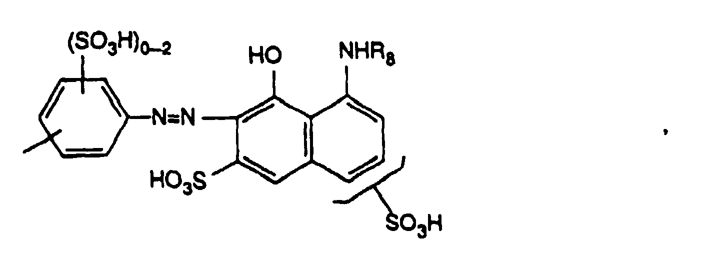 in which R₈ is C₁-C₄alkanoyl or benzoyl, 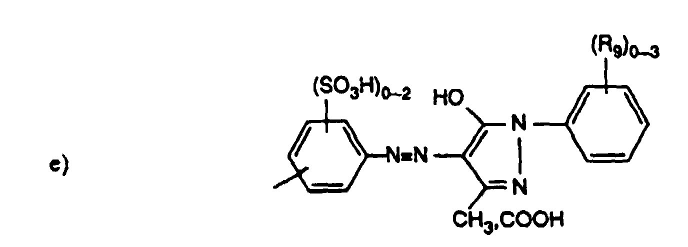 or 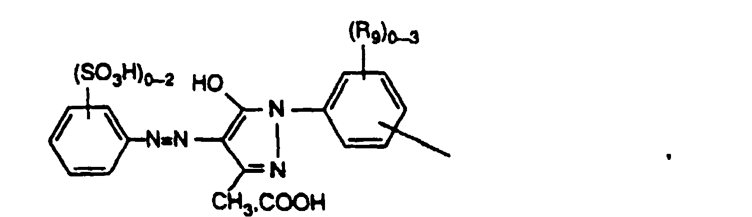 in which R₉ is 0 to 3 substituents from the group C₁-C₄alkyl, C₁-C₄alkoxy, halogen, carboxyl and sulfo, 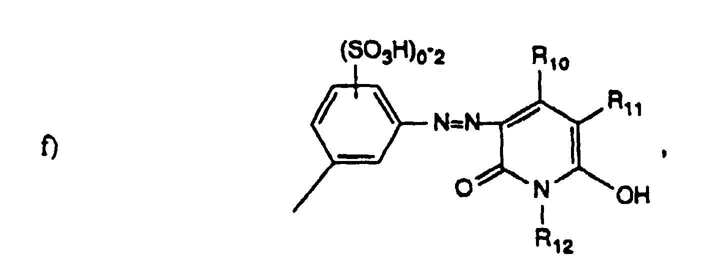 in which R₁₂ and R₁₀ independently of one another are hydrogen, C₁-C₄alkyl or phenyl and R₁₁ is hydrogen, cyano, carbamoyl or sulfomethyl, 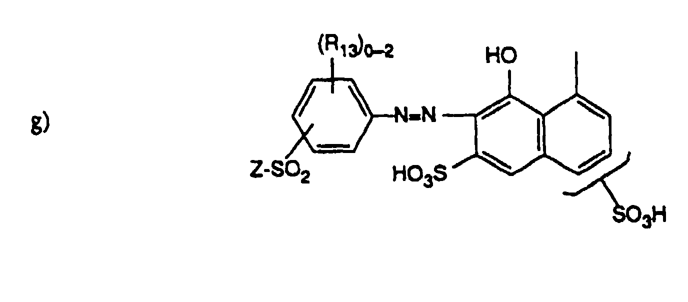 in which R₁₃ is 0 to 2 substituents from the group C₁-C₄alkyl, C₁-C₄alkoxy, halogen, carboxyl and sulfo and Z is β-sulfatoethyl, β-thiosulfatoethyl, β-phosphatoethyl, β-acyloxyethyl, β-haloethyl or vinyl, or 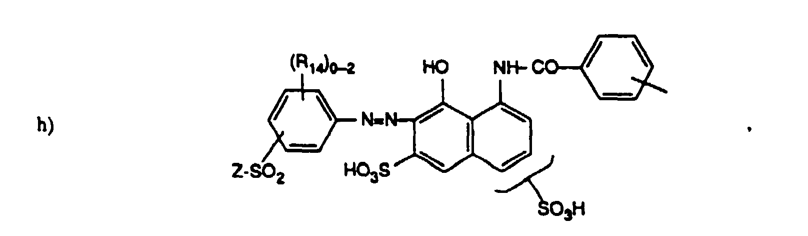
in which R₁₄ is 0 to 2 substituents from the group C₁-C₄alkyl, C₁-C₄alkoxy, halogen, carboxyl and sulfo and Z is β-sulfatoethyl, β-thiosulfatoethyl, β-phosphatoethyl, β-acyloxyethyl, β-haloethyl or vinyl;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl-substituted cyclohexylene radical; and
X₂ and X₃ are fluoro.

4. A dye according to one of claims 1 to 3, wherein B₁ is -(CH₂)₂₋₆- or unsubstituted or C₁-C₄alkyl-substituted cyclohexylene.

5. A dye according to one of claims 1 to 4, wherein R₂, R₃, R₄ and R₅ independently of one another are hydrogen, methyl or ethyl.

6. A dye according to one of claims 1 to 5, wherein the radicals A₂ and A₃ are identical.

7. A dye according to claim 1, wherein A₂ and A₃ are each a radical of the formula 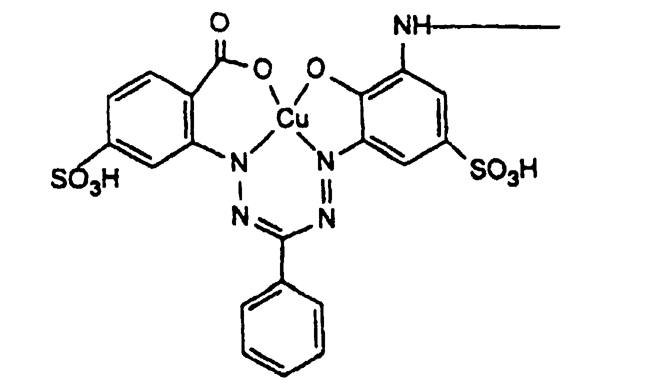 and B₁ is ethylene, 1,2- or 1,3-propylene, n-butylene, 1-methyl-n-propylene, n-hexylene or 2-ethyl-n-butylene.

8. A dye according to claim 1, wherein A₂ and A₃ are each a radical of the formula 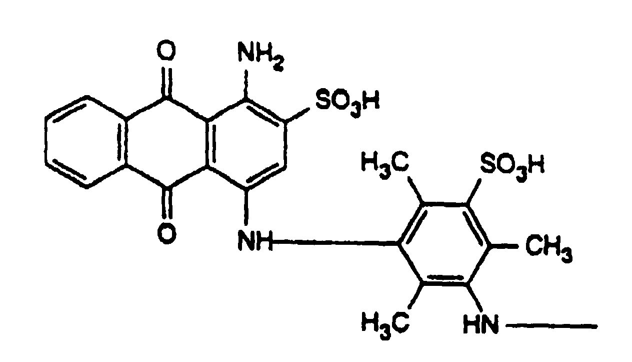 and B₁ is ethylene, 1,2- or 1,3-propylene, n-butylene, 1-methyl-n-propylene, n-hexylene or 2-ethyl-n-butylene.

9. A dye according to claim 3, wherein A₂ and A₃ are each a radical of the formula 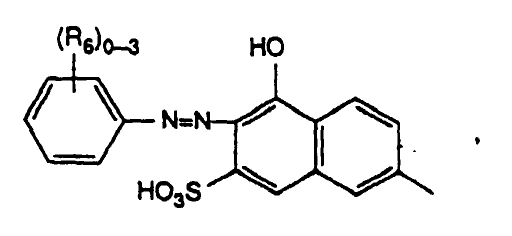 in which R₆ is 0 to 3 substituents from the group C₁-C₄alkyl, C₁-C₄alkoxy, halogen, carboxyl and sulfo, and B₁ is -(CH₂)₂₋₆- or unsubstituted or C₁-C₄alkyl-substituted cyclohexylene.

10. A dye according to claim 3, wherein A₂ and A₃ are each a radical of the formula

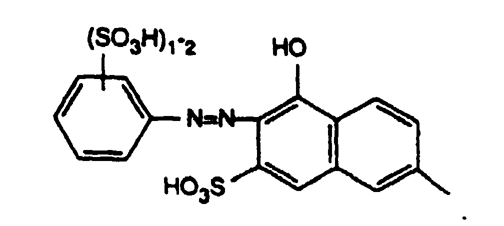

11. A dye according to claim 3, wherein A₂ and A₃ are each a radical of the formula

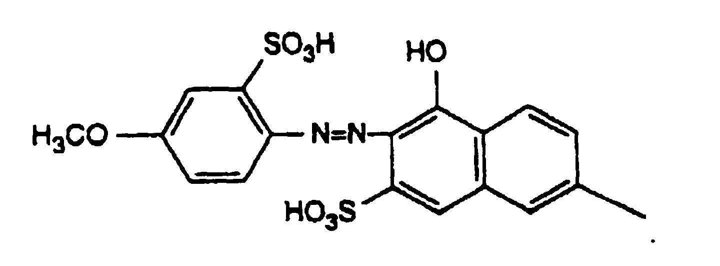

12. A dye according to claim 3, wherein A₂ and A₃ are each a radical of the formula 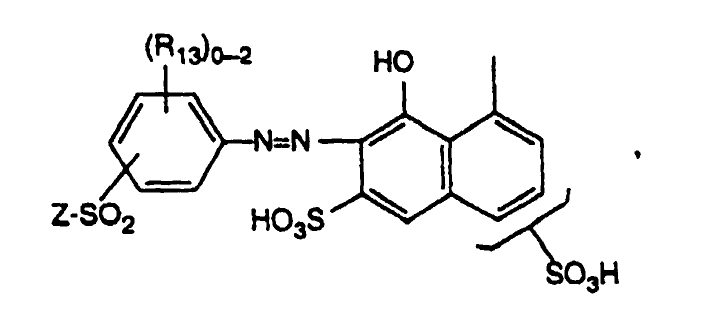 in which R₁₃ is 0 to 2 substituents from the group C₁-C₄alkyl, C₁-C₄alkoxy, halogen, carboxyl and sulfo; and Z is β-sulfatoethyl, β-thiosulfatoethyl, β-phosphatoethyl, β-acyloxyethyl, β-haloethyl or vinyl.

13. A dye according to claim 3, wherein A₂ and A₃ are each a radical of the formula 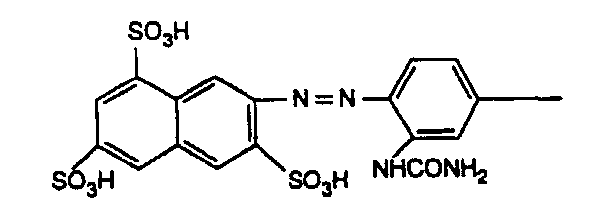 and B₁ is ethylene, 1,2- or 1,3-propylene, n-butylene, 1-methyl-n-propylene, n-hexylene or 2-ethyl-n-butylene.

14. A dye according to claim 3, wherein A₂ and A₃ are each a radical of the formula 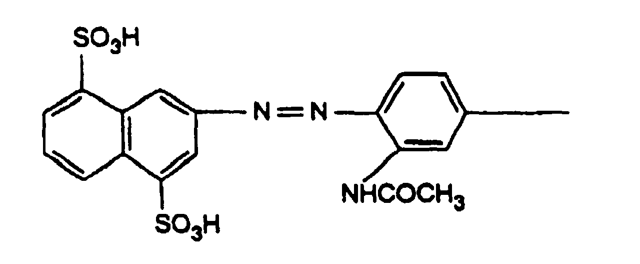 and B₁ is ethylene, 1,2- or 1,3-propylene, n-butylene, 1-methyl-n-propylene, n-hexylene or 2-ethyl-n-butylene.

15. A process for preparing a dye of the formula (2a) according to one of claims 1 to 3, which comprises reacting two equivalents of an organic dye of the formula 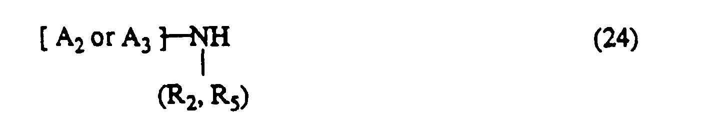 or a dye precursor, at least one equivalent of fluorotriazine and at least one equivalent of a diamine of the formula 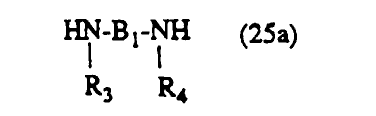 with one another in any desired order, A₂, A₃, R₂, R₃, R₄, R₅ and B₁ being as defined in one of claims 1 to 3 in each case, or, in the case of the use of dye precursors, converting the resulting intermediates into the desired dyes and subsequently, if desired, carrying out a further conversion reaction.

16. A method of dyeing or printing cellulosic fibre materials with dyes, which comprises using one or more dyes according to one of claims 1 to 14.

17. A method according to claim 16 of dyeing and printing cotton.

## Claims (Claims for the following Contracting State(s): ES)

1. A process for preparing a dye of the formula 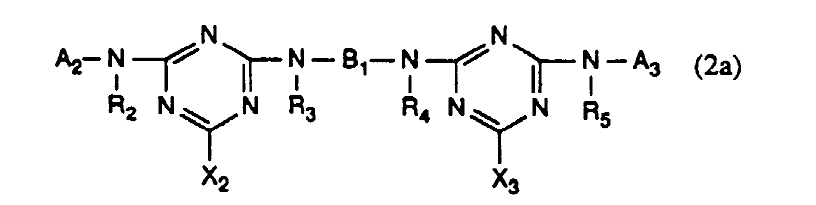
in which A₂ and A₃ independently of one another are each the radical of an anthraquinone, phthalocyanine, formazan or dioxazine chromophore;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl substituted cyclohexylene radical; and
X₂ and X₃ are fluoro,
which comprises reacting two equivalents of an organic dye of the formula 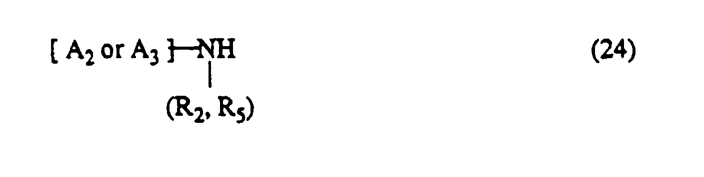 or a dye precursor, at least one equivalent of an s-triazine and at least one equivalent of a diamine of the formula 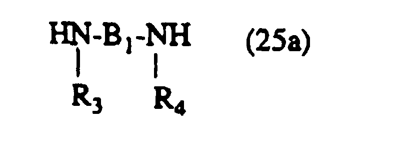 with one another in any desired order, A₂, A₃, R₂, R₃, R₄, R₅ and B₁ being as defined above, or, in the case of the use of dye precursors, converting the resulting intermediates into the desired dyes and subsequently, if desired, carrying out a further conversion reaction.

2. A process for preparing a dye of the formula 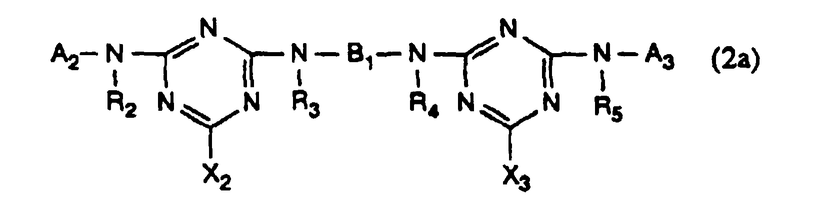
in which A₂ and A₃ independently of one another are each the radical of a polyazo or metal complex azo chromophore;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl substituted cyclohexylene radical; and
X₂ and X₃ are fluoro,
which comprises reacting two equivalents of an organic dye of the formula 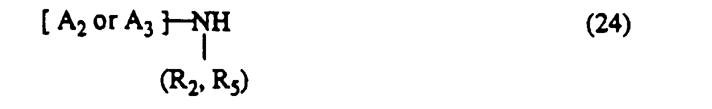 or a dye precursor, at least one equivalent of an s-triazine and at least one equivalent of a diamine of the formula 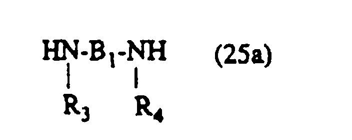 with one another in any desired order, A₂, A₃, R₂, R₃, R₄, R₅ and B₁ being as defined above, or, in the case of the use of dye precursors, converting the resulting intermediates into the desired dyes and subsequently, if desired, carrying out a further conversion reaction.

3. A process for preparing a dye of the formula 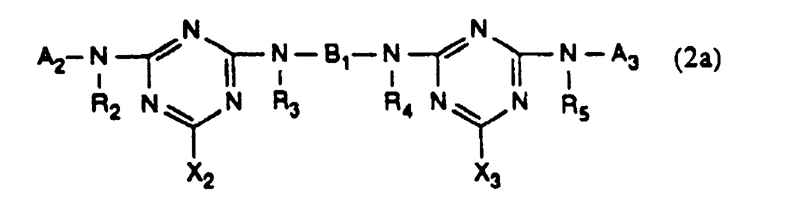 in which A₂ and A₃ independently of one another are each the radical of a monoazo chromophore of the formula 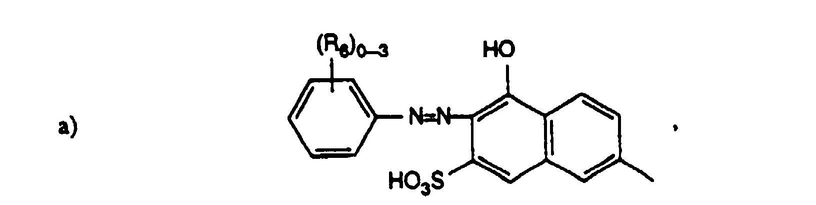 in which R₆ is 0 to 3 substituents from the group C₁-C₄alkyl, C₁-C₄alkoxy, halogen, carboxyl and sulfo, 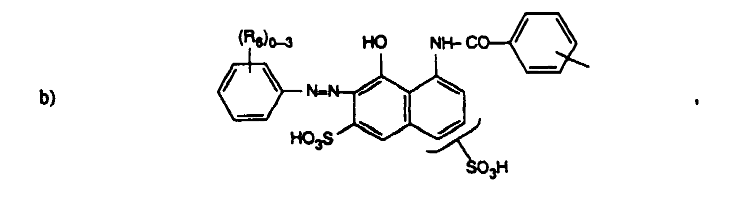 in which R₆ is 0 to 3 substituents from the group C₁-C₄alkyl, C₁-C₄alkoxy, halogen, carboxyl and sulfo, 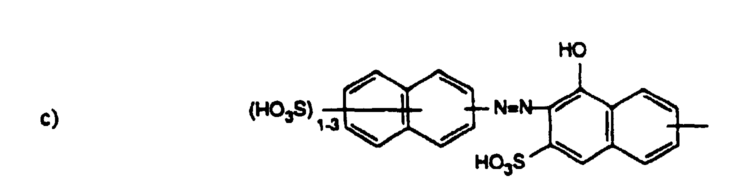 or 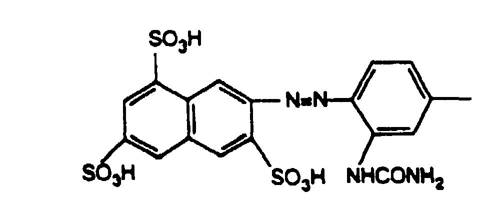 or 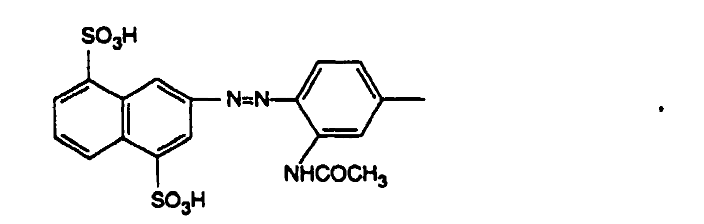 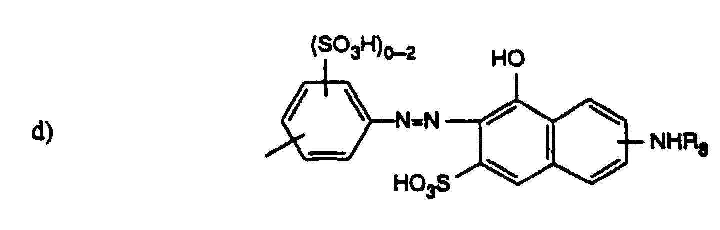 or 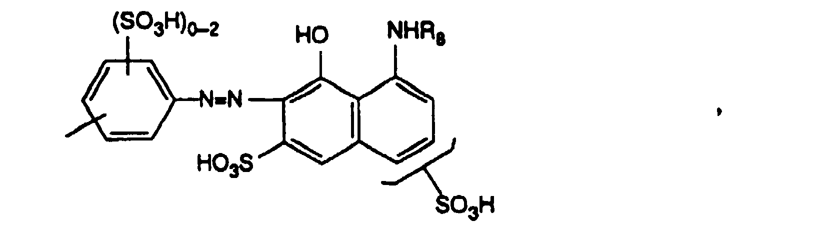 in which R₈ is C₁-C₄alkanoyl or benzoyl, 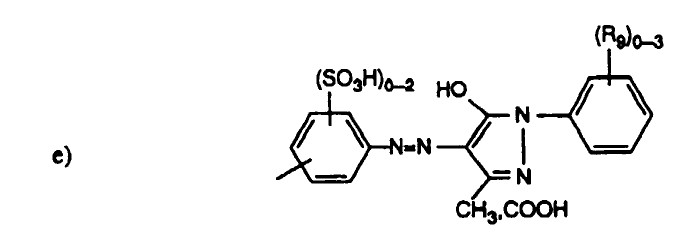 or 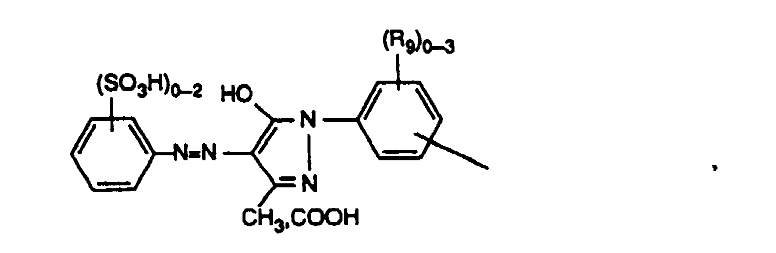 in which R₉ is 0 to 3 substituents from the group C₁-C₄alkyl, C₁-C₄alkoxy, halogen, carboxyl and sulfo, 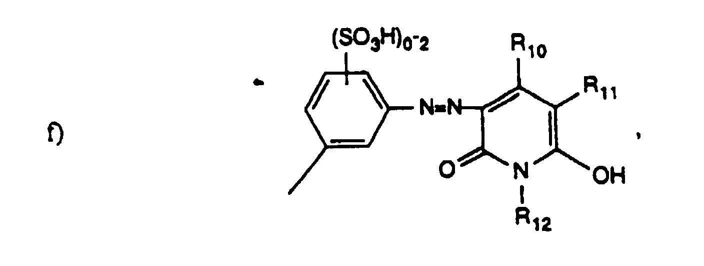 in which R₁₂ and R₁₀ independently of one another are hydrogen, C₁-C₄alkyl or phenyl and R₁₁ is hydrogen, cyano, carbamoyl or sulfomethyl, 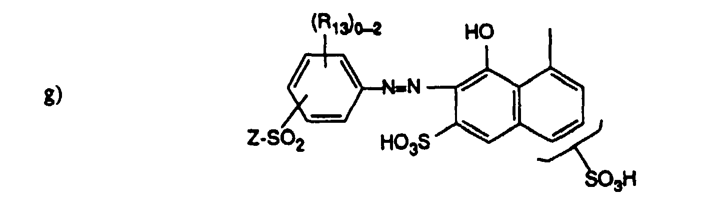 in which R₁₃ is 0 to 2 substituents from the group C₁-C₄alkyl, C₁-C₄alkoxy, halogen, carboxyl and sulfo and Z is β-sulfatoethyl, β-thiosulfatoethyl, β-phosphatoethyl, β-acyloxyethyl, β-haloethyl or vinyl, or 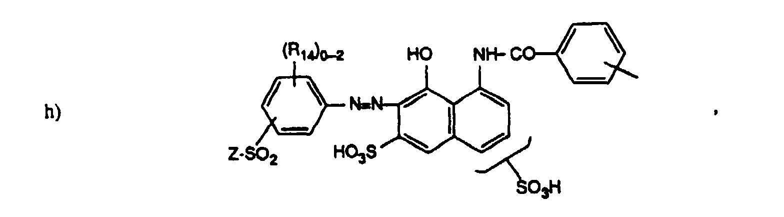
in which R₁₄ is 0 to 2 substituents from the group C₁-C₄alkyl, C₁-C₄alkoxy, halogen, carboxyl and sulfo and Z is β-sulfatoethyl, β-thiosulfatoethyl, β-phosphatoethyl, β-acyloxyethyl, β-haloethyl or vinyl;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl-substituted cyclohexylene radical; and
X₂ and X₃ are fluoro,
which comprises reacting two equivalents of an organic dye of the formula 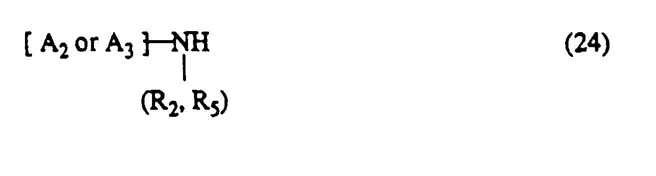 or a dye precursor, at least one equivalent of an s-triazine and at least one equivalent of a diamine of the formula 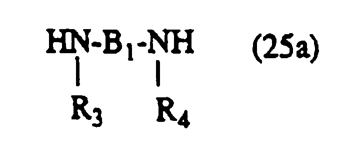 with one another in any desired order, A₂, A₃, R₂, R₃, R₄, R₅ and B₁ being as defined above, or, in the case of the use of dye precursors, converting the resulting intermediates into the desired dyes and subsequently, if desired, carrying out a further conversion reaction.

4. A process according to one of claims 1 to 3 for preparing a dye of the formula (2a) wherein B₁ is -(CH₂)₂₋₆- or unsubstituted or C₁-C₄alkyl-substituted cyclohexylene.

5. A process according to one of claims 1 to 4, wherein R₂, R₃, R₄ and R₅ independently of one another are hydrogen, methyl or ethyl.

6. A process according to one of claims 1 to 5 for preparing a dye of the formula (2a), wherein the radicals A₂ and A₃ are identical.

7. A process according to claim 1, wherein A₂ and A₃ are each a radical of the formula 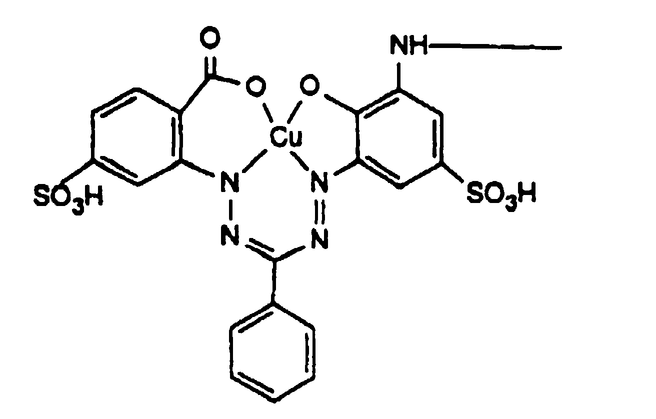 and B₁ is ethylene, 1,2- or 1,3-propylene, n-butylene, 1-methyl-n-propylene, n-hexylene or 2-ethyl-n-butylene.

8. A process according to claim 1, wherein A₂ and A₃ are each a radical of the formula 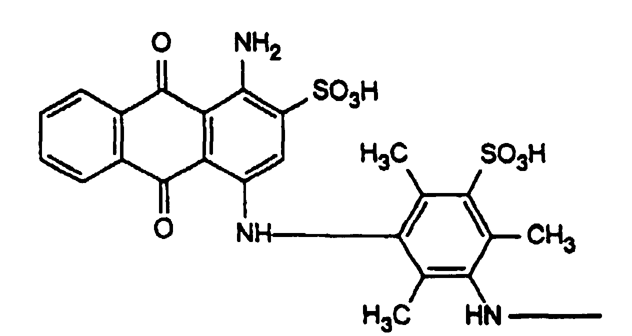 and B₁ is ethylene, 1,2- or 1,3-propylene, n-butylene, 1-methyl-n-propylene, n-hexylene or 2-ethyl-n-butylene.

9. A process according to claim 3, wherein A₂ and A₃ are each a radical of the formula 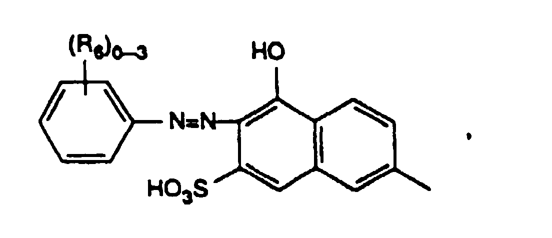 in which R₆ is 0 to 3 substituents from the group C₁-C₄alkyl, C₁-C₄alkoxy, halogen, carboxyl and sulfo, and B₁ is -(CH₂)₂₋₆- or unsubstituted or C₁-C₄alkyl-substituted cyclohexylene.

10. A process according to claim 3, wherein A₂ and A₃ are each a radical of the formula

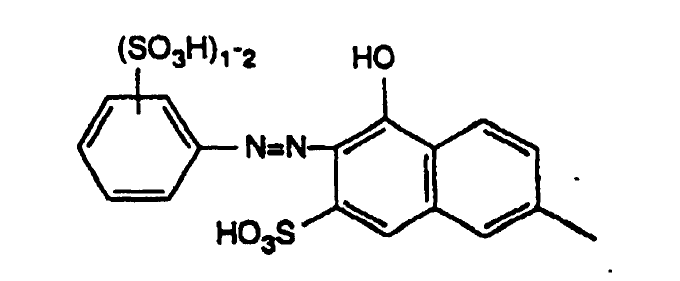

11. A process according to claim 3, wherein A₂ and A₃ are each a radical of the formula

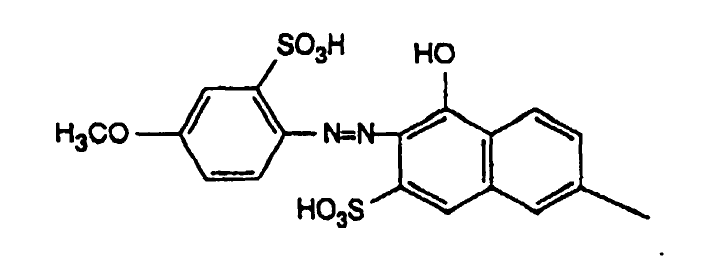

12. A process according to claim 3, wherein A₂ and A₃ are each a radical of the formula 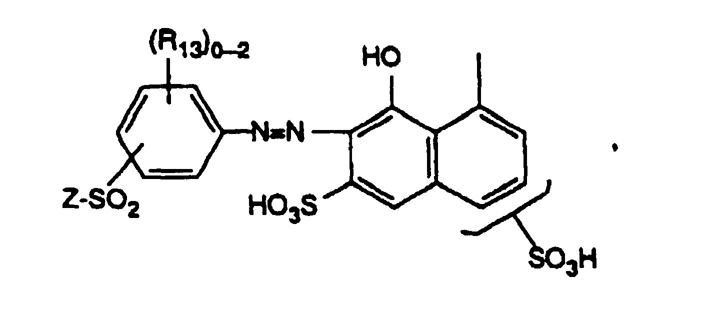 in which R₁₃ is 0 to 2 substituents from the group C₁-C₄alkyl, C₁-C₄alkoxy, halogen, carboxyl and sulfo; and Z is β-sulfatoethyl, β-thiosulfatoethyl, β-phosphatoethyl, β-acyloxyethyl, β-haloethyl or vinyl.

13. A process according to claim 3, wherein A₂ and A₃ are each a radical of the formula 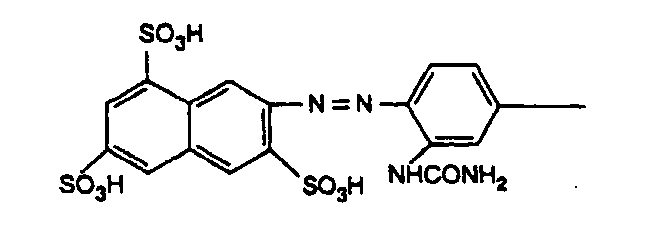 and B₁ is ethylene, 1,2- or 1,3-propylene, n-butylene, 1-methyl-n-propylene, n-hexylene or 2-ethyl-n-butylene.

14. A process according to claim 3, wherein A₂ and A₃ are each a radical of the formula 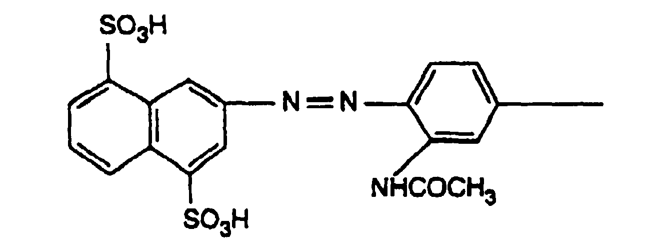 and B₁ is ethylene, 1,2- or 1,3-propylene, n-butylene, 1-methyl-n-propylene, n-hexylene or 2-ethyl-n-butylene.

15. A method of dyeing or printing cellulosic fibre materials with dyes, which comprises using one or more dyes obtainable according to one of claims 1 to 14.

16. A method according to claim 15 of dyeing and printing cotton.

17. A dye of the formula 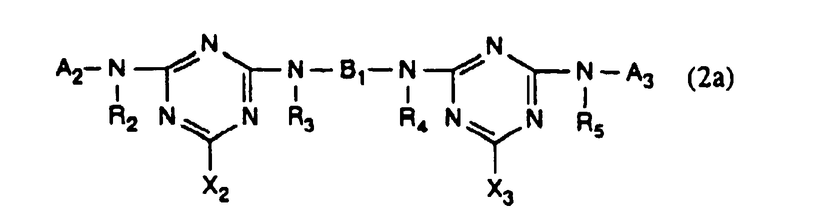
in which A₂ and A₃ independently of one another are each the radical of an anthraquinone, phthalocyanine, formazan or dioxazine chromophore;
R₂, R₃, R₄ and Rs independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl substituted cyclohexylene radical; and
X₂ and X₃ are fluoro.

18. A dye of the formula 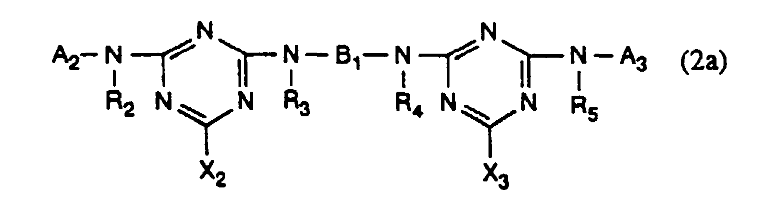
in which A₂ and A₃ independently of one another are each the radical of a polyazo or metal complex azo chromophore;
R₂, R₃, R₄ and R₅ independently of one another are hydrogen or C₁-C₄alkyl which may be substituted by halogen, hydroxyl, cyano, C₁-C₄alkoxy, C₁-C₄alkoxycarbonyl, carboxyl, sulfamoyl, sulfo or sulfato;
B₁ is a straight-chain or branched C₁-C₁₀alkylene radical or an unsubstituted or C₁-C₄alkyl substituted cyclohexylene radical; and
X₂ and X₃ are fluoro.

19. A dye of the formula 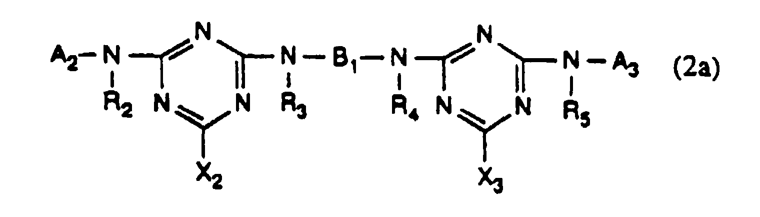 in which A₂ and A₃ independently of one another are each the radical of a monoazo chromophore of the formula 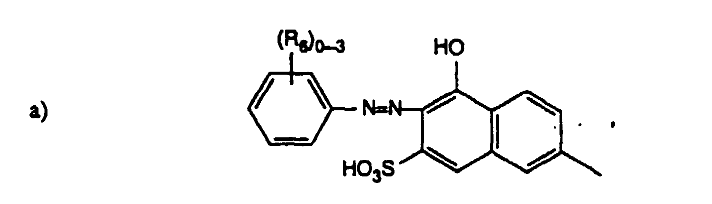 in which R₆ is 0 to 3 substituents from the group C₁-C₄alkyl, C₁-C₄alkoxy, halogen, carboxyl and sulfo, 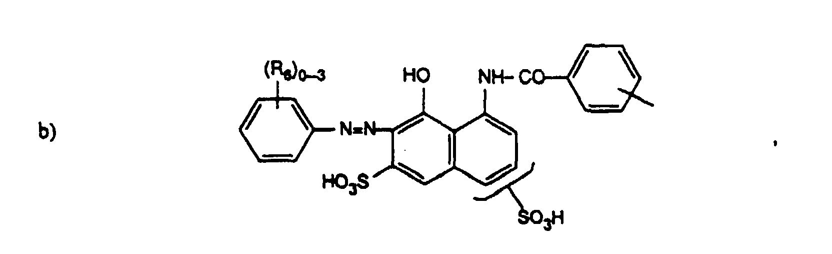 in which R₆ is 0 to 3 substituents from the group C₁-C₄alkyl, C₁-C₄alkoxy, halogen, carboxyl and sulfo, 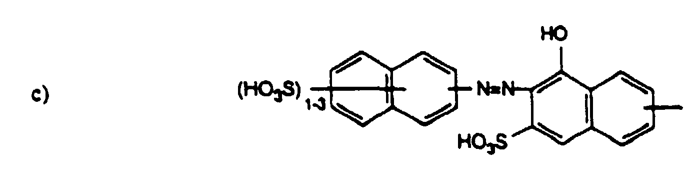 or 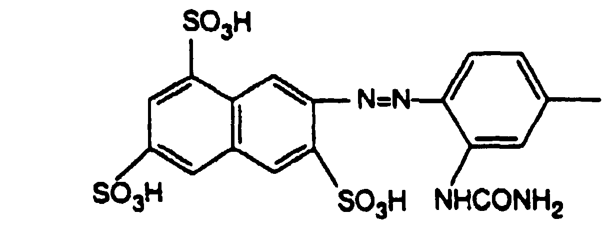 or 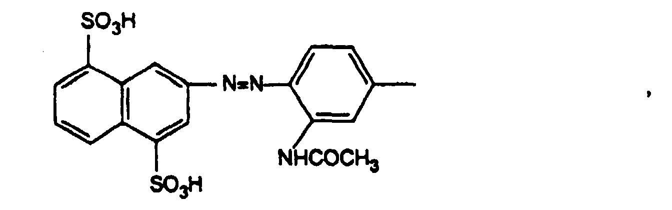 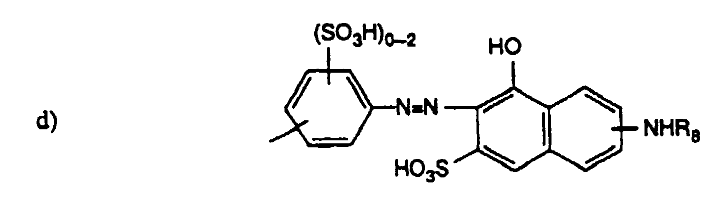 or 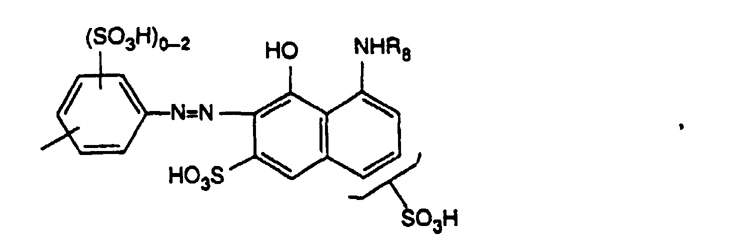 in which R₈ is C₁-C₄alkanoyl or benzoyl, 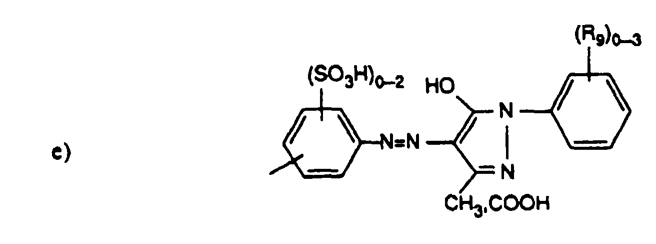 or 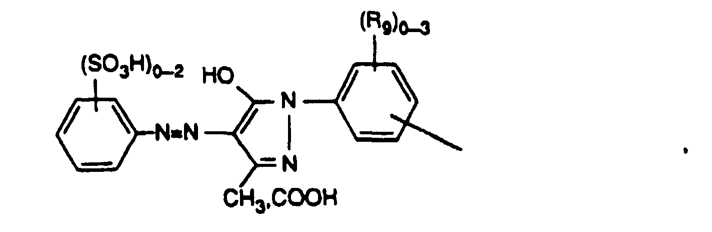 in which R₉ is 0 to 3 substituents from the group C₁-C₄alkyl, C₁-C₄alkoxy, halogen, carboxyl and sulfo, 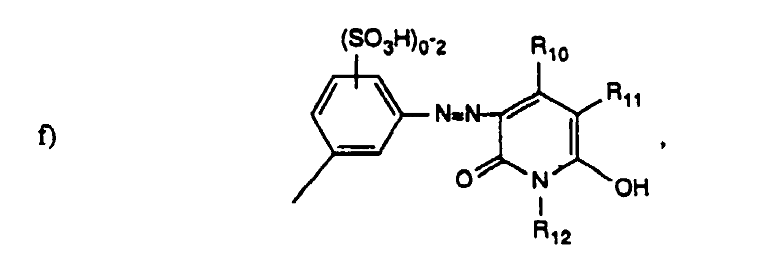 in which R₁₂ and R₁₀ independently of one another are hydrogen, C₁-C₄alkyl or phenyl and R₁₁ is hydrogen, cyano, carbamoyl or sulfomethyl, 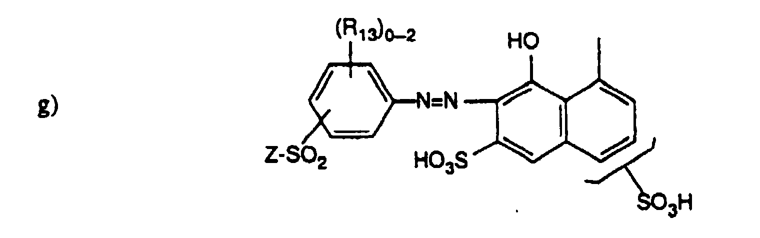 in which R₁₃ is 0 to 2 substituents from the group C₁-C₄alkyl, C₁-C₄alkoxy, halogen, carboxyl and sulfo and Z is β-sulfatoethyl, β-thiosulfatoethyl, β-phosphatoethyl, β-acyloxyethyl, β-haloethyl or vinyl, or 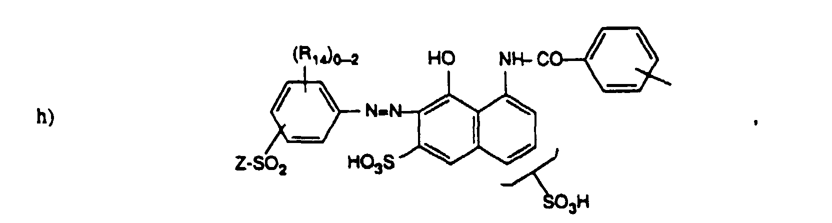
in which R₁₄ is 0 to 2 substituents from the group C₁-C₄alkyl, C₁-C₄alkoxy, halogen, carboxyl and sulfo and Z is β-sulfatoethyl, β-thiosulfatoethyl, β-phosphatoethyl, β-acyloxyethyl, β-haloethyl or vinyl;
R₂, R₃, R₄ and R₅ independently of one another are hydrogen or C₁-C₄alkyl which may be substituted by halogen, hydroxyl, cyano, C₁-C₄alkoxy, C₁-C₄alkoxy-carbonyl, carboxyl, sulfamoyl, sulfo or sulfato;
B₁ is a straight-chain or branched C₁-C₁₀alkylene radical or an unsubstituted or C₁-C₄alkyl-substituted cyclohexylene radical; and
X₂ and X₃ are fluoro.

## Revendications (Revendications pour l'(les) Etat(s) contractant(s) suivant(s): BE, CH, LI, DE, FR, GB, IT)

1. Colorants de formule 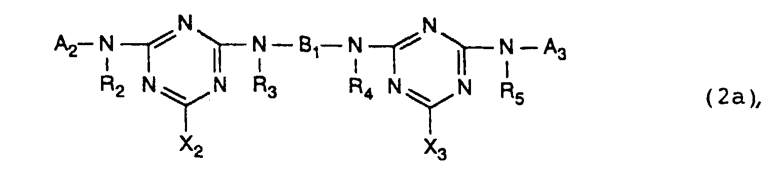 où
A₂ et A₃ représentent chacun, indépendamment l'un de l'autre, le reste d'un chromophore du type anthraquinone, phtalocyanine, formazane ou dioxazine ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor.

2. Colorants de formule 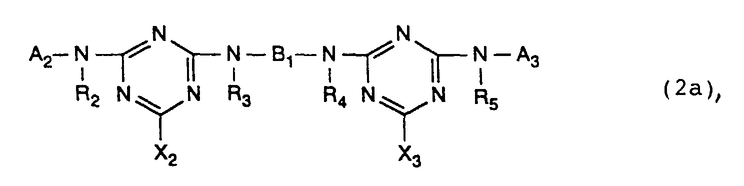 où
A₂ et A₃ représentent chacun, indépendamment l'un de l'autre, le reste d'un chromophore du type polyazoïque ou complexe métallazoïque ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor.

3. Colorants de formule 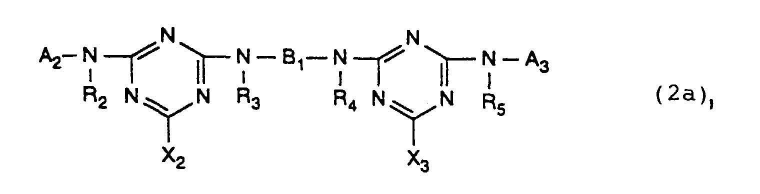 où
A₂ et A₃ représentent chacun, indépendamment l'un de l'autre, le reste d'un chromophore monoazoïque de formule 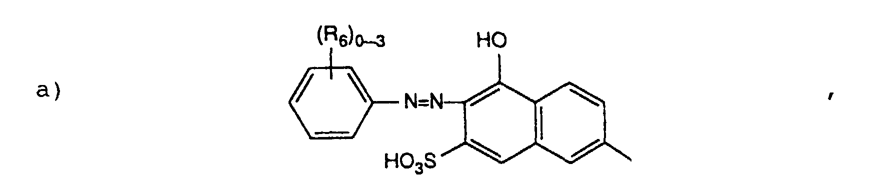
où
R₆ représente 0 à 3 substituants pris parmi les groupes alkyle en C₁-C₄, alkoxy en C₁-C₄, halogène, carboxy ou sulfo, 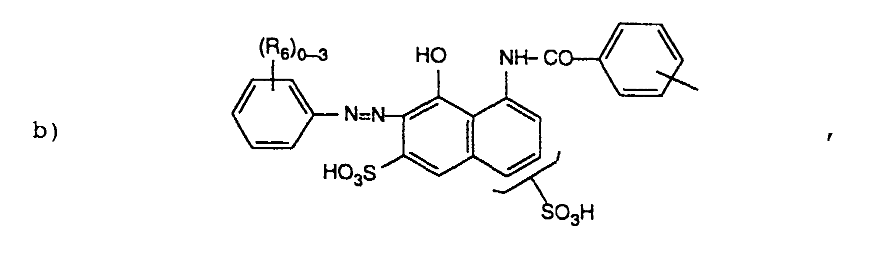
où
R₆ représente 0 à 3 substituants pris parmi les groupes alkyle en C₁-C₄, alkoxy en C₁-C₄, halogène, carboxy ou sulfo, 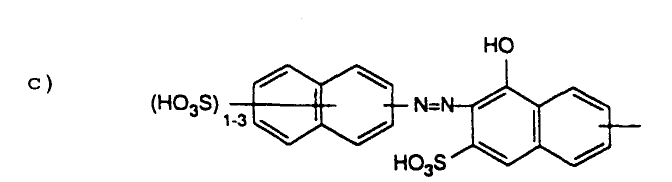
ou 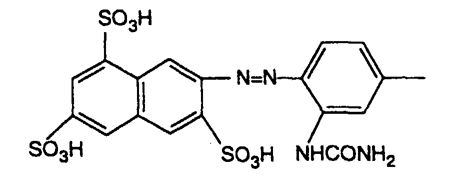 ou 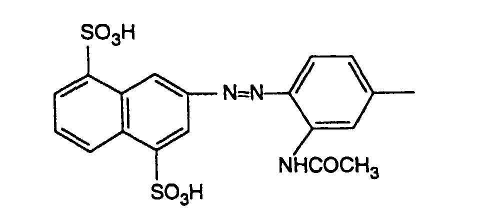 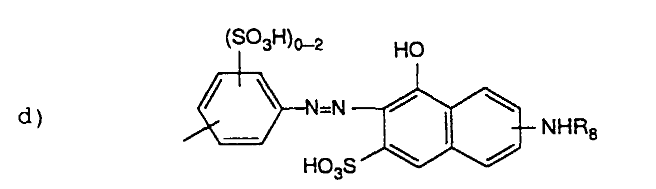 ou 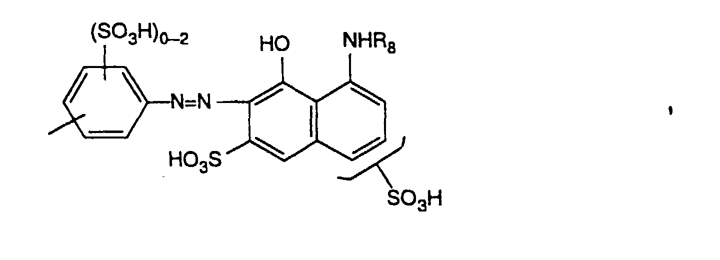 où
R₈ représente un groupe alcanoyle en C₁-C₄ ou benzoyle, 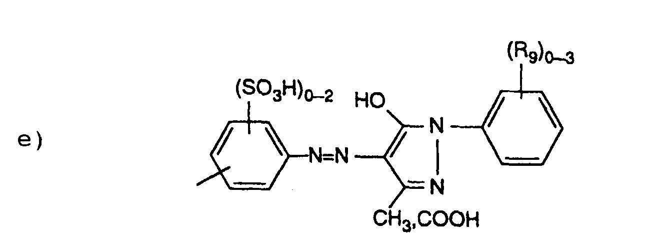
ou 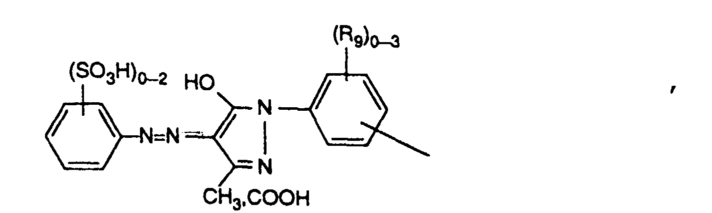 où
R₉ représente 0 à 3 substituants pris parmi les groupes alkyle en C₁-C₄, alkoxy en C₁-C₄, halogène, carboxy ou sulfo, 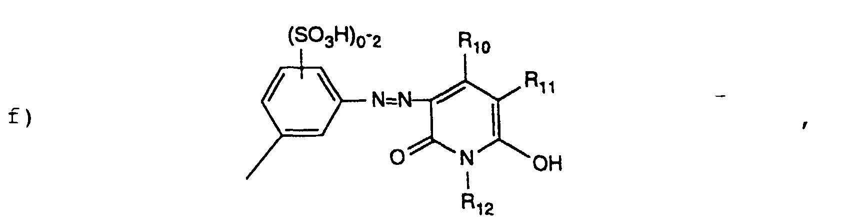
où
R₁₂ et R₁₀ représentent, indépendamment l'un de l'autre, des atomes d'hydrogène, des groupes alkyle en C₁-C₄ ou phényle et
R₁₁ représente un atome d'hydrogène, des groupes cyano, carbamoyle ou sulfométhyle, 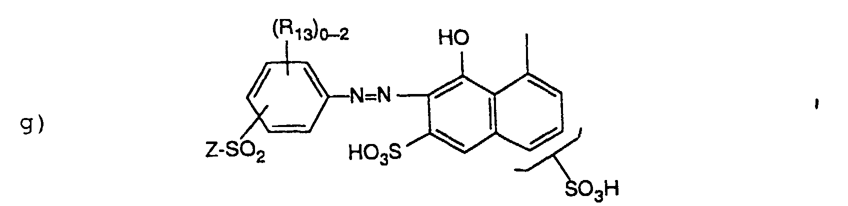
où
R₁₃ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoéthyle, β-acyloxyéthyle, β-halogénoéthyle ou vinyle, ou 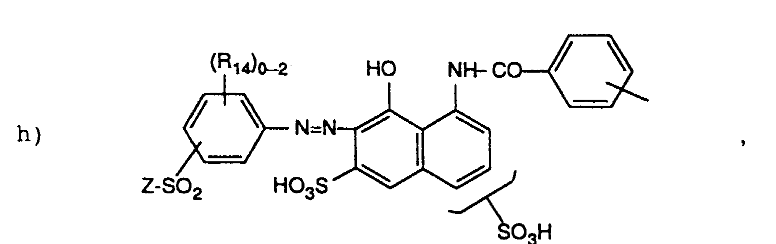
où
R₁₄ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoéthyle, β-acyloxyéthyle, β-halogénoéthyle ou vinyle ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor.

4. Colorants selon l'une des revendications 1 à 3, caractérisés en ce que B₁ représente un groupe 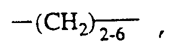 éventuellement un groupe cyclohexylène substitué par des substituants alkyle en C₁-C₄.

5. Colorants selon l'une des revendications 1 à 4, caractérisés en ce que R₂, R₃, R₄ et R₅ représentent, indépendamment les uns des autres, des atomes d'hydrogène, des groupes méthyle ou éthyle.

6. Colorants selon l'une des revendications 1 à 5, caractérisés en ce que les restes A₂ et A₃ sont identiques.

7. Colorants selon la revendication 1, caractérisés en ce que en ce que A₂ et A₃ représentent chacun un reste de formule 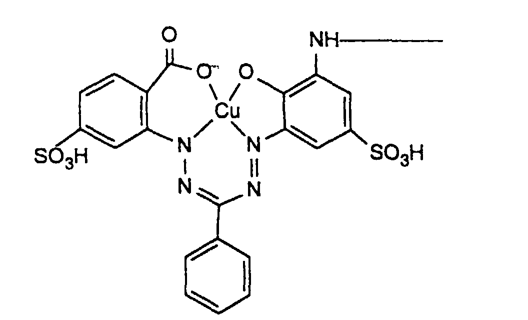 et B₁ représente des groupes éthylène, 1,2- ou 1,3-propylène, n-butylène, 1-méthyl-n-propylène, n-hexylène ou 2-éthyl-n-butylène.

8. Colorants selon la revendication 1, caractérisés en ce que A₂ et A₃ représentent chacun un reste de formule 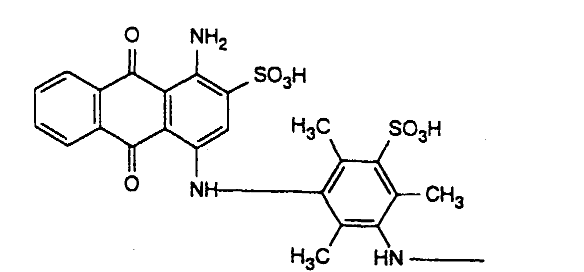 et B₁ représente des groupes éthylène ou 1,3-propylène, n-butylène, 1-méthyl-n-propylène, n-hexylène ou 2-éthyl-n-butylène.

9. Colorants selon la revendication 3, caractérisés en ce que A₂ et A₃ représentent chacun un reste de formule 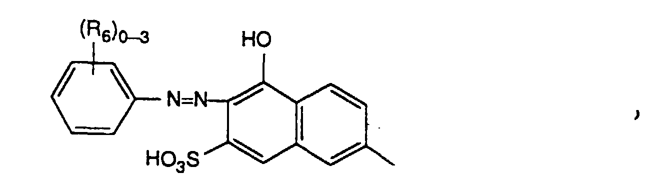 où
R₆ représente 0 à 3 substituants pris parmi les groupes alkyle en C₁-C₄, alkoxy en C₁-C₄, halogène, carboxy ou sulfo, et
B₁ représente un groupe, éventuellement un groupe cyclohexylène substitué par des substituants alkyle en C₁-C₄.

10. Colorants selon la revendication 3, caractérisés en ce que A₂ et A₃ représentent chacun un reste de formule

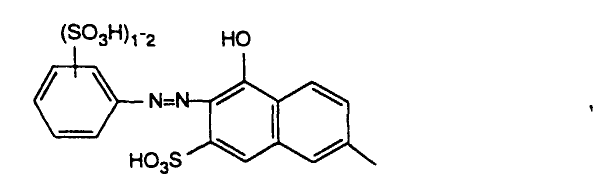

11. Colorants selon la revendication 3, caractérisés en ce que A₂ et A₃ représentent chacun un reste de formule

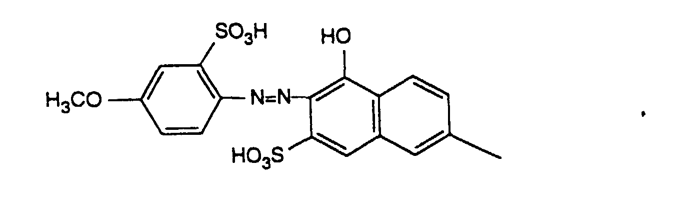

12. Colorants selon la revendication 3, caractérisés en ce que A₂ et A₃ représentent chacun un reste de formule 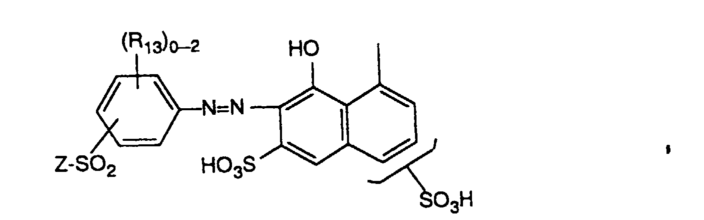 où
R₁₃ représente 0 à 2 substituants pris parmi les groupes alkyle en C₁-C₄, alkoxy en C₁-C₄, halogène, carboxy ou sulfo ; et
Z représente des groupes β-sulfatoéthyle, β-thiosulfatoéthyle, β-phosphatoéthyle, β-acyloxyéthyle, β-halogénoéthyle ou vinyle.

13. Colorants selon la revendication 3, caractérisés en ce que A₂ et A₃ représentent chacun un reste de formule 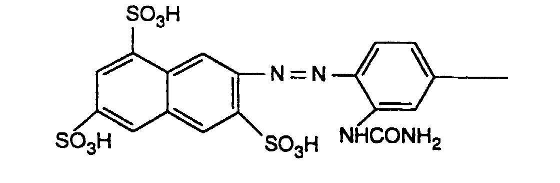 et B₁ représente des groupes éthylène, 1,2- ou 1,3-propylène, n-butylène, 1-méthyl-n-propylène, n-hexylène ou 2-éthyl-n-butylène.

14. Colorants selon la revendication 3, caractérisés en ce que A₂ et A₃ représentent chacun un reste de formule 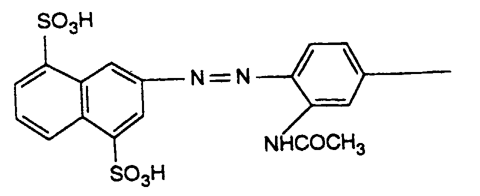 et B₁ représente des groupes éthylène 1,2- ou 1,3-propylène, n-butylène, 1-méthyl-n-propylène, n-hexylkène ou 2-éthyl-n-butylène.

15. Procédé de préparation de colorants de formule (2a) selon l'une des revendications 1 à 3, caractérisé en ce qu'on fait réagir deux équivalents d'un colorant organique de formule 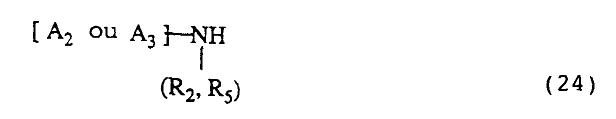 ou un précurseur de colorant avec au moins un équivalent de fluorotriazine et au moins un équivalent d'une diamine de formule 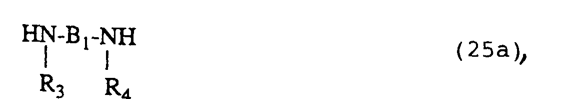 en succession arbitraire, A₂, A₃, R₂, R₃, R₄, R₅ et B₁ ayant les significations données à chaque fois à l'une des revendications 1 à 3, ou dans le cas de l'utilisation de précurseurs de colorants, on transforme les produits intermédiaires obtenus en les colorants voulus et éventuellement, une autre réaction de transformation est mise en oeuvre par la suite.

16. Procédé pour la teinture et l'impression de matières fibreuses cellulosiques avec des colorants caractérisés en ce qu'on utilise des colorants selon l'une des revendications 1 à 14.

17. Procédé selon la revendication 16 pour la teinture et l'impression du coton.

## Revendications (Revendications pour l'(les) Etat(s) contractant(s) suivant(s): ES)

1. Procédé de préparation de colorants de formule 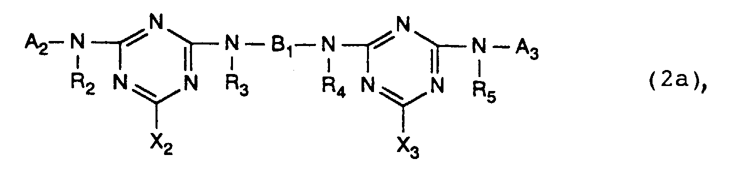 où
A₂ et A₃ représentent chacun, indépendamment l'un de l'autre, le reste d'un chromophore du type anthraquinone, phtalocyanine, formazane ou dioxazine ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor,
caractérisé en ce qu'on fait réagir deux équivalents d'un colorant organique de formule 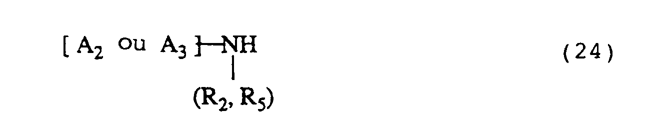 ou un précurseur de colorant avec au moins un équivalent de fluorotriazine et au moins un équivalent d'une diamine de formule 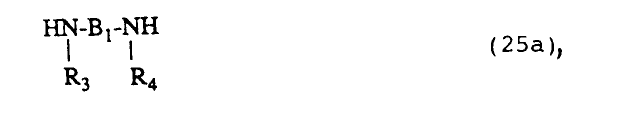 en succession arbitraire, A₂, A₃, R₂, R₃, R₄, R₅ et B₁ ayant les significations données à chaque fois à l'une des revendications 1 à 3, ou dans le cas de l'utilisation de précurseurs de colorants, on transforme les produits intermédiaires obtenus en les colorants voulus et éventuellement une autre réaction de transformation est mise en oeuvre par la suite.

2. Procédé de préparation de colorants de formule 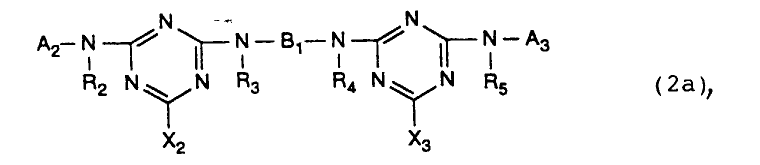 où
A₂ et A₃ représentent chacun, indépendamment l'un de l'autre, le reste d'un chromophore du type polyazoïque ou complexe métallazoïque ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor,
caractérisé en ce qu'on fait réagir deux équivalents d'un colorant organique de formule 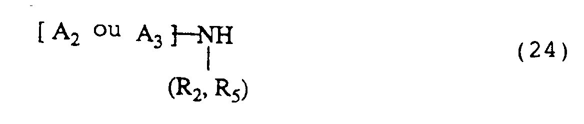 ou un précurseur de colorant avec au moins un équivalent d'une s-triazine et au moins un équivalent d'une diamine de formule 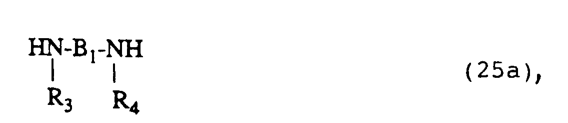 en succession arbitraire, A₂, A₃, R₂, R₃, R₄, R₅ et B₁ ayant les significations données ci-dessus, ou dans le cas de l'utilisation de précurseurs de colorants, on transforme les produits intermédiaires obtenus en les colorants voulus et éventuellement une autre réaction de transformation est mise en oeuvre par la suite.

3. Procédé de préparation de colorants de formule 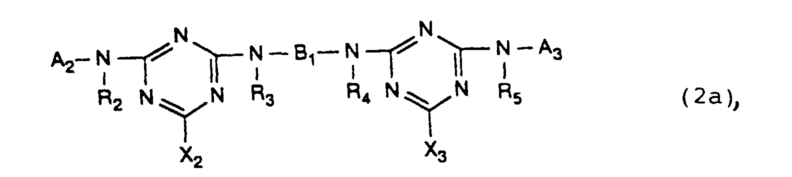 où A₂ et A₃ représentent chacun, indépendamment l'un de l'autre, le reste d'un chromophore du type monoazoïque de formule 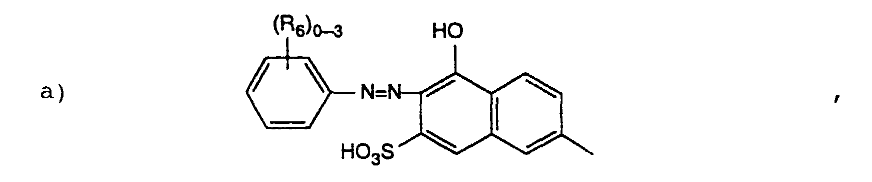 où
R₆ représente 0 à 3 substituants pris parmi les groupes alkyle en C₁-C₄, alkoxy en C₁-C₄, halogène, carboxy ou sulfo, 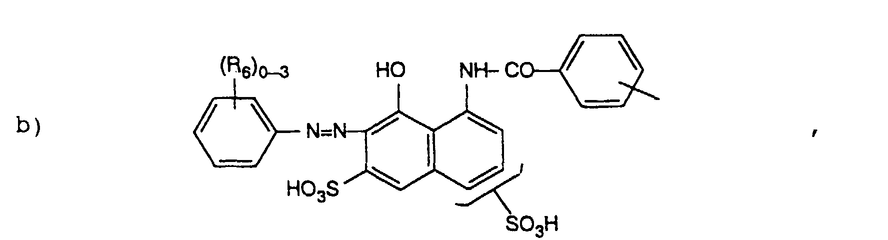
où
R₆ représente 0 à 3 substituants pris parmi les groupes alkyle en C₁-C₄, alkoxy en C₁-C₄, halogène, carboxy ou sulfo, 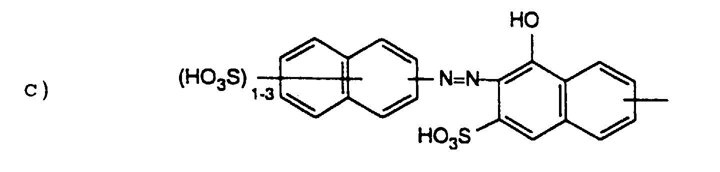
ou 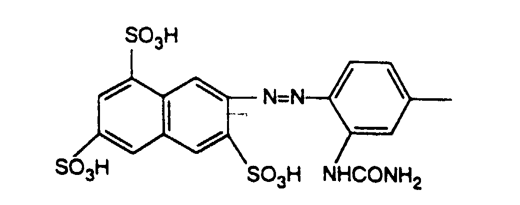 ou 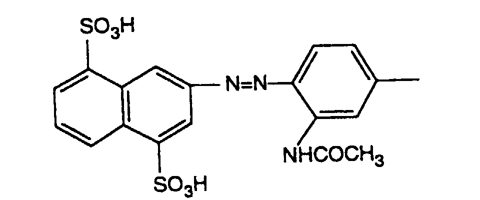 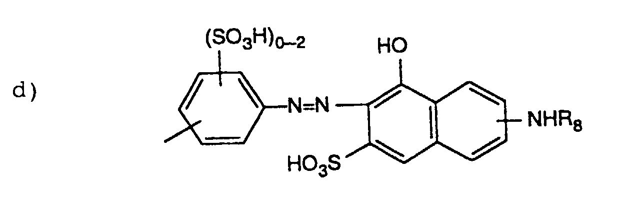 ou 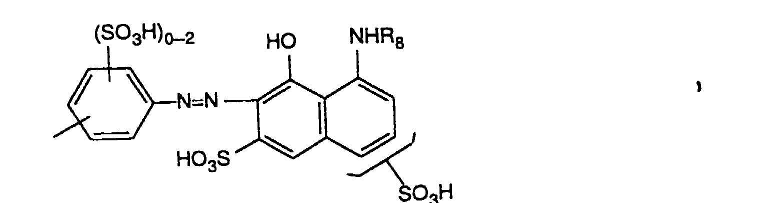 où
R₈ représente un groupe alcanoyle en C₁-C₄ ou benzoyle, 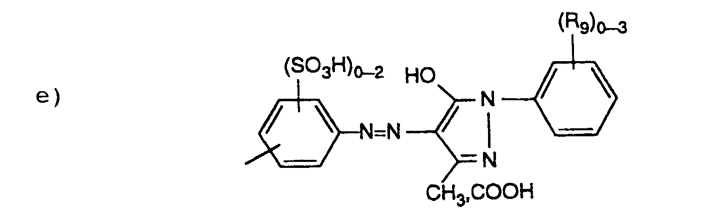
ou 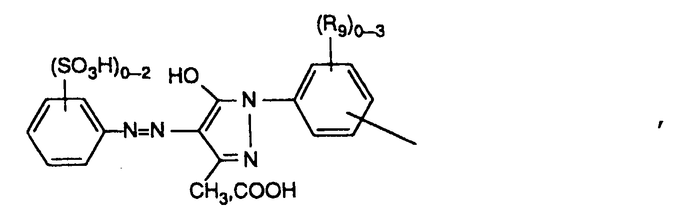 où
R₉ représente 0 à 3 substituants pris parmi les groupes alkyle en C₁-C₄, alkoxy en C₁-C₄, halogène, carboxy ou sulfo, 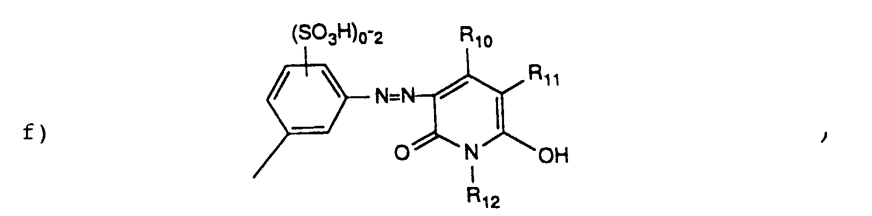
où
R₁₂ et R₁₀ représentent, indépendamment l'un de l'autre, des atomes d'hydrogène, des groupes alkyle en C₁-C₄ ou phényle et
R₁₁ représente un atome d'hydrogène, des groupes cyano, carbamoyle ou sulfométhyle, 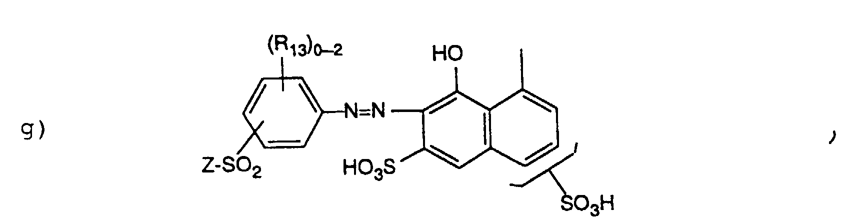
où
R₁₃ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoéthyle, β-acyloxyéthyle, β-halogénoéthyle ou vinyle, ou 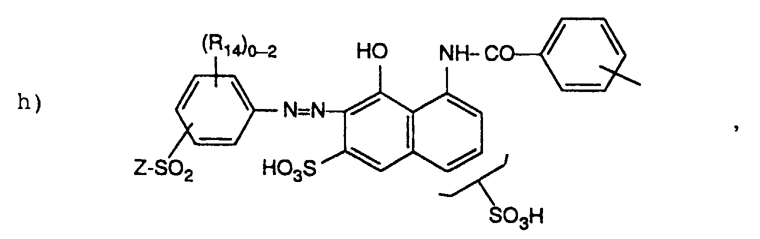
où
R₁₄ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoéthyle, β-acyloxyéthyle, β-halogénoéthyle ou vinyle ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor,
caractérisé en ce qu'on fait réagir deux équivalents d'un colorant organique de formule 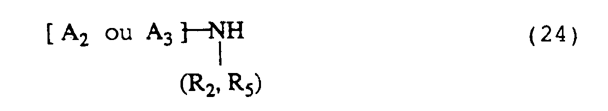 ou un précurseur de colorant avec au moins un équivalent d'une s-triazine et au moins un équivalent d'une diamine de formule 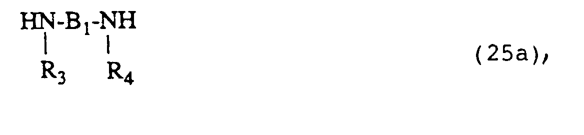 en succession arbitraire, A₂, A₃, R₂, R₃, R₄, R₅ et B₁ ayant les significations données ci-dessus, ou dans le cas d'utilisation de précurseurs de colorants, on transforme les produits intermédiaires obtenus en les colorants voulus et éventuellement une autre réaction de transformation est mise en oeuvre par la suite.

4. Procédé selon l'une des revendications 1 à 3, pour la préparation de colorants de formule (2a), où B₁ représente un groupe, 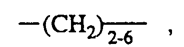 éventuellement un groupe cyclohexylène substitué par des substituants alkyle en C₁-C₄.

5. Procédé selon l'une des revendications 1 à 4, caractérisé en ce que R₂, R₃, R₄ et R₅ représentent, indépendamment les uns des autres, des atomes d'hydrogène, des groupes méthyle ou éthyle.

6. Procédé selon l'une des revendications 1 à 5 pour la préparation de colorants de formule (2a), où les restes A₂ et A₃ sont identiques.

7. Procédé selon la revendication 1, caractérisé en ce que en ce que A₂ et A₃ représentent chacun un reste de formule 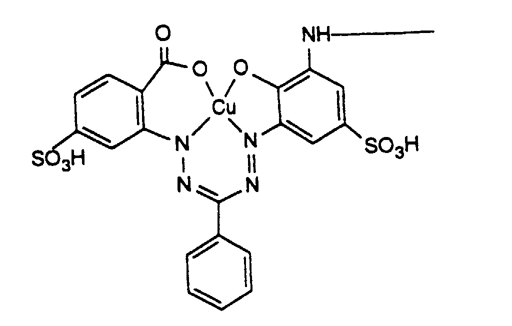 et B₁ représente des groupes éthylène, 1,2- ou 1,3-propylène, n-butylène, 1-méthyl-n-propylène, n-hexylène ou 2-éthyl-n-butylène.

8. Procédé selon la revendication 1, caractérisé en ce que A₂ et A₃ représentent chacun un reste de formule 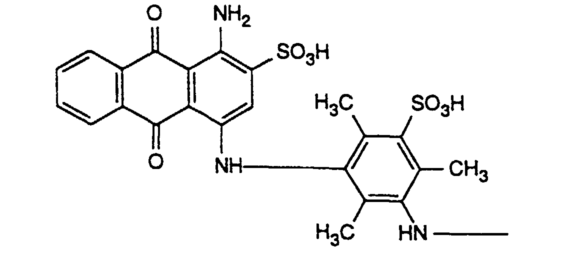 et B₁ représente des groupes éthylène 1,2- ou 1,3-propylène, n-butylène, 1-méthyl-n-propylène, n-hexylène ou 2-éthyl-n-butylène.

9. Procédé selon la revendication 3, caractérisé en ce que A₂ et A₃ représentent chacun un reste de formule 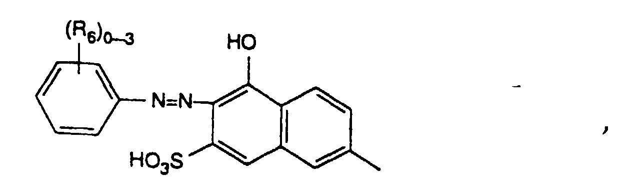 où
R₆ représente 0 à 3 substituants pris parmi les groupes alkyle en C₁-C₄, alkoxy en C₁-C₄, halogène, carboxy ou sulfo, et
B₁ représente un groupe, -(CH₂)₂₋₆- éventuellement un groupe cyclohexylène substitué par des substituants alkyle en C₁-C₄.

10. Procédé selon la revendication 3, caractérisé en ce que A₂ et A₃ représentent chacun un reste de formule

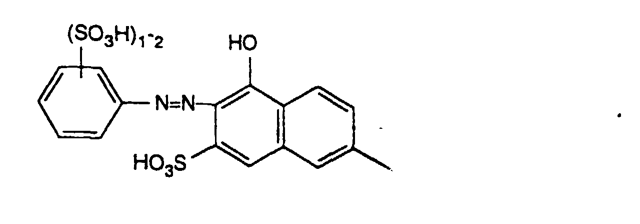

11. Procédé selon la revendication 3, caractérisé en ce que A₂ et A₃ représentent chacun un reste de formule

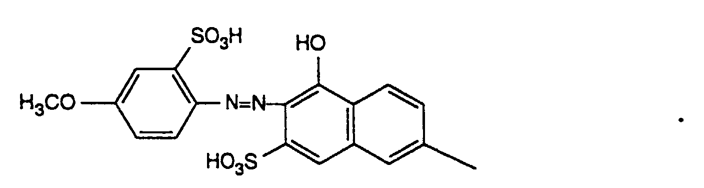

12. Procédé selon la revendication 3, caractérisé en ce que A₂ et A₃ représentent chacun un reste de formule 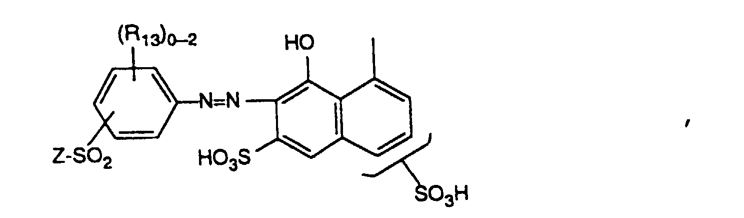 où
R₁₃ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoethyle, β-acyloxyethyle, β-halogénoéthyle ou vinyle.

13. Procédé selon la revendication 3, caractérisé en ce que A₂ et A₃ représentent chacun un reste de formule 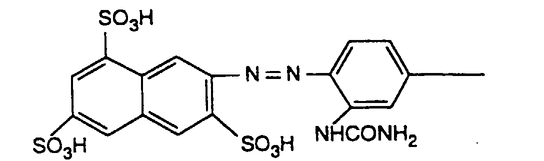 et B₁ représente des groupes éthylène, 1,2- ou 1,3-propylène, n-butylène, 1-méthyl-n-propylène, n-hexylène ou 2-éthyl-n-butylène.

14. Procédé selon la revendication 3, caractérisé en ce que A₂ et A₃ représentent chacun un reste de formule 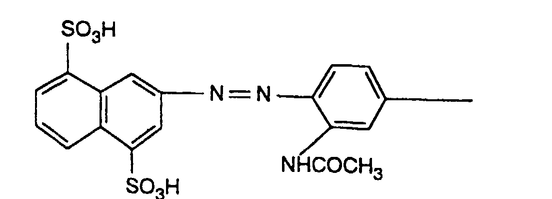 et B₁ représente des groupes éthylène, 1,2- ou 1,3-propylène, n-butylène, 1-méthyl-n-propylène, n-hexylène ou 2-éthyl-n-butylène.

15. Procédé pour la teinture et l'impression de matières fibreuses cellulosiques avec des colorants, caractérisé en ce qu'on utilise des colorants que l'on peut obtenir selon l'une des revendications 1 à 14.

16. Procédé selon la revendication 16 pour la teinture et l'impression du coton.

17. Colorants de formule 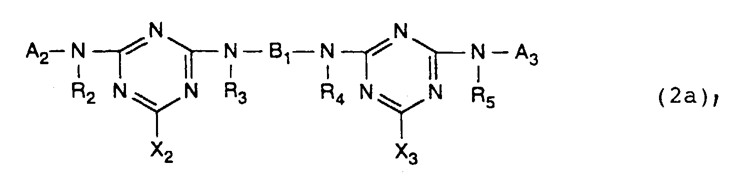 où
A₂ et A₃ représentent chacun, indépendamment l'un de l'autre, le reste d'un chromophore du type anthraquinone, phtalocyanine, formazane ou dioxazine ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor.

18. Colorants de formule 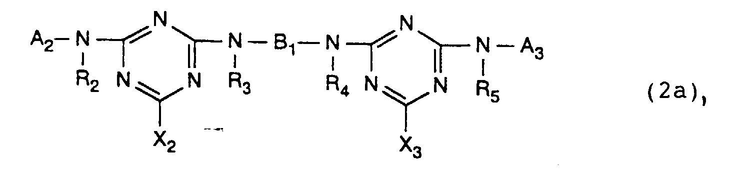 où
A₂ et A₃ représentent chacun, indépendamment l'un de l'autre, le reste d'un chromophore du type polyazoïque ou de complexe métallazoïque ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor.

19. Colorants de formule 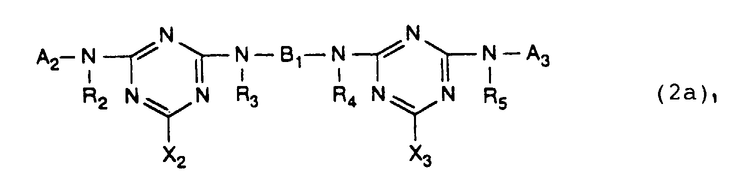 où
A₂ et A₃ représentent chacun, indépendamment l'un de l'autre, le reste d'un chromophore monoazoïque de formule 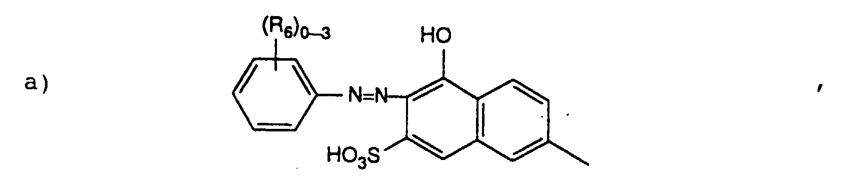
où
R₆ représente 0 à 3 substituants pris parmi les groupes alkyle en C₁-C₄, alkoxy en C₁-C₄, halogène, carboxy ou sulfo, 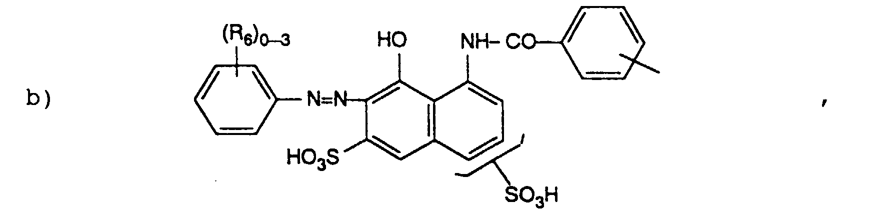
où
R₆ représente 0 à 3 substituants pris parmi les groupes alkyle en C₁-C₄, alkoxy en C₁-C₄, halogène, carboxy ou sulfo, 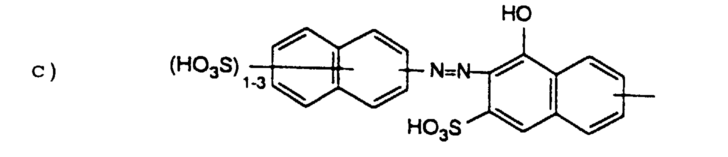
ou 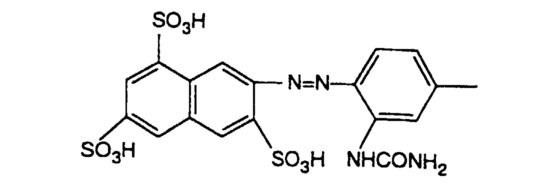 ou 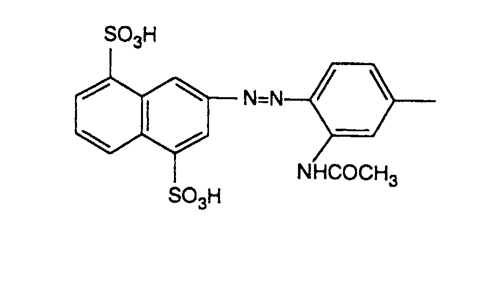 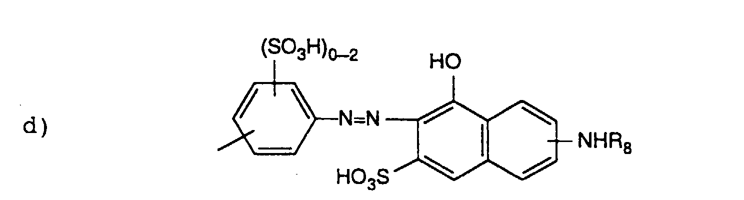 ou 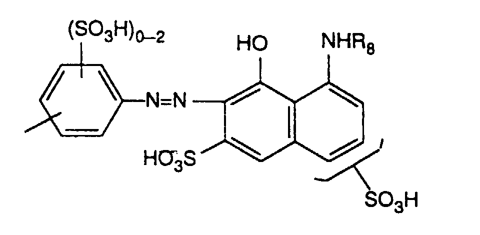 où
R₈ représente un groupe alcanoyle en C₁-C₄ ou benzoyle, 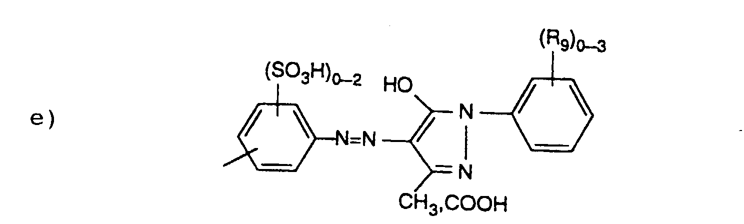
ou 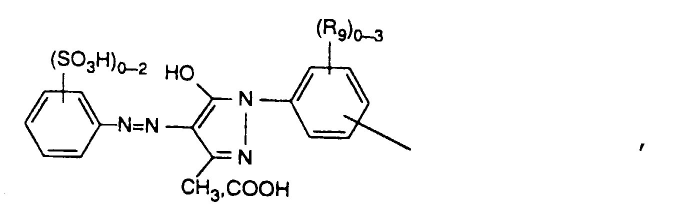 où
R₉ représente 0 à 3 substituants pris parmi les groupes alkyle en C₁-C₄, alkoxy en C₁-C₄, halogène, carboxy ou sulfo, 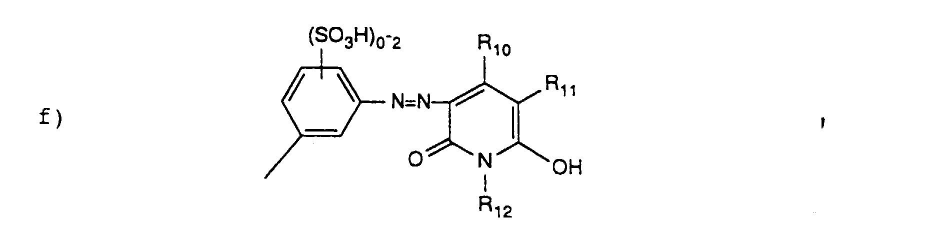
où
R₁₂ et R₁₀ représentent, indépendamment l'un de l'autre, des atomes d'hydrogène, des groupes alkyle en C₁-C₄ ou phényle et
R₁₁ représente un atome d'hydrogène, des groupes cyano, carbamoyle ou sulfométhyle, 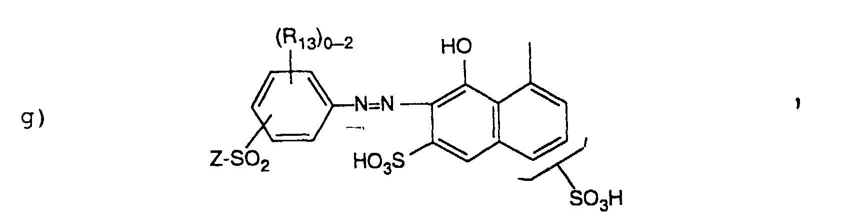
où
R₁₃ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoethyle, β-acyloxyethyle, β-halogénoéthyle ou vinyle, ou 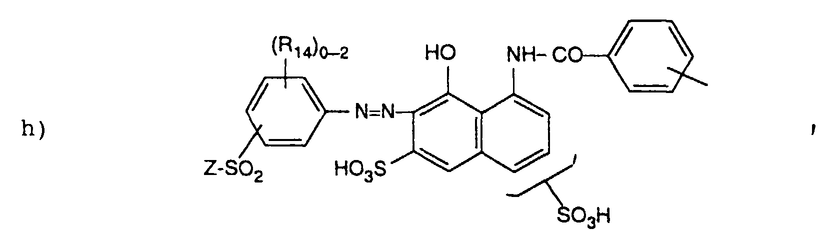
où
R₁₄ représente 0 à 2 substituants pris parmi les groupes alkyle en C₁-C₄, alkoxy en C₁-C₄, halogène, carboxy ou sulfo et
Z représente des groupes β-sulfatoéthyle, β-thiosulfatoéthyle, β-phosphatoethyle, β-acyloxyéthyle, β-halogénoéthyle ou vinyle ;
R₂, R₃, R₄ et R₅ représentent, indépendamment les uns des autres, des atomes d'hydrogène ou des groupes alkyle en C₁-C₄, qui peut être substitué par des substituants halogène, hydroxy, cyano, alkoxy en C₁-C₄, (alkoxy en C₁-C₄)carbonyle, carboxy, sulfamoyle, sulfo ou sulfato ;
B₁ représente un reste alkylène en C₁-C₁₀ linéaire ou ramifié ou un reste cyclohexylène éventuellement substitué par des substituants alkyle en C₁-C₄ ; et
X₂ et X₃ représentent des atomes de fluor.
